(19) Europäisches Patentamt

European Patent Office

Office européen des brevets

(11) **EP 4 464 465 A1**

(12) # EUROPEAN PATENT APPLICATION
published in accordance with Art. 153(4) EPC

(43) Date of publication:
**20.11.2024  Bulletin 2024/47**

(21) Application number: **22907934.8**

(22) Date of filing: **14.12.2022**

(51) International Patent Classification (IPC):
**B25J 9/00** *(2006.01)*      **B25J 19/00** *(2006.01)*
**A63B 21/00** *(2006.01)*     **A61H 1/02** *(2006.01)*
**B25J 9/16** *(2006.01)*      **A63B 23/04** *(2006.01)*
**A61H 37/00** *(2006.01)*

(52) Cooperative Patent Classification (CPC):
**A61H 3/00; A61H 1/02; A61H 1/0244; A61H 37/00;
A63B 21/00; A63B 23/04; B25J 9/00; B25J 9/16;
B25J 19/00**

(86) International application number:
**PCT/KR2022/020360**

(87) International publication number:
**WO 2023/113467 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2021  KR 20210179957
25.08.2022  KR 20220106727
25.08.2022  KR 20220106728
25.08.2022  KR 20220106730
05.10.2022  KR 20220126936
15.11.2022  KR 20220153109**

(71) Applicant: **Wirobotics Inc.
Cheonan-si, Chungcheongnam-do 31253 (KR)**

(72) Inventors:
• **LEE, Younbaek**
  **Yongin-si, Gyeonggi-do 17103 (KR)**
• **CHOI, Byung June**
  **Yongin-si, Gyeonggi-do 16856 (KR)**
• **KIM, Yongjae**
  **Cheonan-si, Chungcheongnam-do 31166 (KR)**
• **ROH, Changhyun**
  **Seongnam-si, Gyeonggi-do 13540 (KR)**
• **LIM, Bokman**
  **Hwaseong-si, Gyeonggi-do 18444 (KR)**

(74) Representative: **HGF
HGF Europe LLP
Neumarkter Straße 18
81673 München (DE)**

(54) **MOTION ASSISTANCE METHOD AND SYSTEM USING WEARABLE ROBOT AND STATE TRAJECTORY MEMORY BUFFER**

(57)    The present invention relates to a wearable robot. The wearable robot includes a first fixing unit mounted on one body portion of the joint part; a second fixing unit mounted on the other body portion of the joint part; a driving unit connected to the first fixing unit; and a connecting member that connects the driving unit and the second fixing unit and transmits driving force provided from the driving unit to the second fixing unit. A length of the connecting member is adjusted in accordance with a distance between the driving unit and the second fixing unit.

EP 4 464 465 A1

**(Cont. next page)**

【Figure 2】

**Description**

[Technical Field]

The present invention relates to a wearable robot capable of assisting a user's walking. Additionally, the present invention relates to a motion assistance method and system, and more particularly, to a motion assistance method and system capable of immediately responding to rapid changes in motion of a user.

[Background Art]

Wearable robots began to be developed in the 1960s. The wearable robots may include wearable robots for strengthening muscle strength and protecting the body for high-load and high-risk workers, whereby wearable robots may include wearable assistive devices for assisting movement, rehabilitation, and posture correction for the elderly and patients, and the wearable robots may include prosthetic limbs and hands that replace body functions for people with disabilities.

The wearable robots have been developed since the 1960s, starting from non-commercial areas such as military/disabled welfare, and expanding into commercial areas such as rehabilitation/industry/health since 2010.

The wearable robots must move while worn by a person, thus, if the wearable robot is heavy or bulky, it not only hinders the motion of a person wearing the wearable robot, but it can also hurt people when the wearable robot is controlled incorrectly. For this reason, the wearable robot was first used in a field in which a user highly needs the wearable robot, despite the disadvantages of being heavy and inconvenient to move, for example, helping high-load, high-risk workers that may not be done by humans, helping people who is unable to walk to walk, etc.

In order to apply wearable robots in commercial areas other than industrial/military and medical use, it is important to understand the wearer's intention without restricting the wearer's motion. Therefore, the wearable robot must not only be light, but also quickly recognize the wearer's intention and move in compliance with the wearer's joint motion. In addition, since a person must wear and move the wearable robot, the battery life must be long, power management system is important.

Among various types of wearable robots, wearable robots which help walking of the wearer merely help the wearer to walk and, wearable robots which help walking of the wearer have been clinically confirmed to be effective in improving walking efficiency, preventing falls, correcting gait, and reducing joint load. Since walking is the most common human activity, the value of wearable robots that assist walking is highly evaluated.

However, walking is a highly efficient movement that is optimized for humans according to human evolution, thus, in order to assist walking, the device must be lighter and have greater assistive power. Furthermore, wearable robots should minimize discomfort when worn by not limiting a range of motion of human joints, thus, the wearable robot may assist appropriately not only to gait characteristics (walking, climbing stairs, and running) but also to various motion.

In order to become a wearable robot that is used by the general public as well as the elderly and sick, technologies mentioned above must be further advanced.

These wearable assistive devices generally include a main body, a joint actuator, and a support unit. The main body is equipped with a battery and controller and is mounted on a user's back. The joint actuator is used to drive each joint. The support unit is connected to each joint actuator to support user's thighs.

These wearable assistive devices place joint actuators near the user's joints. Also, the wearable assistive devices may assist a user's walking by providing supporting force in the form of assist torque to the user's thigh according to the user's walking motion.

When the user walks in an x-axis direction in a three-dimensional coordinate space, the joint actuator may be designed to rotate around a y-axis and provide supporting force. Here, the y-axis intersects the x-axis direction, which is a walking direction of a hip joint, and a z-axis direction, which is a vertical direction.

The joint actuator uses a rotary motor type actuator. Therefore, when the user walks, the joint actuator rotates around the y-axis corresponding to the direction of rotation of the joint to provide driving force.

In case of an exoskeleton lower body assistive device, a joint actuator is provided on the outside of the hip joint. Accordingly, the exoskeleton lower body assistive device generates driving torque in the y-axis direction. Also, the exoskeleton lower body assistive device may transmit supporting force to the user's thigh through a thigh support unit that surrounds the user's thigh.

Unlike motor-type actuators, the hip joint of the body is capable of rotating around the y-axis as well as abduction or adduction of the thigh around the x-axis and twisting around the z-axis. A center of rotation of the hip joint, which is defined as an upper end of a femur, is disposed inside the body. If the center of rotation of the joint of the wearable assistive device and the center of rotation of the hip joint do not match, a load is increased on the user's joint. Accordingly, in this case, there is a problem of causing discomfort or pain in the joint or reducing the range of motion of the joint.

In addition, existing wearable assistive devices are generally worn by connecting a waist belt to the driving unit. In this case, the driving unit is integrally connected with the waist wearing part. Alternatively, the driving unit is difficult to be attached to or detached from the waist wearing part. In this case, there was inconvenience in storing, wearing, and using the device.

In existing wearable assistive devices, a thigh force transmission plate is fixed to a thigh frame. The existing wearable assistive devices are mainly designed to be worn by connecting a strap to the thigh force transmission plate. In this case, the thigh frame is integrally connected to the thigh wearing part or the device is difficult to be attached or detached, causing inconvenience in storing, wearing, and using the device.

Conventional technologies such as US Patent US10,350,129 of "walk assistive device" recognize a user's movement speed, cadence, phase, etc. and then provide supporting force according to a user's movement.

However, the conventional technologies that recognize patterns of a user's previous motion and provide supporting force by estimating current patterns based on patterns of the user's previous motion have problems. These conventional technologies may not respond immediately when rapid and non-periodic changes in operation occur.

[Prior art literature]

[Patent Document]

Republic of Korea Patent Registeration No. 10-1517058
Republic of Korea Patent Publication No. 2022-0053349

[Disclosure]

[Technical Problem]

The present invention provides a wearable robot capable of assisting a user's walking motion in order to solve the above-described conventional problems.

The present invention also provides a wearable robot having a structurally high power transmission effect to transmit strong supporting force when a user walks although a relatively low-power actuator is used.

The present invention also provides a wearable robot that is lightweight and allows a free movement without restricting a wearer's motion.

The present invention also provides a wearable robot capable of providing a large stroke while minimizing a length of a contracted state.

The present invention also provides a wearable robot capable of minimizing friction force.

The present invention also provides a wearable robot capable of preventing some unit members from operating arbitrarily among a plurality of unit members constituting a connecting member.

The present invention also provides a wearable robot having a structure in which each wearing part is easily attached or detached. Accordingly, the present invention provides a wearable robot that is easy to store, convenient to use, and convenient to wear.

The present invention also provides a motion assistance method and system of a wearable robot.

The present invention also provides a motion assistance method and system that provides stable supporting force.

The present invention also provides a motion assistance method and system that provides adaptive supporting force to changes in a user's motion.

The present invention also provides a motion assistance method and system that provides adaptive supporting force without delay to changes in a user's motion.

The present invention also provides a safety mode for user's safety when unintentionally attached or detached between a driving unit and a wearing part.

The problems to be solved by the present invention are not limited to the problems mentioned above. Other problems not mentioned will be clearly understood by those skilled in the art from the description below.

[Technical Solution]

A wearable robot comprising: a first fixing unit mounted on one body portion of a joint part; a second fixing unit mounted on the other body portion of the joint part; a driving unit connected to the first fixing unit; and a connecting member configured to connect the driving unit and the second fixing unit and transmit driving force provided from the driving unit to the second fixing unit, wherein a length of the connecting member is adjusted in accordance with a distance between the driving unit and the second fixing unit.

According to an embodiment, the connecting member comprises: a first member supported by the driving unit; and a second member movably connected to the first member and supported by the second fixing unit.

According to an embodiment, the wearable robot further comprises a third member movably connected to the second member and supported by the second fixing unit.

According to an embodiment, the connecting member comprises one or more length adjusting units arranged in a row between the driving unit and the second fixing unit.

According to an embodiment, the connecting member comprises a permanent magnet configured to fix a position of the third member in a state in which the third member is moved in an extended direction on the second member.

According to an embodiment, the connecting member further comprises a linking unit configured to connect a plurality of unit members.

According to an embodiment, the linking unit comprises: a first cable having one end fixed to the first member and the other end fixed to the third member in a state of being supported by an extended end of the second member; and a second cable having one end fixed to the first member and the other end fixed to the third member in a state of being supported by a contracted end of the second member.

According to an embodiment, a second pulley configured to support the first cable is disposed at the extended end of the second member and a third pulley configured to support the second cable is disposed at the contracted end of the second member.

According to an embodiment, the linking unit comprises: a rack disposed along a longitudinal direction of the first member; a pinion disposed at a contracted end of the second member and engaged with the rack; a first pulley rotating together with the pinion; a second pulley disposed at an extended end of the second member; and a belt wound around the first pulley and the second pulley and having both ends fixed to the third member.

According to an embodiment, the first fixing unit comprises a waist belt and a waist wearing frame, the waist wearing frame comprises a lower mechanism portion, an upper mechanism portion, and a detachment button, the driving unit comprises a main body housing, the main body housing further comprises a lower hook and an upper hook therein, and the lower mechanism portion is coupled to the lower hook, and the upper mechanism portion is coupled to the upper hook.

A motion assistance method comprising: sequentially storing motion state values in a state trajectory memory buffer; selecting at least one motion state value from among the motion state values stored in the state trace memory buffer; determining a supporting force using the selected motion state value; and outputting the determined supporting force.

According to an embodiment, the storing of the motion state values stores only a preset number of motion state values in the FIFO (First In First Out) method.

According to an embodiment, the determining of the supporting force determines the supporting force by a weighted sum of the selected motion state values.

According to an embodiment, the selecting of the at least one motion state value selects the motion state value stored at a predetermined location among the motion state values stored in the state trajectory memory buffer.

A wearable robot comprises: a driving unit configured to drive the wearable robot in one driving mode of an exercise mode and an assist mode; and a charging circuit unit configured to perform charging while being driven in the exercise mode, wherein the charging circuit unit comprises: a battery unit; a switching unit that is turned on and off in response to the driving mode; a diode connected in parallel with the switching unit; and a motor unit configured to generate electrical energy based on rotational movement while driven in the exercise mode.

According to an embodiment, when driven in the assist mode, the switching unit is turned on, and the battery unit supplies driving power to the motor unit.

According to an embodiment, the charging circuit unit further comprises first to fourth MOSFETs connected to the motor unit.

According to an embodiment, when driven in the exercise mode, the switching unit is in an off state, and an electrical connection between the diode and the motor unit is determined depending on the on/off states of the first to fourth MOSFETs.

According to an embodiment, when the diode and the motor unit are not electrically connected, the electrical energy is generated by the rotational movement of the motor unit.

According to an embodiment, when the diode and the motor unit are electrically connected, electrical energy boosted based on the electrical energy generated in the motor unit is transmitted to the battery unit through the diode.

[Advantageous Effects]

According to the present invention, a wearable robot having the length that is adjustable when assisting the user's walking is provided.

The wearable robot according to the present invention has the advantage of having the high force transmission effect. The wearable robot according to the present invention has the advantage of delivering the strong supporting force to the both legs by using the single actuator.

The connecting member of the wearable robot according to the present invention may be slidably moved. The wearable robot according to the present invention may be bent into the link structure. Alternatively, the wearable robot according to the present invention may rotate in the left and right directions around the forward and backward rotation axis. The wearable robot according to the present invention does not limit various motions of the wearer. The wearable robot according to the present invention may operate in compliance with various motions of the wearer. Therefore, the wearable robot according to the present invention also has the advantage of excellent wearing comfort and supporting force transmission effect.

The wearable robot according to the present invention provides a wearable robot capable of providing the large stroke while minimizing the length in the contracted state.

The wearable robot according to the present invention may minimize friction force.

The wearable robot according to the present invention may apply the elastic force to each of the plurality of unit members by using the single elastic member. The wearable robot according to the present invention may prevent some of the plurality of unit members constituting the connecting member from operating arbitrarily.

In the wearable robot according to the present invention, the connecting member mounted on the front portion or rear portion of the thigh may rotate in the front and back directions around the left and right rotation axis.

Accordingly, the wearable robot according to the present invention has the advantage of having the high force transmission effect by directly transmitting force in the walking direction.

The wearable robot according to the present invention is easily stored by reducing the volume of the wearable robot. The wearable robot according to the present invention may shorten the wearing and detaching time of the wearable robot. The wearable robot according to the present invention may secure the convenience of using and wearing of the wearable robot.

Additionally, the motion assistance method and system according to the present invention have the effect of providing the stable supporting force.

Additionally, the motion assistance method and system according to the present invention have the effect of providing the adaptive supporting force to changes in the user's motion.

Additionally, the motion assistance method and system according to the present invention may immediately reflect the motion changes without pattern recognition of the user's motion. Accordingly, the motion assistance method and system according to the present invention has the effect of providing adaptive supporting force without delay to the changes in the user's motion.

Additionally, the wearable robot according to the present invention may promote the user safety even in case of unintentional detachment between the driving unit and the wearing part.

A wearable robot comprises: a driving unit configured to drive the wearable robot in one driving mode of an exercise mode and an assist mode; and a charging circuit unit configured to perform charging while being driven in the exercise mode, wherein the charging circuit unit comprises: a battery unit; a switching unit that is turned on and off in response to the driving mode; a diode connected in parallel with the switching unit; and a motor unit configured to generate electrical energy based on rotational movement while driven in the exercise mode.

According to an embodiment, when driven in the assist mode, the switching unit is turned on, and the battery unit supplies driving power to the motor unit.

According to an embodiment, the charging circuit unit further comprises first to fourth MOSFETs connected to the motor unit. The switches may be implemented with various devices other than MOSFETs, such as BJT (Bipolar Junction Transistor), SiC MOSFET, and IGBT (Insulated Gate Bipolar mode Transistor).

According to an embodiment, when driven in the exercise mode, the switching unit is in an off state, and an electrical connection between the diode and the motor unit is determined depending on the on/off states of the first to fourth MOSFETs.

According to an embodiment, when the diode and the motor unit are not electrically connected, the electrical energy is generated by the rotational movement of the motor unit. When the diode and the motor unit are electrically connected, electrical energy boosted based on the electrical energy generated in the motor unit is transmitted to the battery unit through the diode.

According to an embodiment, the charging circuit unit comprises a first node between the battery unit and the switching unit; a second node between the switching unit and the first MOSFET; a third node between the first MOSFET and the second MOSFET; and a fourth node between the third MOSFET and the fourth MOSFET, and the motor unit is disposed between the third node and the fourth node.

According to an embodiment, when driven in the exercise mode, when the first MOSFET and the second MOSFET are in the off state and the third MOSFET and the fourth MOSFET are in the on state, the motor unit generates electrical energy, and the second MOSFET and When the third MOSFET is in the off state and the first MOSFET and the fourth MOSFET are in the on state, the battery unit may perform charging.

According to an embodiment, the charging circuit unit may further include a capacitor connected in parallel with the battery unit.

According to an embodiment, a wearable robot comprises a wired terminal unit that supplies the electric energy generated in the charging circuit unit to an external device by wire; or a wireless charging unit that wirelessly supplies electrical energy generated by the charging circuit unit to an external device.

According to an embodiment, the selection signal of the driving mode may be automatically generated based on the rotational movement of the motor unit, and the charging circuit unit may turn the switching unit on and off based on the selection signal of the driving mode.

According to an embodiment, the wearable robot further comprises an input unit that receives the selection signal of the driving mode from a user, and the charging circuit unit may turn the switching unit on and off based on the selection signal of the driving mode.

Meanwhile, the wearable robot charging device according to the present invention comprises a reception that receives the selection signal of the driving mode for one of the exercise mode and the assist mode from the wearable robot; and a charging circuit unit that performs charging while the wearable robot is driven in the exercise mode, wherein the charging circuit unit includes: a switching unit that is turned on and off in response to the driving mode of the wearable robot; a diode connected in parallel with the switching unit; and a battery unit that performs charging based on the electrical energy generated by the motor unit provided in the wearable robot.

And, the wearable robot comprises a coupling unit for physical coupling with the wearable robot; and a connection part for electrical connection between the motor unit and the charging circuit part of the wearable robot.

Additionally, when operating in the assist mode, the switching unit is turned on so that the battery unit may supply driving power to the motor unit of the wearable robot.

In addition, the charging circuit unit may further include first to fourth MOSFETs connected to the motor unit.

Additionally, when driven in the exercise mode, the switching unit is in an off state, and the electrical connection between the diode and the motor unit of the wearable robot may be determined according to the on/off status of the first to fourth MOSFETs.

In addition, when the diode and the motor unit are not electrically connected, the electrical energy may be generated by rotational movement of the motor unit of the wearable robot.

Additionally, when the diode and the motor unit are electrically connected, electrical energy boosted based on the electrical energy generated in the motor unit may be transmitted to the battery unit through the diode.

And, the charging circuit unit includes a first node between the battery unit and the switching unit; a second node between the switching unit and the first MOSFET; a third node between the first MOSFET and the second MOSFET; a fourth node between the third MOSFET and the fourth MOSFET.

Additionally, the motor unit of the wearable robot may be electrically connected between the third node and the fourth node.

And, when driven in the exercise mode, when the first MOSFET and the second MOSFET are in the off state and the third MOSFET and the fourth MOSFET are in the on state, the motor unit of the wearable robot generates electrical energy, and the fourth MOSFET generates electrical energy. When the 2 MOSFET and the third MOSFET are in the off state and the first MOSFET and the fourth MOSFET are in the on state, the battery unit may perform charging.

Additionally, the charging circuit unit may further comprise a capacitor connected in parallel with the battery unit.

[Description of Drawings]

FIG. 1 is a perspective view of a wearable robot according to an embodiment of the present invention.

FIG. 2 is a perspective view of the wearable robot equipped with a waist wearing part (first fixing unit) and a thigh wearing part (second fixing unit) according to an embodiment of the present invention.

FIG. 3 is a view illustrating a state in which the modified wearable robot of FIG. 1 is worn.

FIG. 4 is a view illustrating another state in which the wearable robot according to an embodiment of the present invention is worn.

FIG. 5 is an exploded perspective view of a driving unit of the wearable robot according to an embodiment of the present invention.

FIG. 6 is a view for explaining a sliding operation of a connecting member according to an embodiment of the present invention.

FIG. 7 is a view for explaining a link operation of the connecting member according to an embodiment of the present invention.

FIG. 8 is a view for explaining a left-right hinge movement of the connecting member according to an embodiment of the present invention.

FIG. 9 is a view for explaining an operation the wearable robot while walking according to an embodiment of the present invention.

FIG. 10 is a view for explaining the operation of the wearable robot depending on a motion and posture of a wearer according to an embodiment of the present invention.

FIGS. 11 to 13 are views illustrating another wearing state of the wearable robot according to an embodiment of the present invention.

FIG. 14 is a perspective view of the connecting member in the wearable robot according to an embodiment of the present invention.

FIG. 15 is an exploded perspective view of the connecting member in the wearable robot according to an embodiment of the present invention.

FIG. 16 is an exploded perspective view of portion "A" of FIG. 15.

FIG. 17 is an exploded perspective view of a third member illustrated in FIG. 15.

FIGS. 18 to 23 are views illustrating an operating state of the wearable robot according to an embodiment of the present invention.

FIG. 24 is an operational view of a connecting member according to a third embodiment of the present invention.

FIG. 25 is an operational view of a connecting member according to a fourth embodiment of the present invention.

FIG. 26 is an exploded perspective view of the connecting member in the wearable robot according to an embodiment of the present invention.

FIG. 27 is a cross-sectional view of the connecting member in the wearable robot according to an embodiment of the present invention.

FIG. 28 is an enlarged view of portion "A" of FIG. 27.

FIG. 29 is an enlarged view of portion "B" of FIG. 27.

FIGS. 30 and 31 are views illustrating the operating state of the wearable robot according to an embodiment of the present invention.

FIG. 32 is an operational view of a connecting member according to a sixth embodiment of the present invention.

FIG. 33 is a perspective view illustrating a state in which a waist belt is coupled to a waist wearing frame.

FIGS. 34 to 36 are views illustrating a process of attaching/detaching a waist wearing part of the wearable robot.

FIG. 37 is a perspective view of a thigh wearing part in the wearable robot according to an embodiment of the present invention.

FIG. 38 is an exploded perspective view of the thigh wearing part illustrated in FIG. 37.

FIG. 39 is a view illustrating a process of separating/coupling a plate and a strap part.

FIG. 40 is a view illustrating a method by which a first button operates in the plate.

FIG. 41 is a view illustrating a process of separating/coupling the plate and the connecting member.

FIGS. 42 to 44 are views illustrating an elastic member connecting the waist wearing part and the thigh wearing part in the wearable robot according to an embodiment of the present invention.

FIG. 45 is a perspective view of an exemplary motion assistance device.

FIG. 46 is a view illustrating a state in which the motion assistance device illustrated in FIG. 1 is worn.

FIG. 47 is a schematic configuration view of the motion assistance system according to an embodiment of the present invention.

FIG. 48 is a view illustrating rules by which motion state values are stored and updated in a state trajectory memory buffer.

FIG. 49 is a view illustrating a mapping relationship between the motion state values stored in the state trajectory memory buffer and a user's motion.

FIG. 50 is a flowchart of a motion assistance method according to an embodiment of the present invention.

FIG. 51 is a view illustrating supporting force generated by selecting one motion state value during a walking motion.

FIG. 52 is a view illustrating the supporting force generated by selecting one motion state value during a stop motion.

FIG. 53 is a view illustrating the supporting force generated by selecting one motion state value during the walking motion after stopping.

FIG. 54 is a view illustrating supporting force generated by selecting two motion state values during the walking motion.

FIG. 55 is a view illustrating the supporting force generated by selecting two motion state values during the stop motion.

FIG. 56 is a view illustrating the supporting force generated by selecting two motion state values during the walking motion after stopping.

FIG. 57 is a flowchart of a motion assistance method according to an embodiment of the present invention.

FIG. 58 is a view illustrating a method of calculating a state trajectory movement distance.

FIG. 59 is a view illustrating a relationship between a sudden change in motion and a resulting supporting force output timing when a motion state value selection position is fixed.

FIG. 60 is a view illustrating a relationship between a sudden change in motion and a resulting supporting force output timing when the motion state value selection position is adaptively changed.

FIG. 61 is a view illustrating results of positive and negative power generation according to walking and running motions when the motion state value selection position is fixed and when the motion state value selection position is adaptively changed.

FIG. 62 is a flowchart of a method for providing a safety mode according to an embodiment of the present invention.

FIG. 63 is a view illustrating various types of wearable robots to which a driving mode according to the present invention is applicable.

FIG. 64 is a view illustrating a boost converter circuit.

FIG. 65 is a graph showing inductor current and voltage according to switch on and off of the boost converter illustrated in FIG. 64.

FIG. 66 is a view illustrating a charging circuit unit of the wearable robot according to the present invention.

FIG. 67 is a view illustrating a flow of current according to the driving mode.

FIG. 68 is a view for explaining an operation of the charging circuit unit when the wearable robot according to the present invention operates in an assist mode.

FIG. 69 is a view for explaining the operation of the charging circuit unit when the wearable robot according to the present invention operates in an exercise mode.

FIG. 70 is a schematic view illustrating a method of charging an external device using electrical energy generated by the wearable robot according to the present invention.

FIG. 71 is a view illustrating an embodiment of a wearable robot charging device according to the present invention.

[Mode for Invention]

Specific details of the embodiments are included in the detailed description and drawings.

The advantages and features of the present invention and methods for achieving them will become clear by referring to the embodiments described in detail below along with the accompanying drawings. However, the present invention is not limited to the embodiments disclosed below. The present invention may be implemented in a variety of different forms. These embodiments are provided solely so that this disclosure will be complete. In addition, the present embodiments are provided to fully inform those skilled in the art of the invention of the scope of the invention. The present invention is defined only by the scope of the claims. Throughout the specification, like reference numerals refer to like elements.

Hereinafter, the present invention will be described with reference to the drawings.

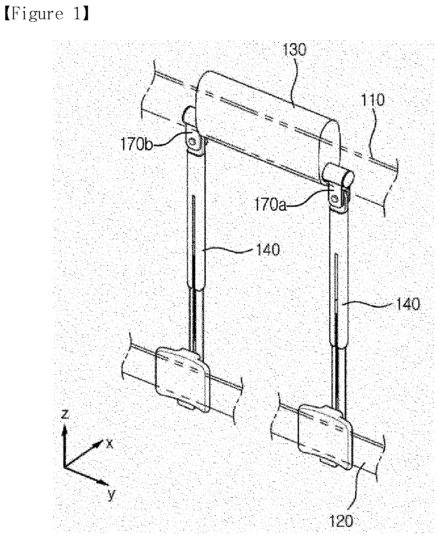

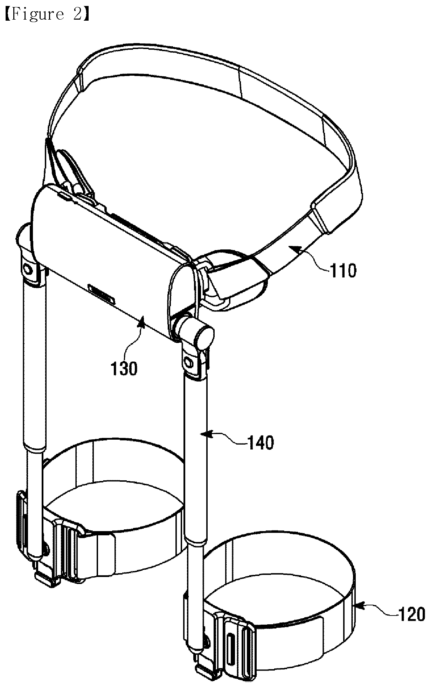

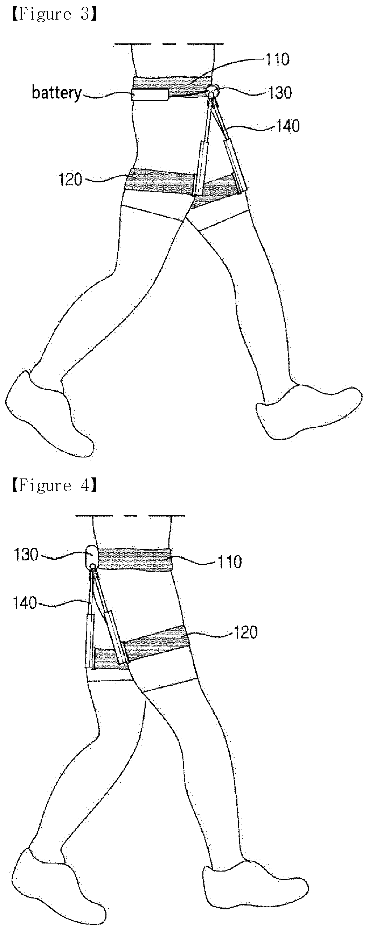

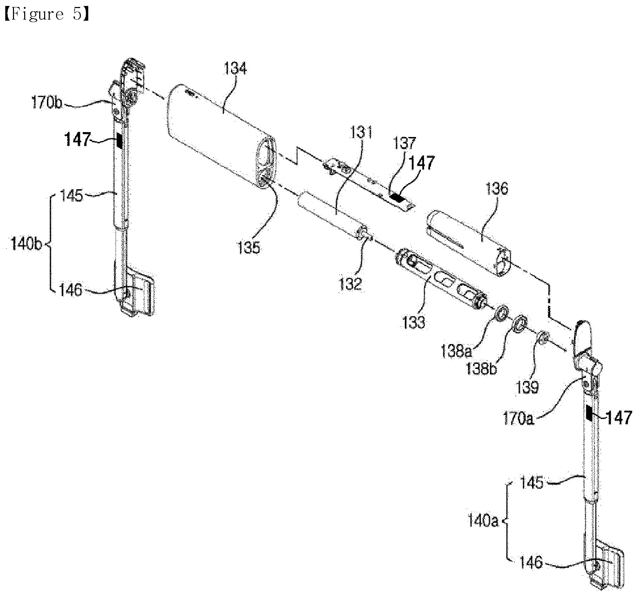

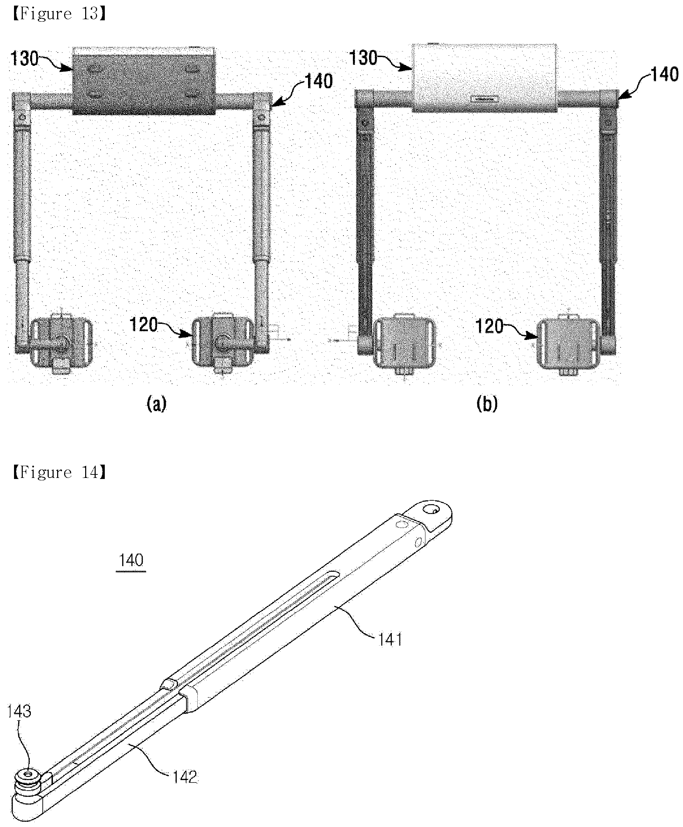

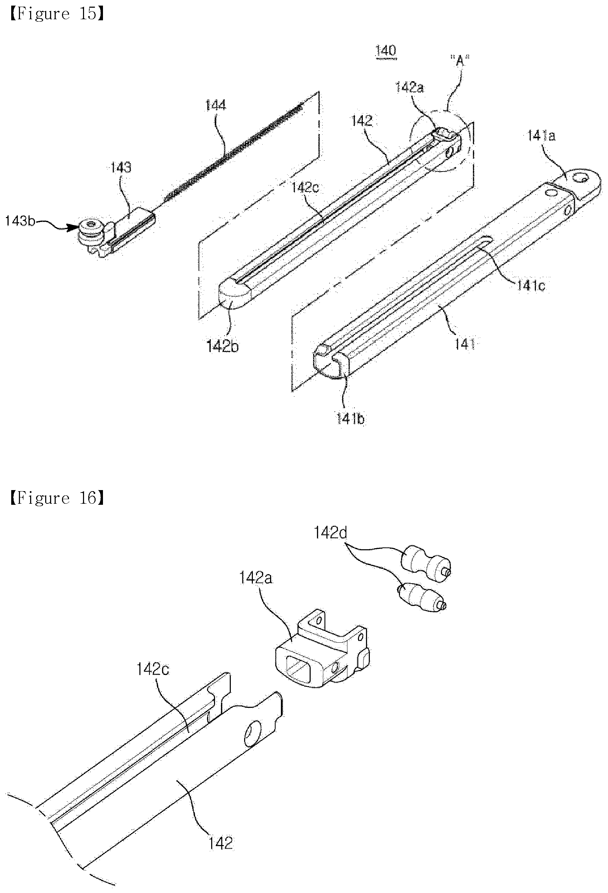

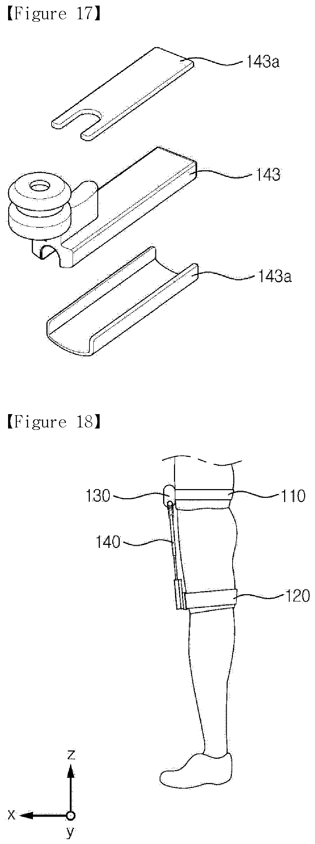

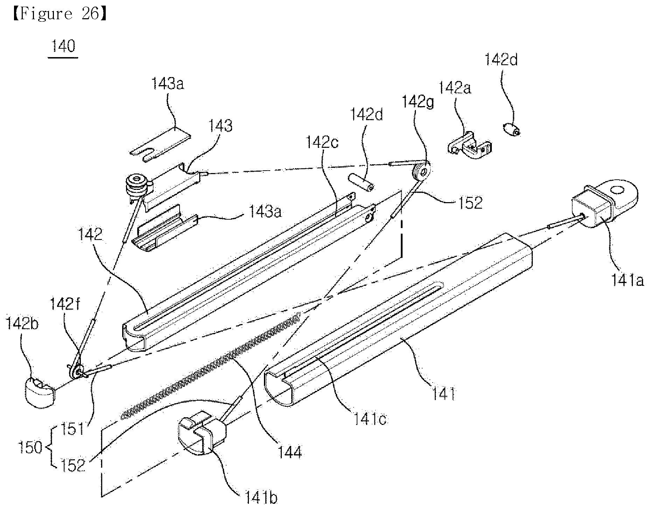

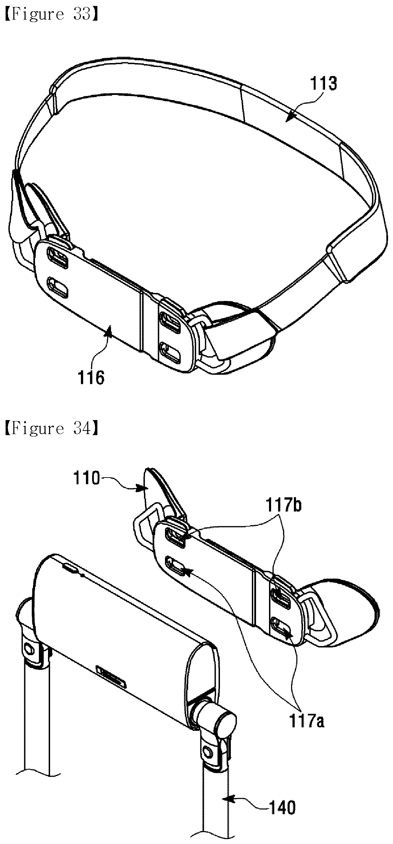

FIG. 1 is a perspective view of a wearable robot according to an embodiment of the present invention. FIG. 2 is a perspective view of a wearable robot equipped with a waist wearing part (first fixing unit) and a thigh wearing part (second fixing unit) according to an embodiment of the present invention. FIG. 3 is a view illustrating a state in which the modified wearable robot of FIG. 1 is worn. FIG. 4 is a view illustrating another state in which the wearable robot according to an embodiment of the present invention is worn. FIG. 5 is an exploded perspective view of a driving unit of the wearable robot according to an embodiment of the present invention. FIG. 14 is a perspective view of the connecting member in the wearable robot according to an embodiment of the present invention. FIG. 15 is an exploded perspective view of the connecting member in the wearable robot according to an embodiment of the present invention. FIG. 16 is an exploded perspective view of portion "A" of FIG. 15. FIG. 17 is an exploded perspective view of a third member illustrated in FIG. 15. FIG. 26 is an exploded perspective view of the connecting member in the wearable robot according to an embodiment of the present invention. FIG. 33 is a perspective view illustrating a state in which a waist belt is coupled to a waist wearing frame.

Overall structure of a wearable robot

As illustrated in the drawings, the wearable robot according to an embodiment of the present invention includes a first fixing unit 110, a second fixing unit 120, a driving unit 130, and a connecting member 140. Also, the first fixing unit 110 of the wearable robot according to an embodiment of the present invention may be a waist wearing part. Therefore, in the description below, reference number 110 will be referred to as the first fixing unit or the waist wearing part.

For convenience of explanation, a front direction or walking direction of a wearable robot wearer is defined as a x-axis direction. A direction of both sides of the wearable robot wearer is defined as a y-axis direction, and a vertical direction is defined as a z-axis direction.

In one embodiment of the present invention, the first fixing unit 110 may be fixed to a waist area disposed above a user's hip joint. The second fixing unit 120 may be fixed to a thigh disposed below the user's hip joint. The connecting member 140 connecting the driving unit 130 and the second fixing unit 120 may rotate around the y-axis by driving the driving unit 130. Here, the wearable robot according to the present invention may provide a supporting force to a movement of a femur centered on the hip joint.

The first fixing unit 110 and the second fixing unit 120 may be respectively fixed to body portions on both sides of a joint part. The first fixing unit 110 and the second fixing unit 120 may be formed in the form of a band or belt that may surround a body portion. A fixing unit such as hook-and-loop fasteners that may be fixed to each other may be provided at each of both ends of the first fixing unit 110 and the second fixing unit 120.

The driving unit 130 is disposed on the first fixing unit 110. The driving unit 130 may include a motor or an actuator to provide rotational torque centered on a y-axis. The driving unit 130 may include a reducer to increase torque.

The driving unit 130 includes an actuator 131 that generates power for supporting force. The driving unit 130 may be disposed on a front or rear portion of the waist. The driving unit 130 may include a battery 136 that supplies power to the actuator 131. As illustrated in FIG. 3, the driving unit 130 includes the battery 136.

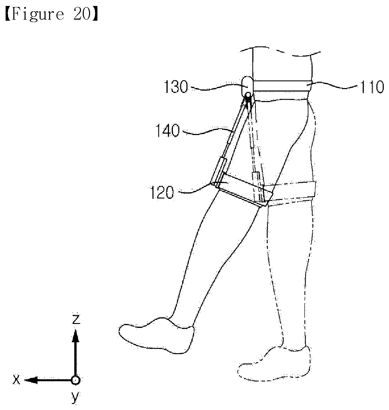

A control board 137 may be formed separately from the driving unit 130 and mounted to another portion of the waist. The first fixing unit 110 may include a conventional belt (or scrap) and buckle (or Velcro) to fix the driving unit 130. The first fixing unit 110 may surround the waist to mount the driving unit 130 to the front portion (refer to FIG. 20) of a wearer's waist or the rear portion (refer to FIG. 4) of the wearer's waist. Here, a circumferential length of the first fixing unit 110 may be adjusted suitable to a wearer's body size.

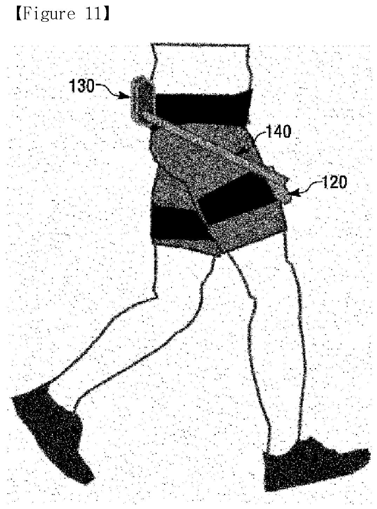

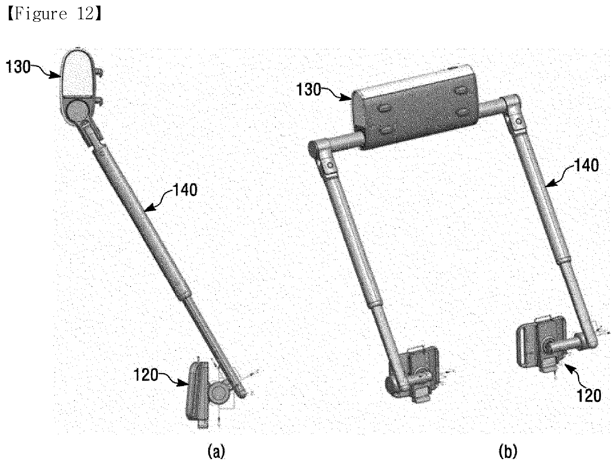

When the driving unit 130 is mounted to the rear portion of the waist, the connecting member 140 may be disposed at a rear portion (refer to FIG. 4) or front portion (refer to FIG. 11) of a thigh. However, the embodiment is not limited thereto. As illustrated in FIG. 11, when the connecting member 140 is disposed on the front portion of the thigh, the connecting member 140 may be coupled to the driving unit 130 as illustrated in FIGS. 12 and 13.

The connecting member 140 may be coupled in a state in which a portion coupled to the driving unit 130 extends. The connecting member 140 may be rotatably coupled to each of both sides of the driving unit 130. Each connecting member 140 may extend along both thighs and be mounted on the thighs. Here, the connecting member 140 may be disposed at the front or rear portion of the thigh depending on a fixed position of the driving unit 130. The connecting member 140 may transmit a supporting force to the thigh. Here, the connecting member 140 may rotate in forward and backward directions around a rotation axis by an operation of an actuator 131 of the driving unit 130 to transmit the supporting force.

The connecting member 140 may have a long bar shape. An inner surface in contact with the thigh may be formed as a curved surface according to a shape of the inner surface in contact with the thigh so as to be in close contact with the thigh. The connecting member 140 may include an extension frame 145 and a fixing frame 146. The extension frame 145 is rotatably coupled to the driving unit 130 and extends long with a rectangular or circular cross-section. The fixing frame 146 is fixed to a lower end of the extension frame 145. The fixing frame 146 may have a relatively large contact area with the thigh. An inner surface of the fixing frame 146 is formed as a curved surface according to a shape of the fixing frame 146 in contact with the thigh. A second fixing unit 120 that fixes the connecting member 140 to the thigh may be connected to the fixing frame 146.

The second fixing unit 120 may be connected to a lower end of the connecting member 140 to fix a lower end of the connecting member 140 to the thigh. Like the first fixing unit 110, the second fixing unit 120 may include a belt (or strap), buckle (or velcro). In the drawing, although the second fixing unit 120 is disposed at the lower end of the connecting member 140, the second fixing unit 120 may be disposed at another position or additionally formed at a different position other than the lower end of the connecting member 140.

Additionally, the second fixing unit 120 may include a motion detecting sensor 147 that detects a movement or posture of the wearer's thigh. A control board 137 may predict a movement of the wearer by receiving a signal from the motion detecting sensor 147. The control board 137 may control the actuator 131 and drive the connecting member 140. The control board 137 may assist the movement of the wearer's thigh.

The motion detecting sensor 147 may be an inertial sensor, an angle sensor, or a limit sensor. The motion detecting sensor 147 may be mounted within a main body housing 134 and sense an angle of a wearer's upper body. Additionally, the motion detecting sensor 147 may be mounted on one or both rotation joint parts 170a and 170b to measure forward and backward angles of each leg of the wearer. The motion detecting sensor 147 may sense only an angle of one leg and then calculate the angle of the other leg based on relative angles of both legs. The motion detecting sensor 147 is mounted on the connecting member 140. The motion detecting sensor 147 may sense the angles of the leg of the wearer in the forward-backward directions and left-right rotation directions. The sensed angles in the left and right rotation directions may be used to calculate information about wearer's balance.

The motion detecting sensor 147 includes an encoder, a resolver, and a hall sensor that may measure a rotation amount and direction of a motor. The motion detecting sensor 147 may measure a rotation variance by detecting a rotation of a motor shaft. The motion detecting sensor 147 may measure acceleration or angular velocity. The motion detecting sensor 147 may be disposed on the second fixing unit 120.

The wearable robot that assists walking in the past has a general structure of having actuators (motors) on both sides of the hip joint. A conventional wearable robot that assists walking has a structure in which a battery and a control board are disposed on the waist. The conventional wearable robot that assists walking has a structure that transmits a supporting force through a connecting member 140 extending from the actuators on both the sides of the hip joint to a side surface of the thigh. The connecting member of the conventional wearable robot that assists walking is arranged to extend to the side surface of the thigh. Therefore, it is difficult for the connecting member of the conventional wearable robot to assist walking to effectively transmit the supporting force to the thigh.

Conversely, in the present invention, the driving unit 130 is disposed in the front or rear portion of the waist, and the connecting member 140 is disposed in the front and rear direction in which the thigh moves during walking. Accordingly, in the present invention, the connecting member 140 may effectively transmit the supporting force of the connecting member 140 to the thigh. Therefore, supporting force may be transmitted more effectively than before. The present invention may use the actuator 131 having relatively small power. In addition, since supporting force is transmitted to both thighs using the single actuator 131, a weight of a device may be reduced.

Referring to FIG. 1, one end of the connecting member 140 is connected to the driving unit 130. The other end of the connecting member 140 is connected to the second fixing unit 120 and rotates by the driving unit 130. The connecting member 140 transmits the driving force provided from the driving unit 130 to the second fixing unit 120. The connecting member 140 has a length adjusted in response to a distance between the driving unit 130 and the second fixing unit 120, which changes depending on a movement size of the joint part. According to a specific embodiment, each of the connecting members 140 on each of the both the left and right sides includes rotation joint parts 170a and 170b. The rotation joint parts 170a and 170b are connected to both left and right ends of the driving unit 130, respectively. Accordingly, a driving force that rotates about the y-axis by the driving unit 130 may be directly transmitted to the connecting member 140. Here, the driving force may be transmitted to the second fixing unit 120 through the connecting member 140.

Referring to FIG. 15, the connecting member 140 may include a first member 141, a second member 142, a third member 143, and an elastic member 144. One end of the first member 141 is connected to the driving unit 130. The second member 142 is movable along a longitudinal direction of the first member 141. The second member 142 may overlap the first member 141. The second member 142 may be inserted into the first member 141. The second member 142 may be entirely inserted into the first member 141. The third member 143 may include a protrusion 143b. Additionally, one end of the third member 143 is movable along a longitudinal direction of the second member 142. The other end of the third member 143 is fixed to the second fixing unit 120. Both ends of the elastic member 144 are fixed to the first member 141 and the second member 142, respectively. The elastic member 144 provides an elastic force in a direction in which the first member 141 overlaps the second member 142.

As illustrated in FIG. 26, the connecting member 140 may include a linking unit 150 that allows the second member 142 to move in conjunction with a movement of the third member 143.

The third member 143 is inserted into the second member 142. The third member 143 is configured to move along the longitudinal direction inside the second member 142. A connector for connection to the second fixing unit 120 may be formed on one surface of the third member 143.

The second member 142 has a tubular shape with a passage through which the third member 143 may be inserted. A second slit 142c for a movement of the connector is formed along the longitudinal direction on one surface of the second member 142. Openings at both ends of the second member 142 may be closed by a second-1 end cap 142a and a second-2 end cap 142b, respectively. Accordingly, each of both the ends of the second slit 142c have a closed shape.

The second member 142 may be entirely inserted into the first member 141. Also, the third member 143 may be entirely inserted into the second member 142. As a result, a length in a contracted state may be minimized. Also, is the second member 142 may have excellent transportability and portability. Additionally, since the second member 142 completely overlaps the first member 141, rigidity is strengthened.

The first member 141 has a tubular shape with a passage through which the second member 142 may be inserted. The second member 142 may be inserted into one surface of the first member 141. Here, a first slit 141c capable of communicating with the second slit 142c is formed along the longitudinal direction. Openings at both ends of the first member 141 may be closed by a first-1 end cap 141a and a first-2 end cap 141b, respectively. The first-2 end cap 141b is coupled to an end to which the second member 142 is inserted. An opening communicating with the first slit 141c is formed in the first-2 end cap 141b. Accordingly, one end of the first slit 141c has an opened shape.

The first member 141 may have not only the tubular shape, but also a housing shape. In this case, a passage is formed inside or outside the housing to guide the movement of the second member 142. A first slit 141c communicating with the second slit 142c may be formed on one surface of the housing.

Both ends of the connecting member 140 are preferably rotatably connected to the driving unit 130 and the second fixing unit 120, respectively. For example, the first member 141 is connected to the driving unit 130 to be rotatable left and right through a first hinge shaft. The third member 143 may also be connected to the second fixing unit 120 to be rotatable left and right through a second hinge shaft. In addition, each of the connecting members 140 on the left and right sides includes rotation joint parts 170a and 170b. The rotation joint parts 170a and 170b are connected to both the left and right ends of the driving unit 130. As a result, the driving force that causes the driving unit 130 to rotate about the y-axis may be directly transmitted to the connecting member 140.

Meanwhile, the connecting member 140 may include a first length adjusting unit and a second length adjusting unit. The first length adjusting unit is implemented as the second member 142 moves along the first member 141. The second length adjusting unit is implemented as the third member 143 moves along the second member 142. A length is adjusted by the first length adjusting unit in a predetermined range (hereinafter, referred to as a first region) of a movable range of the joint part. In a range other than the predetermined range (hereinafter, referred to as a second region), the length may be adjusted by the second length adjusting unit. The movable range may range from a forward predetermined angle to a backward predetermined angle based on a vertical axis of the main body. The first region may be a region that requires length adjustment when a user walks. The second region may be a region that requires a wide range of length adjustment, such as when the user sits down.

The first length adjusting unit and the second length adjusting unit may operate sequentially. According to another embodiment, the first length adjusting unit and the second length adjusting unit may operate in parallel.

Friction force against the first member 141 acting during the movement of the second member 142 may be relatively small compared to that against the second member 142 acting during the movement of the third member 143. Accordingly, the first and second length adjusting units of the connecting member 140 may operate sequentially while the distance between the driving unit 130 and the second fixing unit 120 changes due to the movement of the joint part. For example, when the user walks, the length is adjusted by the first length adjusting unit. When the user sits down while walking, the length may be adjusted by the second length adjusting unit and operates sequentially. Accordingly, when walking, a sense of resistance of the wearer may be minimized by a movement between the second member 142 and the first member 141, which have low friction. Conversely, when the hip joint has a large movement angle or a low movement frequency, such as sitting or climbing stairs, the third member 143 moves in the second member 142. Therefore, a wide range of length adjustment may be implemented as the first and second length adjusting units operate sequentially. Accordingly, the sense of resistance of the wearer may be minimized.

Meanwhile, the first length adjusting unit and the second length adjusting unit may not necessarily operate sequentially and may have a period in which operations thereof overlap for a certain period of time. These embodiments are also included in the scope of the present invention. In addition, the first length adjusting unit and the second length adjusting unit may generally operate in parallel, and this embodiment is also included in the scope of the present invention. It is common for the first length adjusting unit to operate first. However, a body structure is different from person to person. In addition, a magnitude and direction of a force applied to each member constituting the connecting member 140 is also required to be considered. In this way, the first length adjusting unit and the second length adjusting unit may operate in parallel. In this case, the friction force between the second member 142 and the first member 141 may increase due to twisting when the wearable robot is worn to operate. Here, the third member 143 moves in parallel to the second member 142. Therefore, the sense of resistance of the wearer may be reduced.

The linking unit 150 may include a first cable 151 and a second cable 152. One end of the first cable 151 may be fixed to a first end of the first member 141. The other end of the first cable 151 may be fixed to the third member 143 via a second end of the second member 142. One end of the second cable 152 may be fixed to a second end of the first member 141. The other end of the second cable 152 may be fixed to the third member 143 via a first end of the second member 142. The first end refers to an end of the first or second member in a direction in which the first member 141 overlaps the second member 142 when the first member 141 and overlaps second member 142. The second end refers to an end of the first member or the second member in a direction opposite to the overlapping direction.

The first cable 151 serves to move the second member 142 in a contracted direction in conjunction with the movement of the third member 143 while the third member 143 is moved in the contracted direction. The second cable 152 serves to move the second member 142 in an extended direction in conjunction with the movement of the third member 143 in a process of moving the third member 143 in the extended direction. A moving distance of the second member 142 by the first cable 151 and the second cable 152 may be set to 1/2 of a moving distance of the third member 143.

In addition, a second pulley 142f for supporting the first cable 151 is disposed on the second-2 end cap 142b coupled to an extended end of the second unit member 142. A third pulley 142g for supporting the second cable 152 may be disposed on the second-1 end cap 142a coupled to a contracted end of the second member 142.

One end of the elastic member 144 is fixed to the first-1 end cap 141a of the first member 141. The other end of the elastic member 144 is fixed to the second-2 end cap 142b of the second member 142. The elastic member 144 is elastically deformed while the second member 142 is moved in an expanded direction with respect to the first member 141 due to an external force. The elastic member 144 restores elasticity when the external force applied to the second member 142 is released and provides an elastic force to move the second member 142 in the contracted direction. This elastic member 144 may be formed in the form of a tension spring or elastic string.

The elastic member 144 may connect the first member 141 and the third member 143 and elastically support the third member 143 in the contracted direction. In this case, the second member 142 connected to the third member 143 through the linking unit 150 may be prevented from moving in the extended direction due to own weight thereof.

For example, the second-1 end cap 142a is coupled to an end inserted into the passage of the first member 141. The second-1 end cap 142a may have a plurality of rollers 142d in contact with upper and lower inner walls of the first member 141, respectively. A sliding pad 143a that slides may be disposed on an outer surface of the third member 143. The sliding pad 143a has a relatively large friction force compared to the roller 142d and slides on a contact surface with the second member 142.

Meanwhile, the sliding pad 143a may have a shape of surrounding the outer surface of the third member 143 inserted into the passage of the second member 142. The sliding pad 143a may be assembled in a detachable manner to the third member 143 for maintenance such as replacement.

In case of a motion in a small range (first region), such as walking motion, the second member 142 is moved along the first member 141 to adjust the length of the connecting member 140. This is because the friction force of the second member 142 is relatively small compared to the third member 143.

Additionally, in case of a motion in a large range (second region), such as sitting or walking upstairs, the length of the connecting member 140 is adjusted within the range of motion in the first region. Here, the second member 142 is moved along the first member 141 to adjust the length of the connecting member 140. Thereafter, in the operating range of the second region exceeding the first region, the third member 143 is moved along the second member 142 to adjust the length of the connecting member 140.

When the connecting member 140 has multiple stages, it is possible to shorten the overall length in the contracted state and provide a large stroke. Additionally, the friction force generated during the motion process may be distributed. This is because the second member 142 and the third member 143 provided in the connecting member 140 operate sequentially rather than simultaneously.

Meanwhile, in the present invention, it is explained that the length of the connecting member 140 is adjusted by the second member 142 and the third member 143 each making a linear reciprocating movement. However, the connecting member 140 may include a plurality of members rotatably coupled to each other. Accordingly, rotation angles of the plurality of members are adjusted according to the distance between the driving unit 130 and the second fixing unit 120. Therefore, a length between the both ends of the connecting member 140 may be adjusted.

As illustrated in FIG. 33, when the first fixing unit is implemented in the form of a waist wearing part 110, the waist wearing part 110 may include a waist belt 113 and a waist wearing frame 116. Both ends of the waist belt 113 may be coupled to both ends of the waist wearing frame 116. The length of the waist belt 113 may be adjusted depending on the size of the wearer's waist.

As illustrated in FIGS. 34, the waist wearing frame 116 may include a lower mechanism portion 117a, an upper mechanism portion 117b, and a detachment button 118. Meanwhile, one surface of the main body housing 134 of the driving unit 130, which will be described later, may include a lower hook 134a and an upper hook 134b.

The lower mechanism portion 117a may be combined with the lower hook 134a. The upper mechanism portion 117b may be combined with the upper hook 134b. Accordingly, the waist wearing part 110 and the driving unit 130 may be coupled.

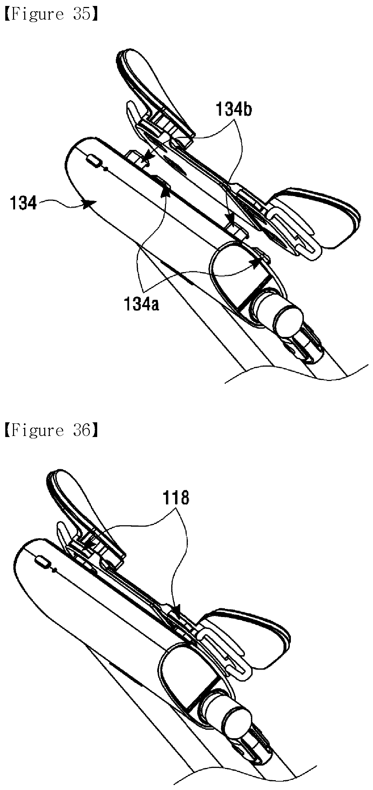

As illustrated in FIG. 36, when the detachment button 118 is pressed, the upper mechanism portion 117b and the upper hook 134b may be separated. Accordingly, the lower mechanism portion 117a and the lower hook 134a may be easily separated. Accordingly, the driving unit 130 and the waist wearing part 110 may be easily mounted or detached.

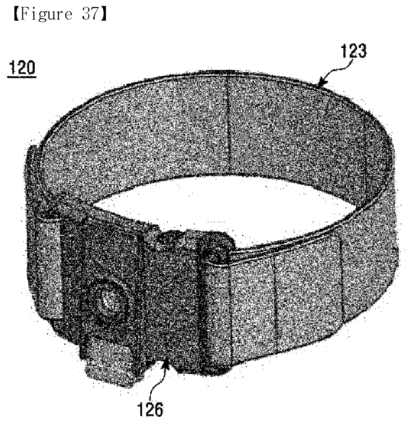

As illustrated in FIG. 37, when the second fixing unit is implemented in the form of a thigh wearing part 120, the thigh wearing part 120 may include a strap part 123 and a plate 126. The strap part 123 may include a second button 129 coupled to one end of the strap part 123. Both ends of the strap part 123 may be coupled to both ends of the plate 126. The length of the strap part 123 may be adjusted depending on the size of the wearer's thigh.

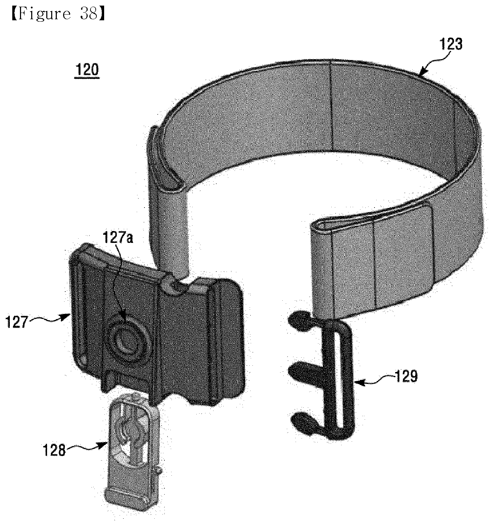

As illustrated in FIG. 38, the plate 126 may include a plate frame 127 and a first button 128. The plate frame 127 may include an opening 127a. Additionally, the third member 143 may include a protrusion portion 143bprotrusion portion 143b. Here, the opening 127a of the plate 126 may be coupled to the protrusion portion 143b of the third member 143.

When the first button 128 is pressed, the plate 126 and the third member 143 may be separated. When the second button 129 is pressed, the plate 126 and the strap part 123 may be separated. In this way, the plate 126 and the strap part 123 or the plate 126 and the third member 143 may be easily separated, so the wearable robot may be easily attached and detached.

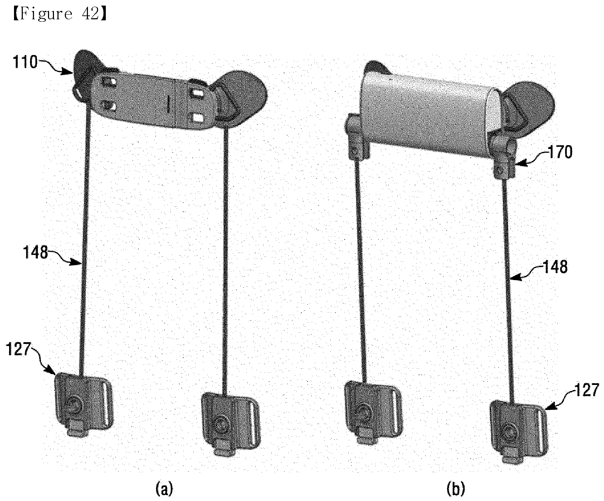

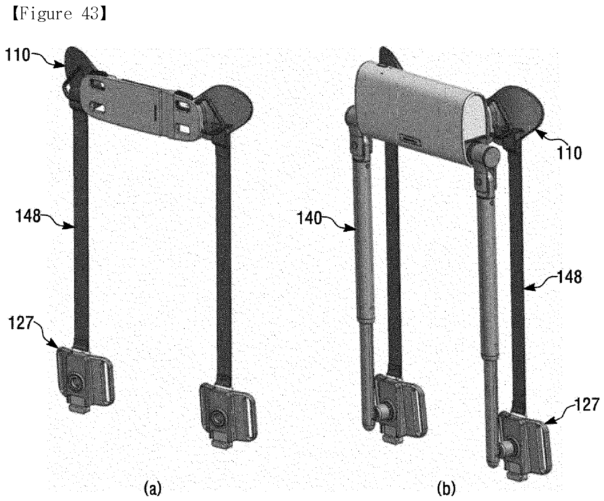

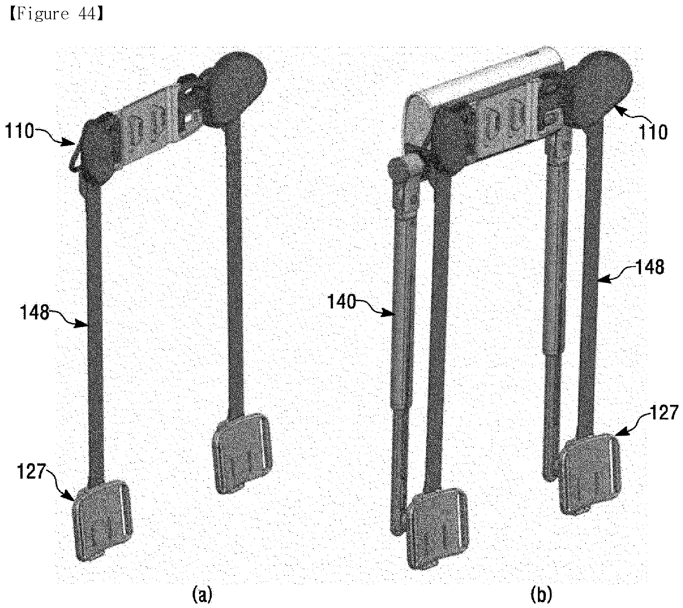

Meanwhile, as illustrated in FIGS. 42 to 44, a wearing part elastic member 148 may be disposed between the waist wearing part 110 and the thigh wearing part 120. In this case, a ring (not shown) or an opening (not shown) of the waist wearing part 110 is coupled to one end of the wearing part elastic member 148. In the thigh wearing part 120, a ring (not shown) or an opening (not shown) of the plate frame 127 may be coupled to the other end of the wearing part elastic member 148. This combination may be implemented in a variety of ways, including rings and openings. In addition, as illustrated in FIG. 42(b), one end of the wearing part elastic member 148 may be coupled to the rotation joint part 170 and the other end may be coupled to the thigh wearing part 120.

In the above coupled state, the length of the wearing part elastic member 148 is adjustable. Meanwhile, due to the tension generated in the wearing part elastic member 148, the wearing part elastic member 148 may replace the function of the elastic member 144 in the connecting member 140. Accordingly, it is possible to implement a wearable robot while omitting the elastic member 144 in the connecting member 140.

When wearing a wearable robot including the wearing part elastic member 148, the step of wearing the waist wearing part 110 and the thigh wearing part 120 and adjusting the length of the wearing part elastic member 148 is included. The method of wearing a wearable robot of the present invention includes the steps of combining the driving unit 130 and the waist wearing part 110 and combining the connecting member 140 and the thigh wearing part 120.

When the wearing part elastic member 148 connects the waist wearing part 110 and the thigh wearing part 120, it is possible to prevent the thigh wearing part 120 from falling. Additionally, if the length of the wearing part elastic member 148 is adjusted to suit the wearer's body shape, the tension of the wearing part elastic member 148 may be minimized. Accordingly, the force pulling the waist wearing part 110 down by the thigh wearing part 120 is minimized. Therefore, the feeling of weight felt by the wearer may be minimized. Additionally, the elastic force of the elastic member 144 within the connecting member 140 may be minimized. Additionally, the structure of the connecting member 140 may be simplified by omitting the elastic member 144 from the connecting member 140.

Driving unit

The detailed configuration of the wearable robot according to the first embodiment of the present invention will be described.

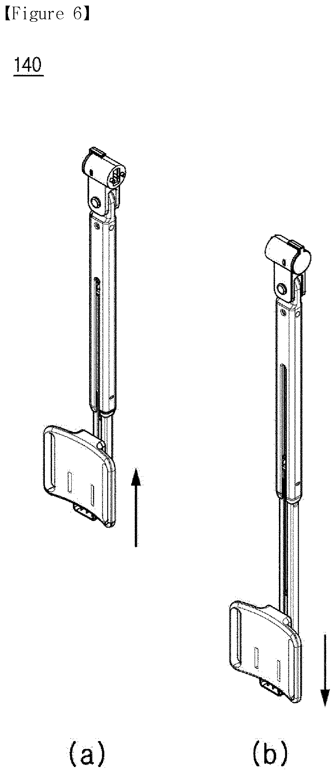

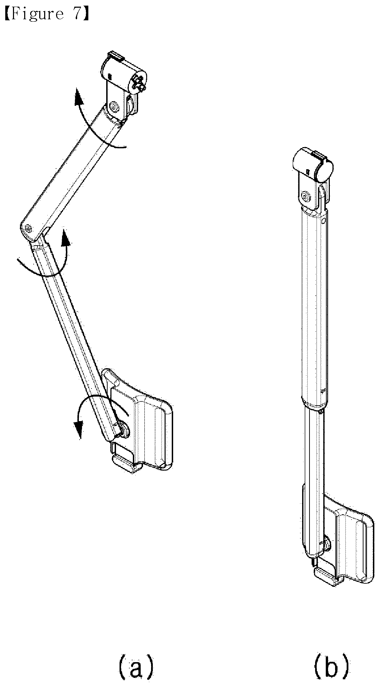

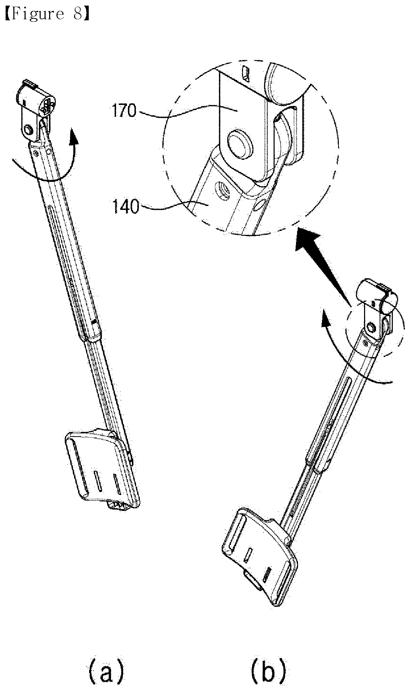

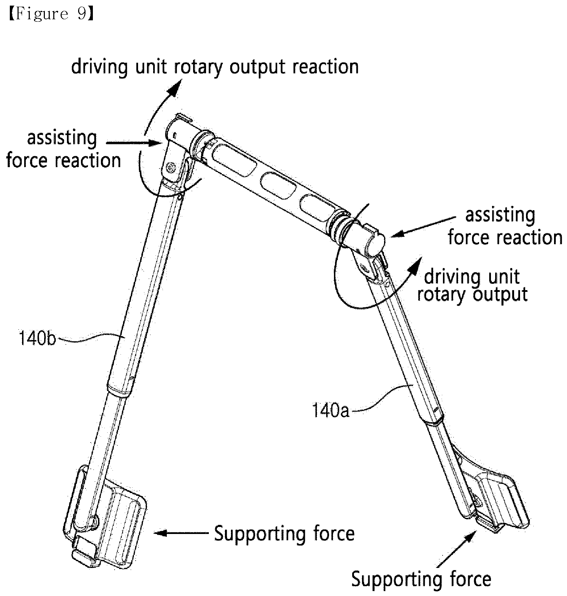

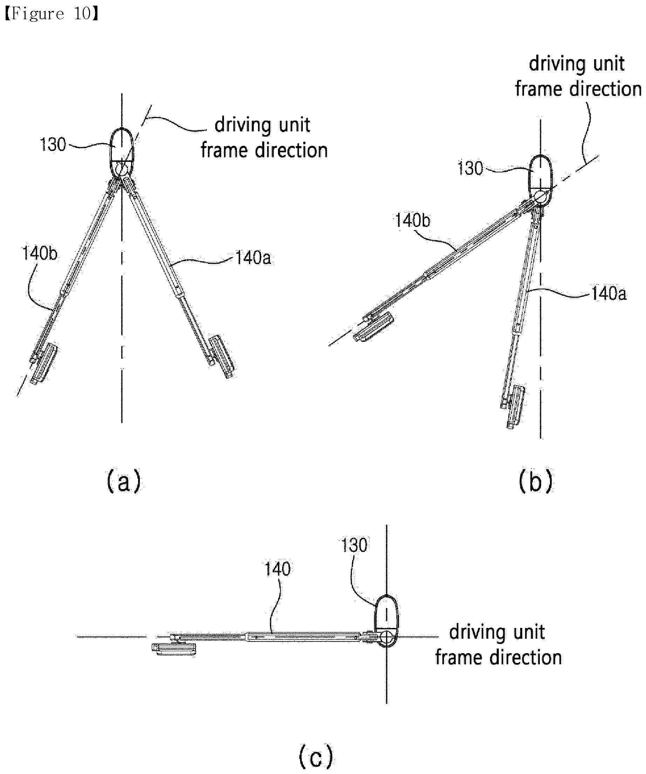

FIG. 5 is an exploded perspective view of a driving unit of the wearable robot according to an embodiment of the present invention. FIG. 6 is a view for explaining a sliding operation of a connecting member according to an embodiment of the present invention. FIG. 7 is a view for explaining a link operation of the connecting member according to an embodiment of the present invention. FIG. 8 is a view for explaining a left-right hinge movement of the connecting member according to an embodiment of the present invention. FIG. 9 is a view for explaining an operation the wearable robot while walking according to an embodiment of the present invention. FIG. 10 is a view for explaining the operation of the wearable robot depending on a motion and posture of a wearer according to an embodiment of the present invention.

The driving unit 130 may be configured to include a single actuator 131, an actuator frame 133, and a main body housing 134.

The actuator 131 may be configured as a rotation motor that may change the direction of rotation. A connecting member 140a mounted on one thigh is connected to the motor shaft 132 of the rotation motor. Accordingly, the connecting member 140a may rotate forward and backward about the left and right rotation axis by the power of the rotation motor.

The actuator frame 133 has a long cylindrical shape, accommodates the actuator 131 therein, and rotates in the horizontal axis direction. As will be described later, the actuator frame 133 does not rotate through a separate actuator 131 such as a rotary motor. Meanwhile, the actuator frame 133 may not be provided separately, and the actuator frame 133 and the actuator 131 may be integrated to form the actuator 131 itself.

The main housing 134 accommodates the actuator frame 133 therein. The main housing 134 may be divided into regions to accommodate the actuator frame 133 therein. In other words, the main housing 134 may be divided into an area in which the cylindrical hole 135 is formed in the horizontal direction and an area in which the battery 136 and the control board 137 are mounted.

A bearing 138 may be installed between the outside of the actuator frame 133 and the cylindrical hole 135. This is to allow the actuator frame 133 to rotate in the axial direction within the cylindrical hole 135 formed in the main housing 134.

The actuator 131 disposed inside the actuator frame 133 may be fixed inside the actuator frame 133. Therefore, when the actuator frame 133 rotates, the actuator 131 may also rotate.

A connecting member 140b mounted on the other thigh is connected to the other end of the actuator frame 133. Therefore, when the actuator frame 133 rotates, the connecting member 140b may rotate forward and backward about the left and right rotation axis.

A rotation joint part 170b may be coupled to the other end of the actuator frame 133. The connecting member 140b may be fixed to the rotation joint part 170b. Additionally, the rotation joint part 170a may be coupled to the motor shaft 132 of the rotation motor. A bush 139 may be separately coupled to the end of the motor shaft 132, and a rotation joint part 170a may be coupled to the bush 139.

A bearing 138b may be separately installed between the outer surface of the motor shaft 132 and the cylindrical hole 135 of the main body housing 134. Alternatively, a bearing 138b may be separately mounted between the outer surface of the bush 139 and the cylindrical hole 135 of the main body housing 134.

The connecting member 140 may be hinged to the lower end of the rotation joint part 170 on both left and right sides so as to be rotatable in the left and right directions about the front and rear rotation axis. One upper end of the rotation joint part 170 may be coupled to the other end of the actuator frame 133 or the bush 139. The lower end of the rotation joint part 170 is formed in a platelike shape ('U' shape when viewed from the side) with both sides extending in a plate shape. Accordingly, the upper end of the connecting member 140 between both plates may be hinged so as to be rotatable in the left and right directions about the front and rear rotation axis. Therefore, as illustrated in FIG. 8, using the upper end of the connecting member 140 as an axis, the connecting member 140 may be rotated in the left and right directions between the plates on both sides.

Accordingly, the connecting member 140 may rotate in the left and right directions by hinge coupling. Also, the connecting member 140 may also rotate in the forward and backward directions around the left and right rotation axis by the rotation of the rotation joint part 170.

Additionally, the connecting member 140 may have a variable length. The driving unit 130 is mounted on the waist, not the hip joint. Therefore, Depending on the posture or movement of the wearer, the straight-line distance between both sides of the driving unit 130 and the bottom of the connecting member 140 may change. Here, if the length of the connecting member 140 is fixed, the connecting member 140 may restrict (obstruct) the wearer's motion. Here, the length of the connecting member 140 may vary in accordance with the wearer's posture or motion. Therefore, it is possible to prevent the connecting member 140 from restricting the wearer's motion.

As illustrated in FIG. 6, the connecting member 140 may be formed of a plurality of frames that overlap and slide. Accordingly, the length of both ends of the connecting member 140 may be varied in accordance with the wearer's posture or motion.

Alternatively, as illustrated in FIG. 7, the connecting member 140 may be formed of a plurality of links and configured to bend or unfold in accordance with the motion of the wearer. Here, the links may be linked so as to be bent in the front-to-back direction. Additionally, the links may be linked to bend in the left and right directions. Therefore, an amount of bending of the link varies depending on the wearer's posture or motion. For this reason, it is possible to prevent the connecting member 140 from restricting the wearer's motion.

The wearable robot supports and generates supporting force by assisting one thigh based on the other thigh. That is, the connecting member 140b of the other thigh is connected to the actuator frame 133. The connecting member 140a of one thigh may rotate directly so as to directly receive a rotational force of the actuator 131. For example, the connecting member 140a of one thigh may be connected to the motor shaft of the actuator 131 and rotate directly with the output of the actuator 131. Therefore, when the actuator 131 generates power, with the other thigh (leg) as a reference, the connecting member 140a of one thigh operates in a direction to spread one thigh (leg) forward or pull it backward.

Therefore, as illustrated in FIG. 9, the output generated from the actuator 131 is transmitted to one thigh through the connecting member 140a of one thigh.

Additionally, the reaction force against the rotational force (output) of the actuator 131 may be transmitted as supporting force to the opposite thigh. That is, the single actuator 131 may simultaneously transmit supporting force to both thighs (legs) with rotational force in opposite directions. The rotational output of the actuator 131 acting on the connecting member 140a and the rotational reaction force acting on the connecting member 140b with respect to the rotational force of the actuator 131 cancel each other out in the actuator frame 133. Here, the connecting member 140a is disposed on one thigh, and the connecting member 140b is disposed on the other thigh. Therefore, only the reaction force against the supporting force may be transmitted to the wearer. Accordingly, only a small force is transmitted to the driving unit 130, and the repulsive force felt by the wearer is small, thereby improving the wearing comfort structurally.

In addition, as illustrated in FIG. 10, the actuator frame 133 may rotate in the front-back direction around the left-right rotation axis within the cylindrical hole 135 of the main body housing 134. Here, the actuator 131 fixed inside the actuator frame 133 may also rotate together with the actuator frame 133. Accordingly, the rotational direction reference position of the actuator frame 133 may change in compliance with the wearer's various postures and motion. Because of this, the wearer's comfort may be improved. Here, the reference position of the rotation direction of the actuator frame 133 changes based on the main body housing 134 whose position is fixed to the waist.

For example, when walking on flatland as illustrated in FIG. 10(a), the operating reference angle of the actuator frame 133 may be changed in accordance with the posture. As illustrated in FIG. 10(b), when going up or down stairs, the operating reference angle of the actuator frame 133 may be changed in accordance with the posture. As illustrated in FIG. 10(c), when sitting on a chair, the operating reference angle of the actuator frame 133 may be changed in accordance with the posture. The operating reference angle of the actuator frame 133 with respect to the main body housing 134, whose position is fixed to the waist, may change depending on the posture. As illustrated in FIG. 10(c), there is no relative movement of both legs when sitting on a chair. In this case, the actuator frame 133 only freely rotates within the main housing 134 without the output of the actuator 131 (without generating supporting force).

Additionally, as described above, the connecting member 140 is hinged and may rotate left and right. Also, the length of the connecting member 140 is formed to be variable or is formed as a link structure. Accordingly, the connecting member 140 does not restrict the movement of the wearer in various postures (such as bending the waist forward and backward or sitting on a chair) and the posture of the thighs opening or closing left and right. The connecting member 140 moves in compliance with the wearer's various postures and may improve the supporting force transmission efficiency and wearing comfort of the wearable robot.

In the above-described embodiment, the supporting force is directly transmitted to the connecting member 140a fixed to one thigh by a single actuator 131. The connecting member 140b fixed to the other thigh is structured to transmit supporting force through the reaction force of the supported leg. Although not shown, it may be configured to include two actuators, with each actuator rotating the connecting members 140 on both sides. Here, the driving unit 130 is fixed to the wearer's waist. The connecting member 140 is disposed at the front or rear of the thigh. Therefore, since the power transmission efficiency of the supporting force is good, an actuator with relatively low power may be used.

Connecting member

Hereinafter, an operation method according to the second embodiment of the above-described wearable robot will be described. FIGS. 18 to 23 are views illustrating the operating state of a wearable robot according to an embodiment of the present invention.

As illustrated in FIG. 18, the first fixing unit 110 is fixed to the waist area disposed above the hip joint. The second fixing unit 120 may be fixed to the thigh disposed below the hip joint. The connecting member 140 may connect the driving unit 130 fixed to the first fixing unit 110 and the second fixing unit 120.

The connecting member 140 rotates around the y-axis by the driving unit 130 and may provide supporting force in the direction of lifting or lowering the second fixing unit 120 fixed to the thigh. Accordingly, the connecting member 140 may prevent adduction, abduction, or twisting of the center of rotation of the joint part due to the provision of supporting force. When the thigh moves left and right while being lifted by a supporting force, the connecting member 140 may rotate left and right in compliance with this. Accordingly, the connecting member 140 may not limit the range of movement of the joint part.

Additionally, the connecting member 140 is configured so that its length may be adjusted in response to the distance between the driving unit 130 and the second fixing unit 120. As the connecting member 140 is composed of multiple stages, the length of each member in an overlapping state may be minimized. In addition, each member may provide a large stroke. Therefore, the present invention may transmit supporting force from motion with a small range of motion of the joint part, such as walking, to motion with a large range of motion of the joint part, such as sitting or walking up stairs.

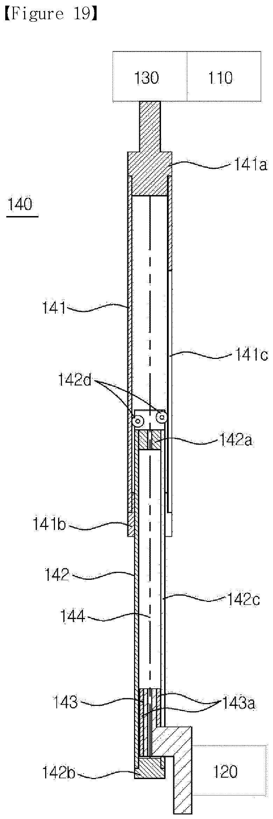

As illustrated in FIG. 19, one end of the first member 141 of the connecting member 140 may be fixed to the driving unit 130 provided on the first fixing unit 110. The second member 142 may be connected to the first member 141 in a movable state along the longitudinal direction. The third member 143 fixed to the second fixing unit 120 may be connected to the second member 142 in a movable state along the longitudinal direction. Both ends of the elastic member 144 may be fixed to the second member 142 and the first member 141. The elastic member 144 may provide elastic force to the second member 142 in the direction in which the first member 141 and the second member 142 overlap.

Here, the driving force for rotating about the y-axis by the driving unit 130 may be directly transmitted to the first member 141. This driving force may be transmitted to the second fixing unit 120 connected to the third member 143 through the third member 143. The third member 143 is movable along the longitudinal direction of the second member 142, which is movable along the longitudinal direction of the first member 141.

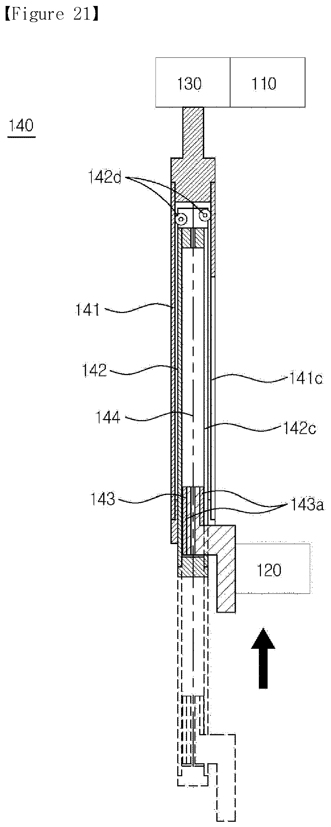

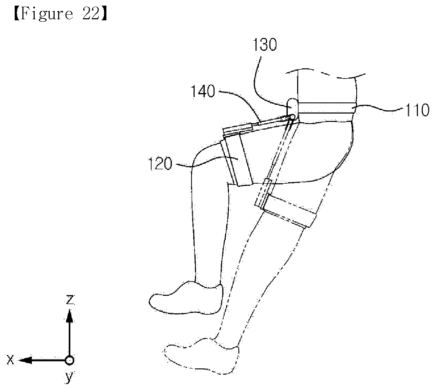

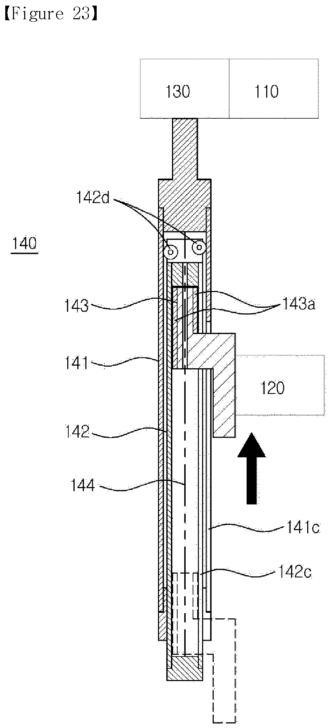

The movement length of the second member 142 of the connecting member 140 is set to respond to changes in the distance between the driving unit 130 and the second fixing unit 120, as illustrated in FIGS. 20 and 21. The change in the distance between the driving unit 130 and the second fixing unit 120 may be a change due to a small movement of the joint part. The moving length of the third member 143 is set to respond to changes in the distance between the driving unit 130 and the second fixing unit 120 due to large motion of the joint part, as illustrated in FIGS. 22 and 23.

FIG. 18 is a view illustrating a state in which a user is standing in place while wearing the wearable robot according to an embodiment of the present invention. In this state, the distance between the driving unit 130 disposed on the waist area above the hip joint and the second fixing unit 120 fixed to the lower thigh becomes maximum. Accordingly, the second member 142 and the third member 143 disposed between the driving unit 130 and the second fixing unit 120 each move in the extended direction. In this process, the elastic member 144 is elastically tensed by an external force.

Next, FIG. 20 is a view illustrating a state in which the distance between the driving unit 130 and the second fixing unit 120 is changed due to a small movement of the joint part. The range of motion of joint part during walking is limited to only within the first region, which is part of the range of motion. The connecting member 140 is set so that the moving position of the second member 142 may be adjusted in response to changes in the distance between the driving unit 130 and the second fixing unit 120 due to small movements of the joint part.

That is, as illustrated in FIG. 21, the connecting member 140 may be adjusted to a length corresponding to the distance between the driving unit 130 and the second fixing unit 120 according to the small movement of the joint part. Here, as the second member 142 moves in the contracted direction along the first member 141 while supporting the third member 143, the length of the connecting member 140 may be adjusted.

Here, in response to the spacing between the driving unit 130 and the second fixing unit 120 being reduced, the second member 142 and the third member 143 may each move in the contracted direction. Here, the second member 142 is elastically supported in a direction in which it contracts with respect to the first member 141. Accordingly, the second member 142 moves along the first member 141 prior to the third member 143 moving along the second member 142. In addition, the second member 142 is elastically supported in the contracted direction by the elastic member 144. Accordingly, while the second member 142 moves in the contracted direction, it is possible to prevent the second member 142 from arbitrarily moving in the extended direction due to its own weight.

In addition, the second member 142 is supported in a state capable of rolling relative to the first member 141 through a plurality of rollers 142d. The third member 143 is supported in a state in which it may slide relative to the second member 142 through the sliding pad 143a. The sliding pad 143a is designed to have a relatively large friction force compared to the roller 142d. Therefore, the second member 142 may move with less friction force than the third member 143. Therefore, prior to the third member 143 moving along the second member 142, the second member 142 may move along the first member 141.

Next, FIG. 22 is a view illustrating a change in the distance between the driving unit 130 and the second fixing unit 120 according to a large motion of the joint part. The range of movement of joint part during sitting or stair walking extends to the second region beyond the first region. The connecting member 140 responds to a change in the distance between the driving unit 130 and the second fixing unit 120 due to the large movement of the joint part. Accordingly, the connecting member 140 is set so that the moving position of the third member 143 along with the second member 142 may be adjusted.

That is, the connecting member 140 may be adjusted to a length corresponding to the distance between the driving unit 130 and the second fixing unit 120 according to the large motion of the joint part. That is, the second member 142 may completely move in the contracted direction along the first member 141 while supporting the third member 143. Here, the length of the connecting member 140 is adjusted. Here, the length of the connecting member 140 is adjusted as the third member 143 moves in the contracted direction along the second member 142.

Here, the third member 143 moves with a portion exposed to the outside through the second slit 142c formed on one surface of the second member 142. Here, a first slit 141c communicating with the second slit 142c is formed on one surface of the first member 141. Therefore, in a state in which the second member 142 overlaps the first member 141, the third member 143 may move in the contracted direction along the second member 142.

According to one embodiment of the present invention, the connecting member rotates clockwise around the y-axis due to forward driving of the driving unit. Here, the present invention may provide supporting force to the movement of the joint part by moving the thigh upward. In this process, the connecting member 140 may contract in response to the distance between the driving unit 130 and the second fixing unit 120.

Conversely, the connecting member 140 rotates counterclockwise around the y-axis due to the reverse driving of the driving unit 130. Here, the connecting member 140 may move the thigh in a downward direction to provide supporting force to the movement of the joint part. In this process, the distance between the driving unit 130 and the second fixing unit 120 may be expanded correspondingly. Since the expansion process of the connecting member 140 is performed in the reverse order of the contraction process described above, detailed description thereof will be omitted.

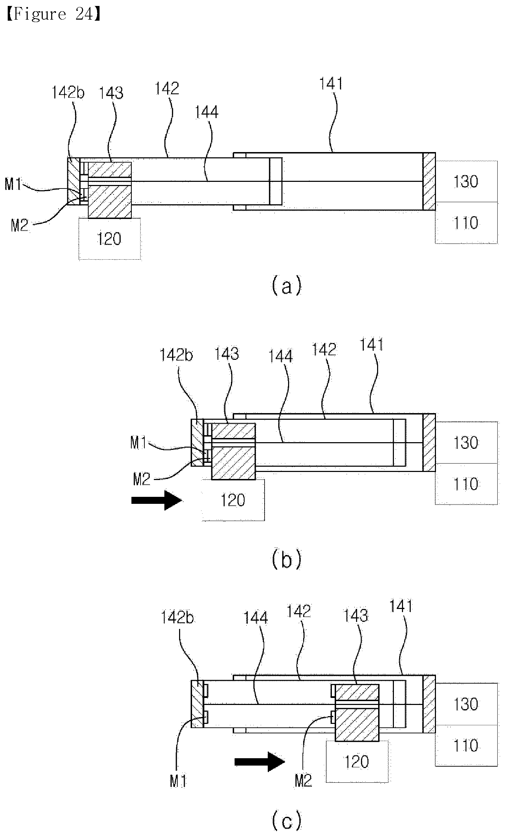

Below, a wearable robot according to the third embodiment of the present invention will be described. FIG. 24 is an operational view of the connecting member according to a third embodiment of the present invention.

The connecting member 140 according to the third embodiment of the present invention includes a first member 141, a second member 142, a third member 143, and an elastic member 144. The present invention includes a first permanent magnet M1 and a second permanent magnet M2 on surfaces of the second member 142 and the third member 143 facing each other. The present invention allows the first permanent magnet M1 and the second permanent magnet M2 to stick to each other when the third member 143 is completely moved in the extended direction. In this respect, the third embodiment has a structural difference from the second embodiment.

Except for the first permanent magnet M1 and the second permanent magnet M2, the remaining configuration is the same as the second embodiment described above. Therefore, detailed description of the same configuration is omitted.

Specifically, a first permanent magnet M1 is disposed on the surface facing the third member 143 of the second-2 end cap 142b that closes the extended end of the second member 142. In addition, a second permanent magnet M2 capable of sticking to the first permanent magnet M1 is disposed on the surface of the third member 143 facing the second-2 end cap 142b. It is preferable that the fixing force by the magnetic force of the first permanent magnet M1 and the second permanent magnet M2 is set to the extent that the elastic restoring force of the elastic member 144 may not be separated.

As illustrated in FIG. 24(a), while the first member 141, the second member 142, and the third member 143 move in the extended direction, the elastic member 144 connecting the first member 141 and the second member 142 is elastically stretched. Here, the first permanent magnet M1 of the second member 142 and the second permanent magnet M2 of the third member 143 are attached to each other by magnetic force.

As illustrated in FIG. 24(b), when the distance between the driving unit 130 and the second fixing unit 120 is reduced due to a small movement of the joint part, the third member 143 connected to the second fixing unit 120 moves in the contracted direction. Here, the third member 143 is fixed to the second-2 end cap 142b of the second member 142 by the first permanent magnet M1 and the second permanent magnet M2. The second member 142 is elastically supported in the contracted direction by the elastic member 144. The second member 142 moves in the contracted direction on the first member 141 while supporting the third member 143.

Subsequently, there are cases in which the distance between the driving unit 130 and the second fixing unit 120 is reduced due to large movement of the joint part. Here, as illustrated in FIG. 24(c), the third member 143 connected to the second fixing unit 120 further moves in the contracted direction. Here, additional movement of the second member 142 is limited in a state in which the first member 141 is completely moved in the contracted direction. Accordingly, the first permanent magnet M1 and the second permanent magnet M2 are separated by external force, and the third member 143 moves in the contraction direction on the second member 142.

Meanwhile, in this embodiment, it is explained as an example that a pair of permanent magnets are used. However, it would also be possible to configure either the first permanent magnet M1 or the second permanent magnet M2 with a magnetic material.

Additionally, a buffer (not shown) may be placed between the first permanent magnet M1 and the second permanent magnet M2. The buffer may be disposed on one side of one permanent magnet or on one side of each permanent magnet. When the third member 143 moves from (c) to (b) in FIG. 24 within the second member 142, the first permanent magnet M1 and the second permanent magnet M2 are coupled. In this case, the buffer may prevent a noise and damage to the permanent magnet.

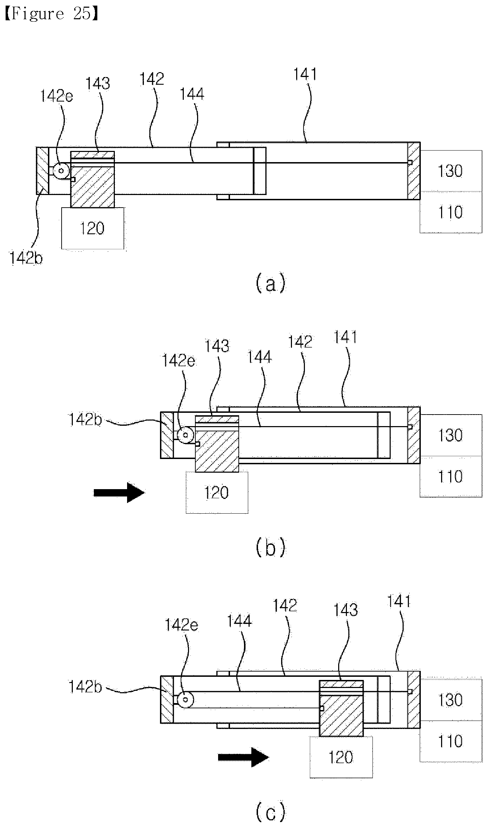

Below, a wearable robot according to the fourth embodiment of the present invention will be described. FIG. 25 is an operational view of the connecting member of the wearable robot according to a fourth embodiment of the present invention.

The connecting member 140 according to the fourth embodiment includes the first member 141, the second member 142, the third member 143, and the elastic member 144. A first pulley 142e capable of supporting the elastic member 144 in a movable state is disposed on the second-2 end cap 142b that closes the extended end of the second member 142. The elastic member 144 is made in the form of an elastic string, and one end may be fixed to the first member 141. The elastic member 144 may be fixed to the third member 143 in a state in which the other end of the elastic member 144 is wound around the first pulley 142e. In this respect, the connecting member 140 according to the fourth embodiment has a structural difference from the above-described embodiment.

Meanwhile, except for the first pulley 142e and the elastic member 144, the remaining configuration is the same as the second embodiment described above. Therefore, detailed description of the same composition is omitted.

In FIG. 25(a), the first member 141, the second member 142, and the third member 143 are each moved in the extended direction. Here, the elastic member 144 is elastically deformed to be in a tensioned state. Also, the second-2 end cap 142b of the second member 142 may be maintained in a state of being elastically pressed toward the third member 143 by the elastic force of the elastic member 144.

Next, FIG. 25(b) illustrates a case in which the distance between the driving unit 130 and the second fixing unit 120 is reduced due to a small movement of the joint part. Here, the third member 143 connected to the second fixing unit 120 moves in the contracted direction. Here, the second member 142 is pressed in the contracted direction by the elastic force of the elastic member 144 on the first member 141. Also, the third member 143 is in a state pressed in an extension direction by an elastic force of the elastic member 144 on the second member 142. Accordingly, the second member 142 moves in the contracted direction on the first member 141 while supporting the third member 143.

FIG. 25(c) illustrates a case in which the distance between the driving unit 130 and the second fixing unit 120 is further reduced due to a large movement of the joint part. Here, Due to the external force in the contracted direction acting on the third member 143 through the second fixing unit 120, the third member 143 moves in the contracted direction on the second member 142.

Here, one end part of the elastic member 144 is fixed to the first member 141. Also, the other end is fixed to the third member 143 while being supported by the first pulley 142e. Accordingly, the third member 143 is elastically stretched by moving in the contracted direction on the second member 142. That is, the second member 142 is elastically supported in the contracted direction by the elastic member 144. Accordingly, the second member 142 may be prevented from arbitrarily moving in the extended direction due to its own weight.

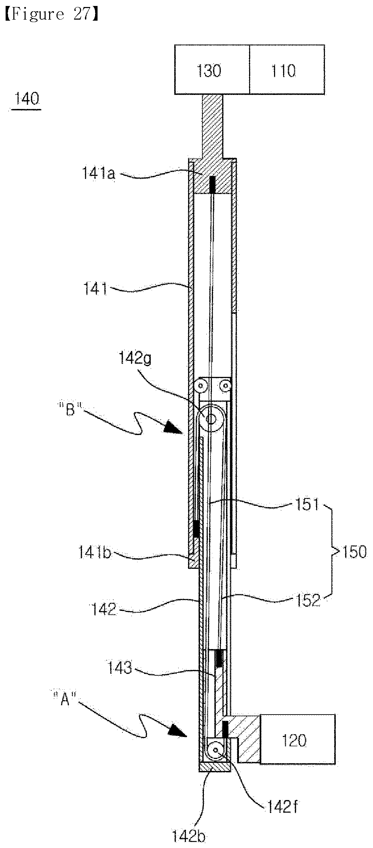

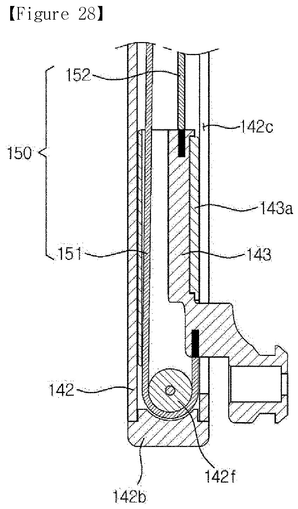

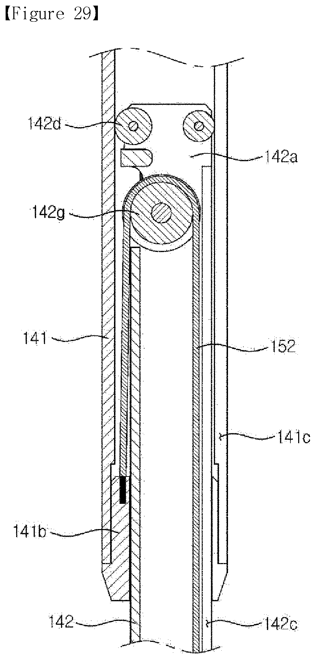

Hereinafter, the operation of the fifth embodiment of the wearable robot according to the present invention will be described. FIG. 18 is a view illustrating a state in which the wearable robot according to an embodiment of the present invention is worn. FIG. 27 is a cross-sectional view of the connecting member in the wearable robot according to an embodiment of the present invention. FIG. 28 is an enlarged view of portion "A" of FIG. 27. FIG. 29 is an enlarged view of portion "B" of FIG. 27. FIGS. 20, 22, 30, and 31 are views illustrating operating states of the wearable robot according to an embodiment of the present invention.

As illustrated in FIG. 18, the first fixing unit 110 is fixed to the waist area disposed above the hip joint. The second fixing unit 120 may be fixed to the thigh disposed below the hip joint. The connecting member 140 may connect the driving unit 130 fixed to the first fixing part 110 and the second fixing part 120.

The connecting member 140 rotates up and down about the y-axis by the driving unit 130. Here, the connecting member 140 may provide supporting force in the direction of lifting or lowering the second fixing part 120 fixed to the thigh. Therefore, it is possible to prevent adduction, abduction, or twisting of the center of rotation of the joint part due to the provision of supporting force. In addition, even when the thigh moves left and right while being moved by a supporting force, the connecting member 140 may rotate in compliance with this. Accordingly, the connecting member 140 may not limit the range of movement of the joint part.

Additionally, the connecting member 140 is configured so that its length may be adjusted in response to the distance between the driving unit 130 and the second fixing unit 120. As the connecting member 140 is configured to expand and contract in multiple stages, it is possible to provide a large stroke while minimizing the length in the contracted state. Therefore, the supporting force may be transmitted from motion with a small range of motion of the joint part, such as walking, to motion with a large range of motion of the joint part, such as sitting or walking up stairs.

As illustrated in FIGS. 27 to 29, one end of the first member 141 of the connecting member 140 is connected to the driving unit 130 provided on the first fixing unit 110. The second member 142 is inserted into the first member 141 and is coupled to the first member 141 in a movable state along the longitudinal direction. The third member 143 connected to the second fixing unit 120 is inserted into the inside of the second member 142 and is movable along the longitudinal direction of the second member 142. The linking unit 150 allows the second member 142 and the third member 143 to interlock with each other. The elastic member 144 provides an elastic force in the contracted direction to the second member 142 while both ends are fixed to the first member 141 and the second member 142. Here, the driving force for rotating about the y-axis by the driving unit 130 may be directly transmitted to the first member 141. This driving force may be transmitted to the second fixing unit 120 connected to the third member 143. Here, the driving force is transmitted to the first member 141 through the second member 142, which is movable along the longitudinal direction. Subsequently, the driving force is transmitted to the second member 142 through the third member 143, which is movable along the longitudinal direction.

Here, one end of the first cable 151 is fixed to the first-1 end cap 141a of the first member 141 and is fixed to the third member 143. The other end of the first cable 151 is fixed to the third member 143 via a second pulley 142f assembled to the second-2 end cap 142b of the second member 142. Here, one end of the second cable 152 is fixed to the 1-2 end cap 141b of the first member 141 and is fixed to the third member 143. The other end of the second cable 152 is fixed to the third member 143 via a third pulley 142g assembled to the second-1 end cap 142a of the second member 142.

That is, as the first cable 151 moves the second pulley 142f in the contracted direction, the second member 142 moves in the contracted direction. As the third member 143 moves in the extended direction, the second cable 152 moves the third pulley 142g in the extended direction. Accordingly, the second member 142 moves in the extended direction.

In addition, the second member 142 may minimize the friction force against the first member 141 as the roller 142d rolls along the inner surface of the first member 141. Rollers 142d are disposed on the upper and lower sides of the contracted end, respectively. The third member 143 may minimize friction force against the second member 142 as the sliding pad 143a slides along the inner surface of the second member 142. The sliding pad 143a is arranged to surround the outer surface.

FIG. 18 illustrates a state in which the user is standing in place while wearing the wearable robot according to an embodiment of the present invention. Here, the distance between the driving unit 130 disposed on the waist area above the hip joint and the second fixing unit 120 fixed to the lower thigh becomes maximum. Accordingly, the third member 143 connected to the second fixing unit 120 moves in the extended direction as illustrated in FIG. 27. Here, the second member 142 is interlocked with the third member 143 through the second cable 152 of the linking unit 150 and moves in the extended direction. Here, the elastic member 144 connecting the first member 141 and the second member 142 is elastically stretched by an external force.

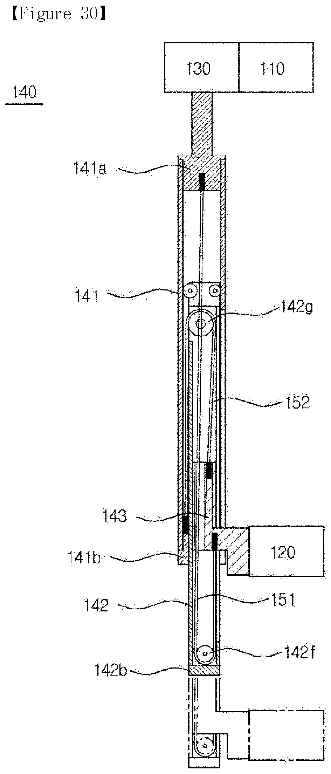

Next, FIGS. 20 and 30 illustrate a state in which the distance between the driving unit 130 and the second fixing unit 120 is changed due to a small range of movement such as a walking motion. The connecting member 140 rotates when driven by the driving unit 130. Here, the connecting member 140 lifts the second fixing part 120 upward. Accordingly, the connecting member 140 may provide the supporting force to the user's walking motion. Here, the connecting position of the driving unit 130 and the connecting member 140 does not coincide with the center of rotation of the joint part. Therefore, in the process of rotating the thigh in the upward direction, the distance between the second fixing unit 120 and the driving unit 130 changes. In response to this change in spacing, the length of the connecting member 140 may be adjusted.

Specifically, when the thigh rotates upward around the hip joint as illustrated in FIG. 20, the distance between the second fixing unit 120 disposed on the thigh and the driving unit 130 disposed on the waist decreases. In this process, an external force is applied to the connecting member 140 connected to the second fixing unit 120 in the contracted direction.

As illustrated in FIG. 30, the third member 143 may move in the contracted direction by an external force. The third member 143 is disposed on the second member 142 to be movable along the longitudinal direction. In this case, the end of the first cable 151 connected to the third member 143 is pulled in the contracted direction. Here, as a force acts on the second pulley 142f in the contracted direction, the second member 142 moves together with the third member 143 in the contracted direction.

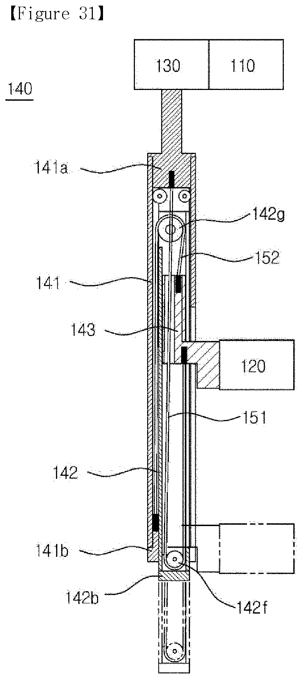

FIGS. 22 and 31 show a state in which the distance between the driving unit 130 and the second fixing unit 120 changes due to a large range of motion such as sitting down or walking up stairs. The connecting member 140 rotates by being driven by the driving unit 130 and lifts the second fixing unit 120 upward. The connecting member 140 may provide supporting force to the user's motions such as sitting down or walking up stairs. The connecting member 140 is composed of multiple stages and has a short length in the contracted state. Since the connecting member 140 may provide a large stroke, it may effectively respond to a large range of motion of the joint part.

Specifically, the third member 143 moves in the direction of contraction by an external force applied through the second fixing unit 120 while the thigh rotates upward around the hip joint. Here, as the end of the first cable 151 is pulled in the contracted direction, a force acts on the second pulley 142f in the contracted direction. Accordingly, the second member 142 moves in the contracted direction together with the third member 143.

The third member 143 moves in a state in which a part of the third member 143 is exposed to the outside through the second slit 142c formed on one surface of the second member 142. Here, a first slit 141c communicating with the second slit 142c is formed on one surface of the first member 141. Therefore, even when the second member 142 overlaps with the first member 141, the third member 143 may move along the second member 142 in the contracted direction.

Additionally, when the second member 142 moves in the contracted direction, further movement in the contracted direction may be restricted as the contracted side end part contacts the first-1 end cap 141a. Here, a movement in the contracted direction of the third member 143 connected to the second member 142 through the first cable 151 and the second cable 152 may also be restricted.

Meanwhile, the second member 142 may be connected to the two-way movement of the third member 143 by the first cable 151 and the second cable 152 connecting the first member 141 and the third member 143. Therefore, it may be prevented from arbitrarily moving in the extended direction due to its own weight while moving in the contracted direction.

As illustrated in FIGS. 20, 22, 30, and 31, by driving the driving unit 130 in the forward direction, the connecting member 140 rotates clockwise around the y-axis and moves the thigh upward. Accordingly, the present invention may provide supporting force to the movement of the joint part by driving the driving unit 130 in the forward direction. In this process, the connecting member 140 may be contracted in response to the distance between the driving unit 130 and the second fixing unit 120.

Conversely, the connecting member 140 rotates counterclockwise around the y-axis by reverse driving of the driving unit 130. The connecting member 140 may move the thigh in a downward direction and provide supporting force to the movement of the joint part. Here, the connecting member 140 may be expanded to correspond to the distance between the driving unit 130 and the second fixing unit 120.

That is, the third member 143 moves in the extended direction by an external force applied through the second fixing unit 120 while the thigh rotates downward around the hip joint. Here, the end of the second cable 152 connected to the third member 143 is pulled in the extended direction. Here, force acts in the extended direction on the third pulley 142g supporting the second cable 152. Accordingly, the second member 142 movably disposed along the first member 141 may move in the extended direction together with the third member 143.

The present invention may move the second member 142 in the contracted direction against the contracted direction movement of the third member 143 through the first cable 151 of the linking unit 150. The second member 142 may be moved in the extended direction in response to the movement of the third member 143 in the extended direction through the second cable 152 of the linking unit 150. In this way, the second member 142 and the third member 143 are moved in conjunction with each other by the linking unit 150. Accordingly, the present invention may provide elastic force to the second member 142 and the third member 143 using one elastic member 144, respectively. Additionally, according to the present invention, some of the plurality of members constituting the connecting member 140 may not be operated arbitrarily.

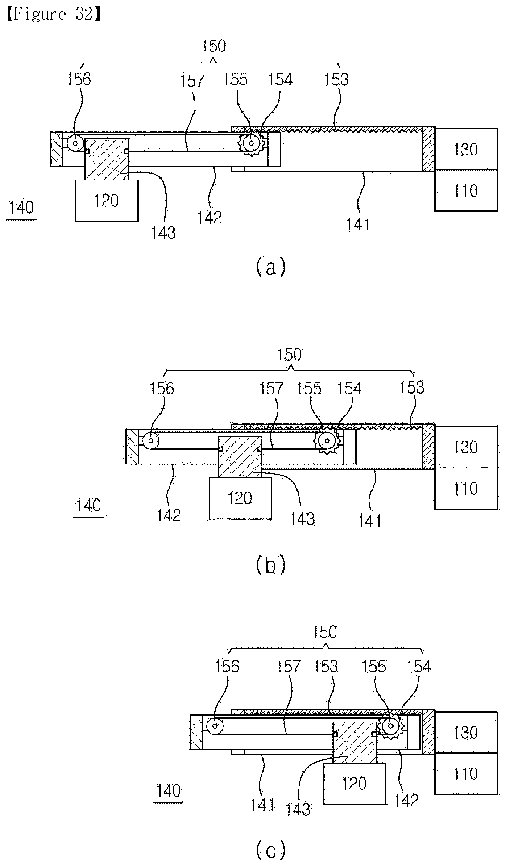

Hereinafter, a wearable robot according to the sixth embodiment of the present invention will be described. FIG. 32 is an operational view of the connecting member according to the sixth embodiment of the present invention. Configurations that are common to the previous embodiment may be omitted from illustration.

As illustrated in FIG. 32, according to the sixth embodiment of the present invention, the connecting member 140 includes a first member 141, a second member 142, a third member 143, a linking unit 150, and an elastic member 144. The sixth embodiment has a structural difference from the fifth embodiment. The linking unit 150 includes a rack 153, a pinion 154, a first pulley 155, a second pulley 156, and a first pulley 155 and a belt 157. The rack 153 is disposed along the longitudinal direction on the inner surface of the first member 141. The pinion 154 is disposed at the contracted end of the second member 142 and engages the rack 153. The first pulley 155 rotates together with the pinion 154. The second pulley 156 is disposed at the extended end of the second member 142. The belt 157 is wound around the second pulley 156. In this state, both ends of the belt 157 are fixed to the third member 143.

Since the rest of the configuration except for the linking unit 150 is the same as the fifth embodiment described above, detailed description of the same configuration will be omitted.

In FIG. 32 (a), the first member 141, the second member 142, and the third member 143 are each moved in the extended direction. Here, the pinion 154 coupled to the contraction-side end of the second member 142 is engaged with the rack 153 provided on the inner surface of the first member 141. The third member 143 is fixed to the belt 157 wound around the first pulley 155 and the second pulley 156 of the second member 142. The first pulley 155 is configured to rotate together with the pinion 154.

As illustrated in FIGS. 32(b) and 32(c), the first pulley 155 and the second pulley 156 each rotate counterclockwise. That is, in the process of moving the third member 143 in the contracted direction by an external force, the first pulley 155 and the second pulley 156 rotate counterclockwise, respectively. The first pulley 155 and the second pulley 156 each rotate counterclockwise by the belt 157 fixed to the third member 143. Here, the pinion 154 supported by the second member 142 and engaged with the rack 153 of the first member 141 rotates counterclockwise together with the first pulley 155. Accordingly, the second member 142 is interlocked and moved in the contracted direction according to the contracted direction movement of the third member 143.

### Waist wearing part

Hereinafter, the detailed configuration of the waist wearing part 110 according to an embodiment of the present invention will be described.

FIG. 2 is a perspective view of the wearable robot equipped with a waist wearing part (first fixing unit) and a thigh wearing part (second fixing unit) according to an embodiment of the present invention. FIG. 33 is a perspective view illustrating a state in which the waist belt 113 and the waist wearing frame 116 are coupled to each other. FIGS. 34 to 36 are views illustrating the process of attaching or detaching the waist wearing part 110 of the wearable robot.

The waist wearing part 110 may include a waist belt 113 and a waist wearing frame 116. Additionally, both ends of the waist belt 113 may be coupled to both ends of the waist wearing frame 116. The length of the waist belt 113 may be adjusted depending on the size of the wearer's waist.

The waist wearing frame 116 may include a lower mechanism portion 117a, an upper mechanism portion 117b, and a detachment button 118. One surface of the main body housing 134 of the driving unit 130 may include a lower hook 134a and an upper hook 134b.

The lower mechanism portion 117a is coupled to the lower hook 134a. The upper mechanism portion 117b is coupled to the upper hook 134b. Accordingly, the waist wearing part 110 and the driving unit 130 may be combined.

When the detachment button 118 is pressed, the upper mechanism portion 117b and the upper hook 134b are separated. Accordingly, the lower mechanism portion 117a and the lower hook 134a may be easily separated. Accordingly, the driving unit 130 and the waist wearing part 110 may be easily attached or detached.

Hereinafter, an operation of the waist wearing part 110 when the driving unit 130 according to an embodiment of the present invention is attached/detached will be described.

The method of wearing a wearable robot includes the step of wearing the wearing part 110 on the wearer's waist. Additionally, the method of wearing a wearable robot includes bringing the driving unit 130 near the waist wearing part 110. As illustrated in FIG. 35, it includes the step of hanging the lower hook 134a inside the main body housing 134 on the lower mechanism portion 117a of the waist wearing frame 116. As illustrated in FIG. 36, it includes the step of tilting the driving unit 130 and hooking the upper hook 134b inside the main body housing 134 to the upper mechanism portion 117b of the waist wearing frame 116.

Here, there is a fastener at the upper mechanism portion 117b, so the upper mechanism portion 117b and the upper hook 134b are automatically fastened. Accordingly, the main body housing 134 and the waist wearing frame 116 are coupled. Accordingly, the driving unit 130 and the waist wearing part 110 are coupled.

The wearable robot detachment method includes the steps of separating the waist wearing part 110 from the wearer's waist. Also, as illustrated in FIG. 36, the wearable robot detachment method includes pressing the detachment button 118 on the waist wearing frame 116 of the waist wearing part 110. As illustrated in FIG. 35, with the lower hook 134a hanging on the lower mechanism portion 117a, it includes the step of tilting the upper end of the driving unit 130 toward the wearer due to the self-weight of the driving unit 130. As illustrated in FIG. 34, it includes the step of slightly lifting the driving unit 130 and moving it forward, thereby separating it from the waist wearing part 110.

In the present invention, the driving unit 130 and the waist wearing part 110 may be separated, thereby reducing the volume of the wearable robot. In addition, it is easy to store each of the separated driving units 130 and the waist wearing part 110. Additionally, the wearing and detaching time of the wearable robot may be shortened by separately wearing the waist wearing part 110 in advance. In addition, the waist wearing part 110 may ensure convenience of use and wearing by making it similar to the shape of a belt.

The waist wearing part 110 may be simplified and configured in various ways, such as being separated from the abdomen or separated from the side. Additionally, by incorporating the configuration of the waist wearing part 110 into clothing, it is possible to improve the wearability of the wearable robot. Additionally, the shape of the hook may be changed so that the upper/lower hooks in the main body housing 134 may be combined with existing pants or belts. Therefore, it is possible to maintain the ease of use and ease of wearing of the wearable robot without a separate waist wearing part 110.

So far, the configuration of the waist wearing part 110 or its fastening part according to a specific embodiment has been mentioned. However, even if some or all of the above-mentioned items are not used, the waist wearing part that is firmly fastened but is freely detachable may be implemented through various methods.

That is, the embodiment of the waist wearing unit 110 described above is not limited to the above-described embodiment and the attached drawings. In addition, it will be clear to those skilled in the art that various substitutions, modifications, and changes may be made without departing from the technical spirit of the embodiment of the present invention.

### Thigh wearing part

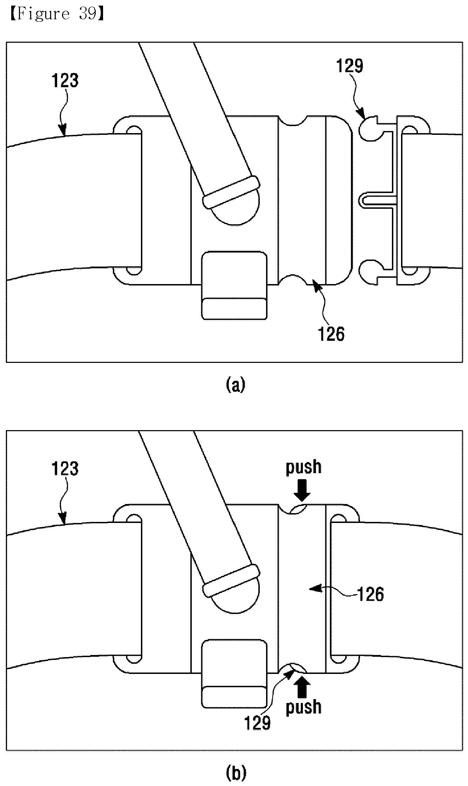

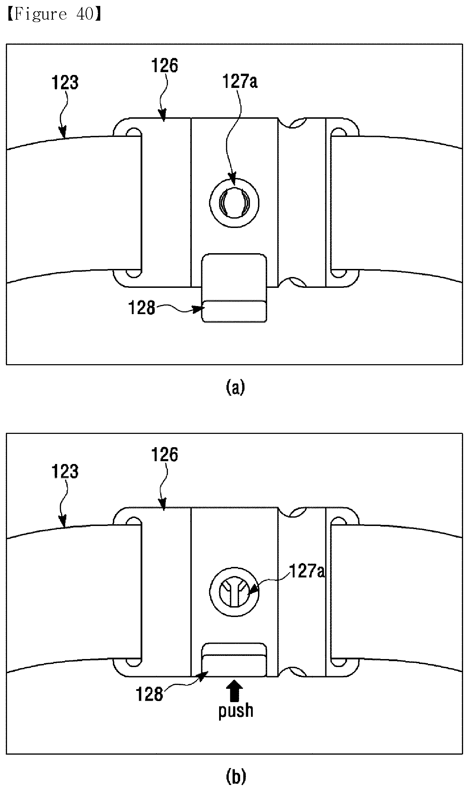

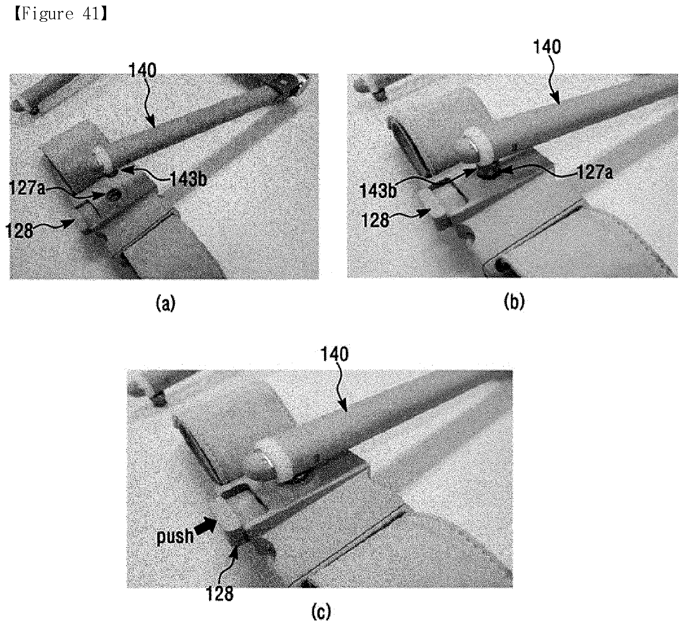

Hereinafter, the detailed configuration of the thigh wearing part 120 will be described. FIG. 37 is a perspective view of the thigh wearing part in the wearable robot according to an embodiment of the present invention. FIG. 38 is an exploded perspective view of the thigh wearing part illustrated in FIG. 37. FIG. 39 is a view illustrating the process of separating/combining the plate and strap part. FIG. 40 is a view illustrating a method of operating a first button in a plate. FIG. 41 is a view illustrating the process of separating/joining the plate and the connecting member.

The thigh wearing part 120 may include a strap part 123 and a plate 126. The strap part 123 may include a second button 129 coupled to one end of the strap part 123. The second button 129 may be configured in the form of a simple buckle or in a form in which a hook-spring element is coupled. Both ends of the strap part 123 may be coupled to both ends of the plate 126. The length of the strap part 123 may be adjusted depending on the size of the wearer's thigh. Adjustment or separation of the length of the strap part 123 may be performed at both ends in which the strap part 123 and the plate 126 are coupled. In addition, the strap part 123 fixes one of both ends to be coupled, and may adjust or separate the length of the strap part 123 only at the other end. Additionally, the strap part 123 may be formed of a single elastic material or an inelastic material, or a mixture of an elastic material and an inelastic material. The strap part 123 may be made of different elastic materials.

The bonding method between the plate 126 and the strap part 123 includes a step of contacting one end of the plate 126 and the second button 129 as illustrated in FIG. 39(a). Additionally, the coupling method between the plate 126 and the strap part 123 includes the step of pushing the second button 129 in the direction of the plate 126. The bonding method between the plate 126 and the strap part 123 includes the step of catching the groove (not shown) of the second button 129 to the plate 126 as illustrated in FIG. 39(b). Accordingly, the groove (not shown) of the second button 129 is coupled to the plate 126.The separation method between the plate 126 and the strap 123 includes a step of pressing the second button 129 of the strap part 123 as illustrated in FIG. 39(b).

The separation method between the plate 126 and the strap part 123 includes a step of pushing and separating the second button 129 from the plate 126, as illustrated in FIG. 39(a). In this way, the plate 126 and the strap part 123 may be easily separated, so the wearable robot may be easily attached and detached.

As illustrated in FIG. 38, the plate 126 may include a plate frame 127 and a first button 128. The plate frame 127 may include the opening 127a. Additionally, as illustrated in FIG. 15, the third member 143 may include a protrusion portion 143bprotrusion portion 143b.

As illustrated in FIG. 40(a), when the first button 128 is not pressed, the opening 127a is in an open state. Accordingly, the protrusion portion 143bprotrusion portion 143b of the third member 143 may be coupled to the opening 127a. Conversely, when the first button 128 is pressed, the first button 128 may push the protrusion portion 143bprotrusion portion 143b coupled to the opening 127a, as illustrated in FIG. 40(b).

The coupling method between the plate 126 and the connecting member 140 may include a step in which the protrusion portion 143b contacts the opening 127a, as illustrated in FIG. 41(b). In addition, as illustrated in FIG. 41(c), the coupling method includes a step in which the protrusion portion 143b is completely inserted into the opening 127a by applying a predetermined force to the connecting member 140.

The separation method between the plate 126 and the connecting member 140 includes a step of pressing the first button 128 as illustrated in FIG. 41(c). The separation method includes a step in which the protrusion portion 143b protrudes from the opening 127a, as illustrated in FIG. 41(b), so that the connecting member 140 may be easily separated from the plate 126. In this way, the plate 126 and the connecting member 140 may be easily separated, so the wearable robot may be easily attached and detached.

When the plate 126 and the connecting member 140 and the plate 126 and the strap part 123 are combined, a rotation output may be transmitted to the plate 126 and the strap part 123. Here, the rotation output is transmitted through the connecting member 140 and the third member 143. The rotation output is produced by the actuator 131 built into the driving unit 130. Through this, the wearable robot transmits the supporting force or resistance force generated by the driving unit 130 to the thigh of the wearer. Therefore, the wearable robot may lift or lower the wearer's thigh. In other words, the plate 126 and the strap part 123 are the action parts to which the wearer receives the supporting force or the resistance force.

Additionally, one or more degrees of freedom may be provided between the plate 126 and the connecting member 140. For example, the protrusion portion 143b may have a spherical shape. When the protrusion portion 143b is coupled to the opening 127a, the connecting member 140 may be rotated without being removed from the plate 126. In other words, a configuration that functions as a joint part in the form of a pivot or joint between the plate 126 and the connecting member 140 provides a degree of freedom. Meanwhile, the protrusion portion 143b is not necessarily limited to a spherical shape. Additionally, the protrusion portion 143b or other configuration may provide a degree of freedom in other axial directions. In this case, in addition to the rotational freedom of the existing combination, a new degree of freedom is added. Through the above degree of freedom, the wearer may make various motions even while wearing the wearable robot. Also, the wearer may minimize the resistance force when making various motions.

The present invention may separate the wearable robot and the thigh wearing part 120, thereby reducing the volume of the wearable robot. In addition, it is easy to store each of the separated wearable robots and the thigh wearing part 120. In addition, by wearing the thigh wearing part 120 separately in advance, the mounting and dismounting time of wearable robots may be shortened. In addition, by appropriately using inelastic and elastic materials in the strap part 123, it is possible to secure the ease of use and ease of wearing of the wearable robot.

The configuration of present invention is not limited to the above-mentioned embodiments. For example, the configuration of the thigh wearing part 120 may be merged with clothing so that the thigh wearing part 120 may function only with clothing. Therefore, it is possible to maintain convenience of use and ease of wearing of the wearable robot even without a separate thigh wearing unit 120.

In the description of the thigh wearing part 120 according to the present invention, the thigh wearing part 120 may be firmly fastened and freely separated may be implemented through various methods. That is, one embodiment of the thigh wearing part 120 will not be limited to the above-described embodiment and the attached drawings.

## Movement assistance method

Hereinafter, a motion assistance method and system using a state trajectory memory buffer according to an embodiment of the present invention will be described in detail. In the following description, only the parts necessary to understand the motion assistance method and system using the state trajectory memory buffer are explained, and the description of other parts may be omitted so as not to confuse the gist of the present invention.

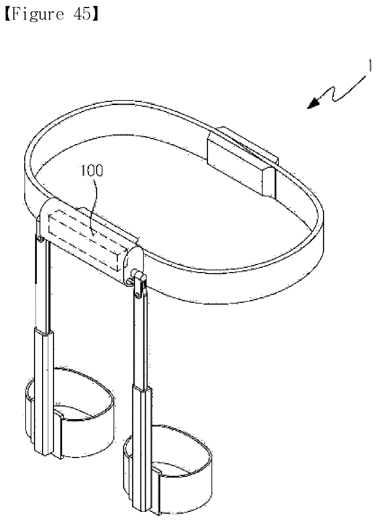

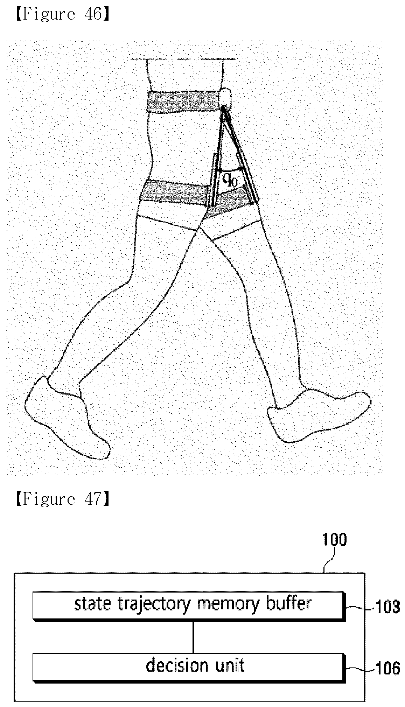

FIG. 45 is a perspective view of an exemplary motion assistance device. An exemplary motion assistance device 1 illustrated in FIG. 45 detects the user's motion and provides supporting force according to the user's motion when worn by the user, as illustrated in FIG. 46. The motion assistance device illustrated in FIG. 45 may correspond to the wearable robot described above.

Here, the supporting force is provided in the direction of the user's motion. Accordingly, supporting force may improve the user's motion ability or assist with insufficient muscular power. Additionally, supporting force may be provided in a direction opposite to the user's motion, thereby doubling the exercise effect. Additionally, when used in combination with a VR device, the motion assistance device may provide an experience of a virtual environment by providing the supporting force in various directions.

The motion assistance device 1 may include a sensor that senses user motion to provide supporting force, a motion assistance system that determines supporting force according to the sensed user motion, and an operation part that provides the determined supporting force to the user.

Hereinafter, the motion assistance system and the motion assistance method according to an embodiment of the present invention that determine supporting force according to sensed user motion will be described in detail.

FIG. 47 shows a configuration view of the motion assistance system 100. As shown in FIG. 47, the motion assistance system 100 according to an embodiment of the present invention may include a state trajectory memory buffer 103 and a decision unit 106.

The state trajectory memory buffer 103 is a storage device that sequentially stores the user's motion state values.

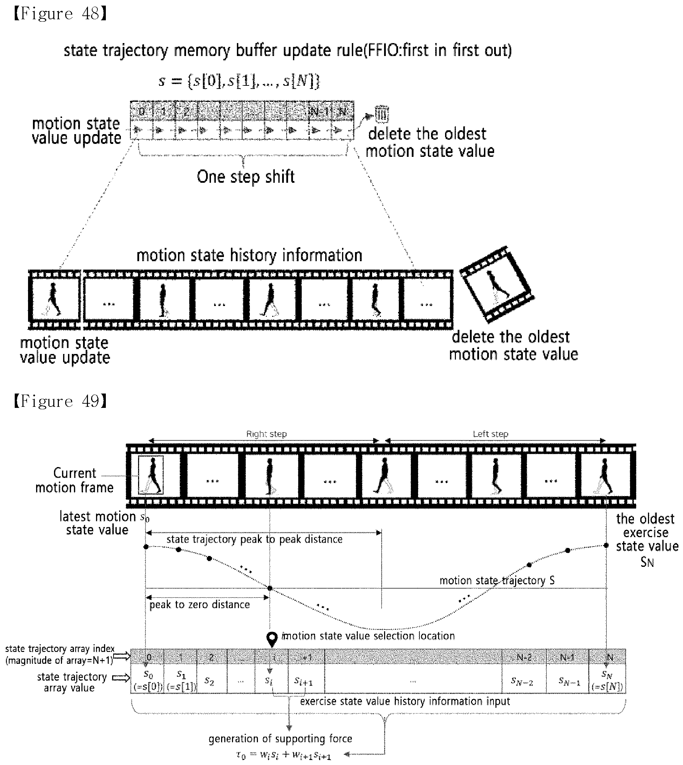

Specifically, as illustrated in FIG. 48, when a first motion state value is input, the first motion state value is stored in a first storage location (0) of a memory array.

Then, when a new motion state value is input, the motion state value stored in the first storage location of the memory array is moved to a second storage location of the memory array. The newly entered motion state value is stored in the first storage location of the memory array.

Then, when a new motion state value is input, the motion state values stored in the first and second storage locations of the memory array are moved to the second and third storage locations of the memory array, respectively. The newly entered motion state value is stored in the first storage location of the memory array.

When the shift operation is repeated, N+1 motion state values are stored in all storage locations of the memory array.

Then, when a new motion state value is input, the motion state value stored in the memory array is moved to the next location, but the motion state value stored in a last storage location (N), which has no place to move anymore, is deleted from the state trajectory memory buffer.

By storing motion state values in this FIFO (First In First Out) method, the state trajectory memory buffer 103 may store only a preset number of motion state values for a user's recent motion.

Additionally, the motion state value stored in the state trajectory memory buffer 103 may be a sensing value measured by a sensor or a conversion value of the sensing value that may show a user's operating state.

For example, an angle value (q0) of the user's hip measured by the sensor of the motion assistance device illustrated in FIG. 46 may be the motion state value.

In addition, a conversion value (S0) obtained by converting the measured hip angle value (q0) into [Equation 1] below may be the motion state value.

$$[\text{Equation 1}]$$
$$S_0 = \text{ASin}\left(\frac{q_0}{2}\right)$$

Here, A is an arbitrary constant value, for example -2.

The above motion state value is a motion state value that reflects the user's motion state according to the user's motion, as illustrated in FIG. 49. The motion state value may be stored in a state trajectory memory buffer.

In addition, a state variable below may be used by adding an asymmetry parameter a to the original state variable as shown in [Equation 2] below.

$$[\text{Equation 2}]$$
$$s_0 = -\sin\left(\frac{q_0}{2}\right) - \sin\left(\frac{q_0}{2} - a\right)$$

Here, if a=0, it means that there is no degree of asymmetry, and the same torque is provided symmetrically to left and right motions. If the value a is negative, the supporting torque is increased for a motion of a left step compared to a motion of a right step. If the value of a is positive, the supporting torque is increased for the motion of the right step compared to the motion of the left step. In other words, asymmetric assistance for the left or right steps may be adjusted with one parameter a. The sign of the a value determines the asymmetry of the left and right steps, and the degree of asymmetry may be adjusted by a magnitude of the a value. For example, when a = 0.20 compared to when a = 0.10, right asymmetric assistance is further strengthened. The a value may be in the range of -1.0 to 1.0, and it is preferable to use a value of -0.5 to 0.5. Using the above method, it becomes possible to generate asymmetric torque even in a walking assistance device using a single actuator.

An asymmetric mode may be used to resolve imbalances in left/right range of motion and improve posture, and used for other purposes depending on the user or purposes. For example, the asymmetric mode may be useful when assisting the motion of a person who walks asymmetrically due to a disease as a stroke. Additionally, when the wearable robot according to an embodiment of the present invention is used to assist a walking motion, the asymmetric mode may be used to assist walking navigation. When going to a complex environment, it will be possible to induce speed reduction by reducing torque strength, direction guidance through asymmetric assistance on curves, and wayfinding assistance function such as increasing speed at straight distances. Additionally, if a vision sensor is used, such as by attaching a smartphone to an exoskeleton device, it could be used for walking for the visually impaired.

FIG. 49 shows that the motion state value for one cycle of walking of the user is stored. However, the motion state value stored in the state trajectory memory buffer 103 may represent the user's motion during the most recent short period of time (within a few seconds, for example, within 1 to 2 seconds). For example, the motion state value stored in the state trajectory memory buffer 103 may include only information on one step of the user (a half-cycle of walking). The present invention may be implemented even if the motion state value stored in the state trajectory memory buffer 103 includes only one step of the user, that is, the half-cycle of walking.

Next, the decision unit 106 is a processing device that determines the supporting force to be provided according to the user's motion.

The decision unit 106 uses the motion state value stored in the state trajectory memory buffer 103 to determine the supporting force.

Specifically, the decision unit 106 selects at least one motion state value among the motion state values stored in the state trajectory memory buffer 103. The decision unit 106 determines the supporting force ($\tau$0) as a weighted sum of the selected motion state values, and outputs the determined supporting force so that an appropriate supporting force is provided to the user.

Here, the decision unit 106 may be set to select the motion state value stored at a predetermined location i in the state trajectory memory buffer 103.

The predetermined location may be any location in the memory array. However, it is preferable not to select the motion state value stored in the first storage location 0 of the memory array that stores the current walking state value. This is to improve stability of the exercise assistance device and provide a smooth supporting force to the user even when the user's motion changes rapidly.

For example, when the motion state value is a value generated every 0.01 seconds, the predetermined position i is preferably between 20 and 40. Therefore, the motion state value S[20] to the motion state value S[40] may be set to be selected. However, the embodiment of the present invention is limited to the range.

Additionally, a noise may be removed using a low-band pass filter before the motion state value is stored in the state trajectory memory buffer 103. However, the decision unit 106 may select two or more motion state values by considering the possibility that noise is included among the stored motion state values. Here, it is preferable that two or more motion state values are continuous motion state values (for example, S[i], S[i+1]) rather than motion state values stored separately in the memory array.

Additionally, the decision unit 106 may adaptively change the predetermined position i for selecting the motion state value according to the user's motion. However, even in this case, it is preferable to set a changeable range (for example, 10 to 50 for i) of the position in which the motion state value is selected in order to provide stable supporting force.

Here, if the decision unit 106 needs to recognize the user's motion speed, cadence, phase, etc. like in the related art in order to determine the user's motion, the decision unit 106 may not respond immediately to changes in the user's motion. This is because it is necessary to analyze the walking state values corresponding to at least two or three steps, and it is not possible to respond immediately to the changes in the user's motion due to the time required for the analysis.

However, the decision unit 106 uses the walking state values stored in the state trajectory memory buffer 103 to determine the user's motion. Also, the decision unit 106 may provide supporting force that immediately and adaptively responds to changes in user's motion by simply changing the position in which the motion state value is selected according to the identified result.

So far, the motion assistance system according to an embodiment of the present invention has been described. The motion assistance system of the present invention may be a motion assistance device itself.

Additionally, the supporting force is explained as being provided in the same direction as the user's motion to assist the motion. However, it may also be provided in an opposite direction to the user's motion for an exercise state value effect.

Hereinafter, a motion assistance method using a state trajectory memory buffer according to an embodiment of the present invention will be described in detail.

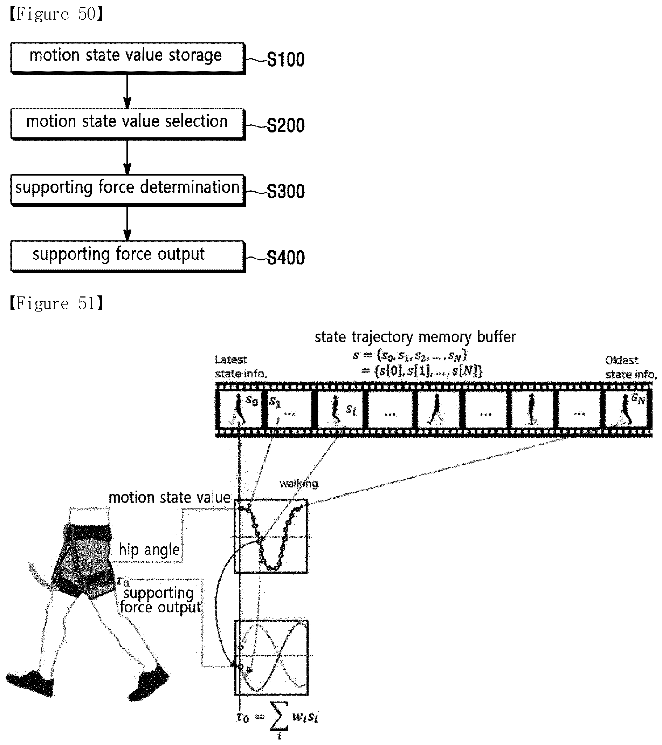

FIG. 50 is a flowchart of a motion assistance method according to an embodiment of the present invention. As shown in FIG. 50, the motion assistance method according to an embodiment of the present invention includes a motion state value storage step S100, a motion state value selection step S200, a supporting force determination step S300, and a supporting force output step S400.

The motion state value storage step S100 is a step in which the motion state value generated by the motion supporting device 1 or the motion state value input to the motion supporting device 1 is stored in the state trajectory memory buffer 103.

The motion state value is a sensing value that measures the user's motion state at regular time intervals (for example, 0.01 seconds) or a conversion value that converts the sensing value using a preset formula.

Therefore, in the motion state value storage step S100, the sensing value is stored as it is in the state trajectory memory buffer 103 or the sensing value is converted using a preset equation and then stored.

Additionally, the motion state value may be stored after removing noise using a low-band pass filter.

A method of storing and updating the motion state value in the state trajectory memory buffer 103 is sequentially stored in an order in which the motion state values are input into the state trajectory memory buffer 103.

Therefore, older motion state values are stored from the first storage location of the memory array to the last storage location. The FIFO (First In First Out) method is used in which the oldest motion state value S[N] is deleted when a new motion state value is input. Accordingly, only a preset number of motion state values for the user's recent motion are stored in the state trajectory memory buffer 103.

Next, the motion state value selection step S200 is a step of selecting at least one motion state value among the motion state values stored in the state trajectory memory buffer 103.

Here, a motion state value stored in a predetermined location of the memory array may be selected. (for example, select S[i], i=30).

As another embodiment of the present invention, two or more motion state values may be selected. Here, continuously stored motion state values may be selected (for example, select S[i], S[i+1], i=30).

Next, the supporting force determination step S300 is a step of determining the supporting force using the selected motion state value.

In the supporting force determination step S300, the supporting force may be determined by the following [Equation 3] as a weighted sum of the motion state values selected in the motion state value selection step S200.

[Equation 3]

$$\tau_0 = \sum_i W_i S_i$$

Here, W is the weighting and S is the motion state value.

Next, the supporting force output step S400 is a step of outputting a supporting force determined in the supporting force determination step S300.

The determined supporting force value may be output as it is. Alternatively, the output may be output in the form of a control signal that allows the driving unit of the motion assistance device 1 to be driven by the determined supporting force.

When using the motion assistance method according to an embodiment of the present invention as described so far, when the user is walking, the determined supporting force according to the walking motion may be provided to the user.

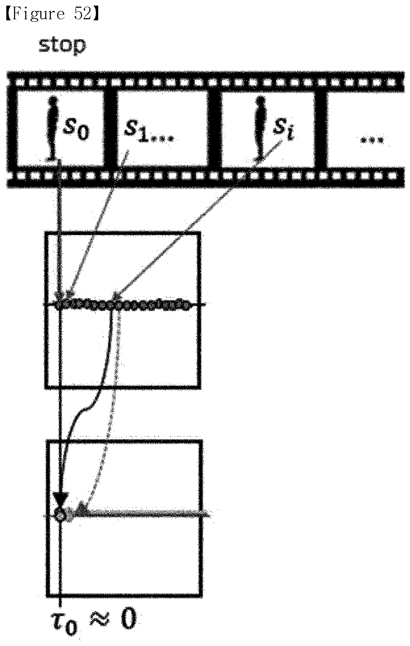

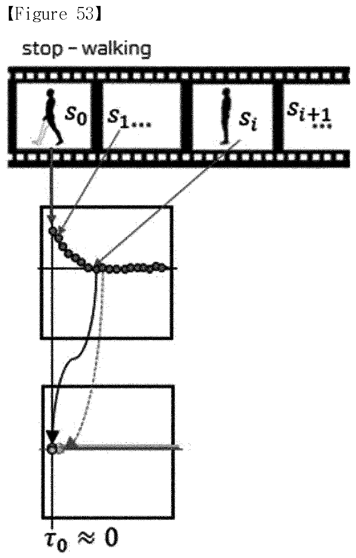

Additionally, as illustrated in FIG. 52, when the user is stationary, the supporting force is 0. As illustrated in FIG. 53, when the user starts walking again, the supporting force in the motion state value stored at the pre-selected location i in the memory array is maintained at 0. Specifically, the motion state value maintains the supporting force at 0 until a very short time ti from the selected position i to the walking state. For example, if the motion state value is generated at 0.01 second intervals, ti = 0.01 x i second. Also, after the short time ti is elapsed, the supporting force according to the walking motion is provided.

The motion assistance method may provide supporting force in response to rapid changes in the user's motion within a very short period of time. Additionally, the user's sudden motion changes are effectively buffered by the state trajectory memory buffer 130. Accordingly, the motion assistance method may not only improve the stability of the device but also provide the user with predictable and smooth interactions.

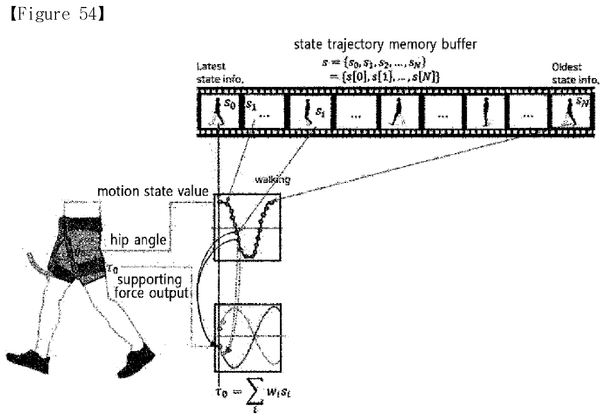

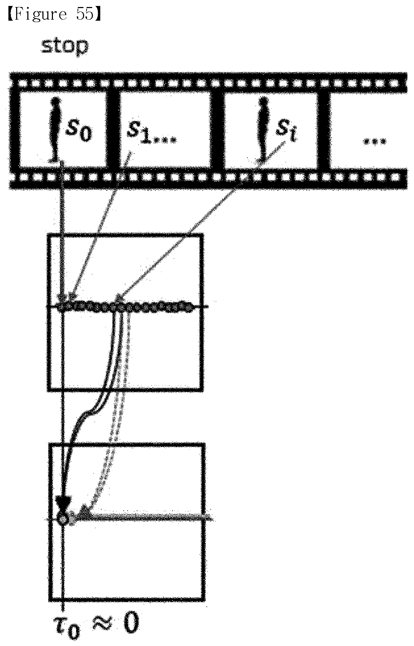

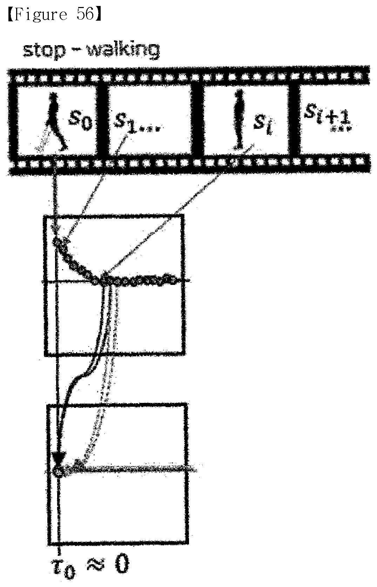

Additionally, when two or more motion state values are selected as illustrated in FIGS. 54 to 56, it may provide safer and smoother supporting force to sensor noise. In addition to this, it may further provide the effect of creating various supporting force profiles.

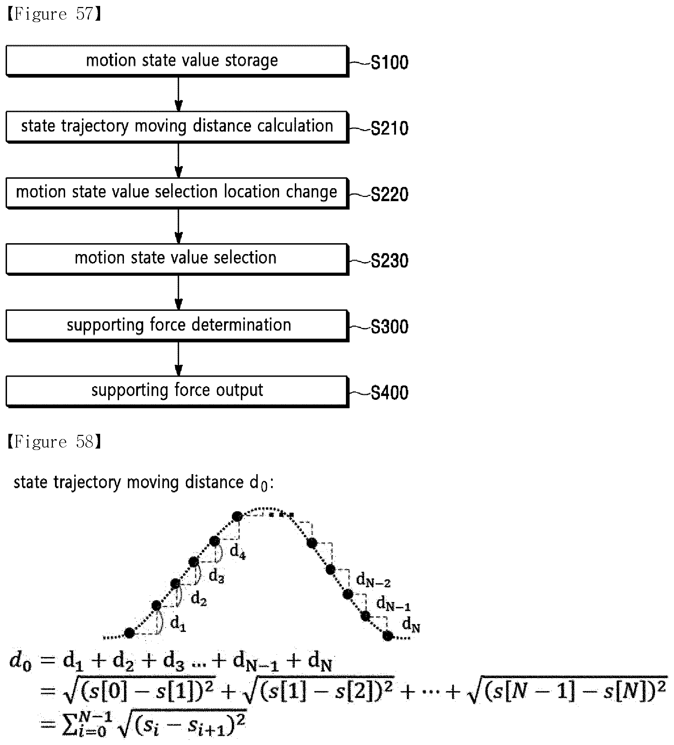

FIG. 57 is a flowchart of a motion assistance method according to an embodiment of the present invention.

As illustrated in FIG. 57, the motion assistance method according to another embodiment of the present invention includes a motion state value storage step S100, a state trajectory movement distance calculation step S210, a motion state value selection position change step S220, and a motion state value selection step S230, a supporting force determination step S300, and a supporting force output step S400.

This method is intended to more adaptively respond to rapid changes in the user's motion than the motion assistance method shown in FIG. 50. Therefore, this method is characterized by being able to change the predetermined position i for selecting the motion state value according to the user's motion state.

As illustrated in FIG. 57, this method further includes a state trajectory movement distance calculation step S210 and a motion state value selection position change step S220 between the motion state value storage step S100 and the motion state value selection step S230.

The state trajectory movement distance calculation step S210 is a step of calculating the state trajectory movement distance using the motion state value stored in the state trajectory memory buffer 130.

As illustrated in FIG. 58, the state trajectory movement distance $d_0$ is calculated by summing differences between the motion state values stored in the state trajectory memory buffer 103.

Since the motion state value is created and stored at regular time intervals, the larger the state trajectory movement distance, the more rapid the user's motion change.

The motion state value selection position changing step S220 is a step of changing the predetermined position i for selecting the motion state value according to the calculation result of the state trajectory movement distance d0.

Specifically, the predetermined position i may be changed proportionally according to the state trajectory movement distance $d_0$

In other words, as the state trajectory movement distance $d_0$ increases, the motion state value selection position changes in the state trajectory memory buffer 130 toward the first storage location 0 of the memory array. Additionally, as the state trajectory movement distance becomes smaller, the motion state value selection position may be changed toward the last storage location N of the memory array. This represents that the more rapidly the user's motion changes, the more recently input motion state value is used to determine the supporting force.

In this way, if the supporting force is determined by adaptively selecting the motion state value according to the change in the user's motion, it is possible to respond to the change in the user's motion more quickly than when the motion state value selection position is fixed.

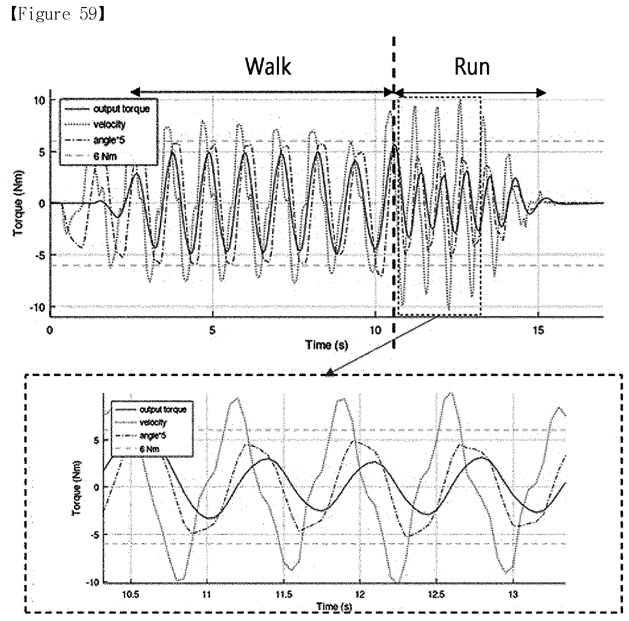

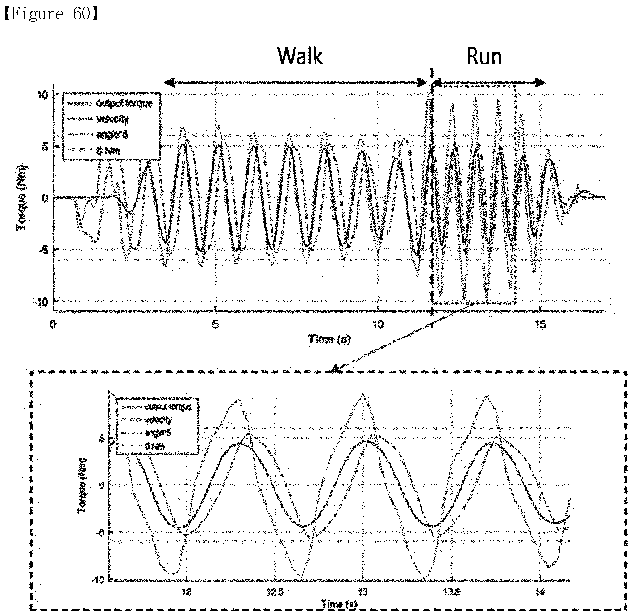

To confirm this, the motion assistance method was executed while running after walking. When the selection position of the motion state value was fixed, a timing delay occurred when the motion changed from walking to running. Accordingly, a supporting force that interferes with running was output (refer to FIG. 59). Conversely, according to another embodiment of the present invention, it was confirmed that when the motion state value selection position was changed, the motion pattern change was responded to more quickly (refer to FIG. 60).

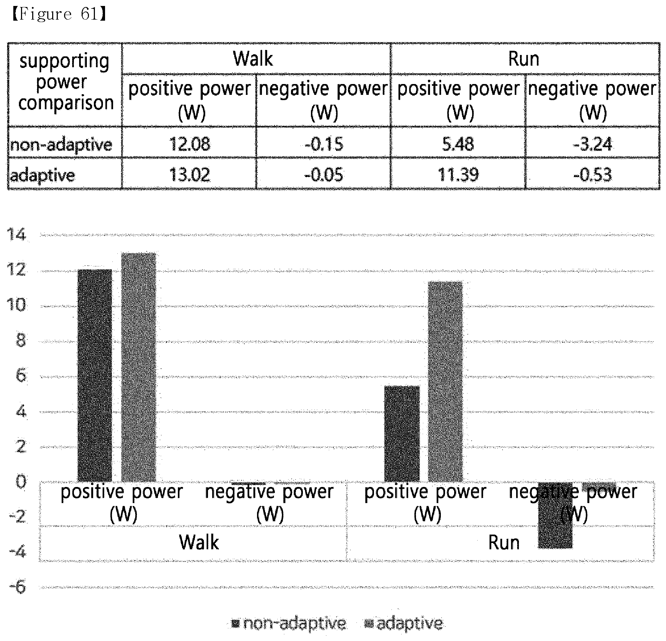

In addition, even without changing the motion state value selection position, a supporting power (positive power) was smoothly generated during walking motion. However, during running, positive power was not generated smoothly due to delay, and a rate of negative power generation, which interfered with motion, increased. Conversely, when adaptive control was performed, it was confirmed that positive power was smoothly generated even while running and the rate of negative power generation was relatively very low (refer to FIG. 61).

The adaptive control according to the state trajectory movement distance may also be applied to a low-band pass filter for filtering the motion state value. In other words, as the state trajectory movement distance d0 becomes smaller, the cutoff frequency is lowered, and adaptive control is performed in which the state trajectory movement distance d0 increases the cutoff frequency. As a result, noise that may be included in the motion state value may be more effectively removed.

In this method, the device changes the supporting force timing in real time according to the user's motion, thereby increasing the supporting force transmission efficiency. Conversely, it is possible to use a method of fixing the motion state value selection position without adaptively determining the supporting force according to changes in user motion. This is because there may be a need to provide supporting force at a certain timing without being linked to changes in the user's motion. For example, in exercise and rehabilitation, it may be used to strengthen specific motion functions by intentionally applying supporting force at a timing that does not match the user's motion. This is because it is possible to induce an increase in stride or an increase in cadence by intentionally delaying or speeding up the supporting timing. It may be possible to induce activation of muscle areas that are difficult to stimulate during normal walking exercises. Alternatively, it may be used for balance training and virtual environment realistic exercise by intentionally changing the timing to deviate from the motion.

As described above, the motion assistance method according to an embodiment of the present invention has been described. The motion assistance method may be implemented in a computer program, digital electronic circuit, firmware, or hardware stored in a medium to execute each step, or in a combination of one or more thereof. The motion assistance method may be stored and executed in the motion assistance system and allow the motion assistance device to provide appropriate supporting force to the changes in user motion.

Method for providing safety mode

Hereinafter, a method for providing a safety mode according to an embodiment of the present invention will be described in detail.

Specifically, in case of abnormal attachment or detachment between the driving unit 130 and the waist wearing part 110 or the connecting member 140 and the thigh wearing part 120, a method for detecting the corresponding situation and responding by the wearable robot device will be described. This is to promote the safety of users of the wearable robot.

The abnormal detachment includes a situation in which the driving unit 130 and the waist wearing part 110 or the connecting member 140 and the thigh wearing part 120 are separated during an operation of the wearable robot even though the user does not intend to do so. Additionally, the abnormal detachment also includes a case in which a user intentionally detaches while driving the wearable robot. Additionally, the abnormal detachment may include combining the driving unit and the wearing part for first use. Additionally, the abnormal attachment and detachment include cases due to the user's carelessness, such as wearing the device while the device is switched to an operating mode. Additionally, the abnormal detachment may include other situations that may pose a risk to the user. For example, if the device is not fully connected, it provides safety to the user by entering the safety mode based on an inclination of the device.

This abnormal detachment may occur due to deterioration of a fastening part between the driving unit 130 and the waist wearing part 110 or between the connecting member 140 and the thigh wearing part 120. Also, this may occur due to excessive generation of supporting force in the driving unit 130 or interference between the wearing parts 110 and 120 during walking while wearing the wearable robot. Also, this may occur due to incomplete coupling between the driving unit 130 and the waist wearing part 110 or between the connecting member 140 and the thigh wearing part 120.

The wearable robots perform force control of driving unit 130 including a motor to generate supporting force. Since a control goal of the wearable robot is force rather than position or speed, the unintentional attachment or detachment of the wearable robot may result in excessive position or speed changes during a control process. If the fastening part is separated during the force control process, the target supporting force is not measured, and thus an output of the driving unit 130 reaches a maximum value thereof in a very short period of time. Due to the output, the separated driving unit 130 and the connecting member 140 move greatly without restraint, which may cause inappropriate injury to the user's body. For example, if unintentional detachment occurs at the connecting member 140 and the thigh wearing part 120, the strap part on the thigh may move like a whip.

Additionally, if the wearable robot is detached while in use, the wearable robot may enter the safety mode when the wearable robot is turned on. In addition, if the driving unit 130 and the waist wearing part 110 or the connecting member 140 and the thigh wearing part 120 are abnormally mounted before using the wearable robot, the wearable robot may enter the safety mode at the time when the wearable robot is powered on. The abnormal attachment refers to a state in which one or more fastening parts between the wearing parts 110 and 120 and other components are separated or incompletely coupled.

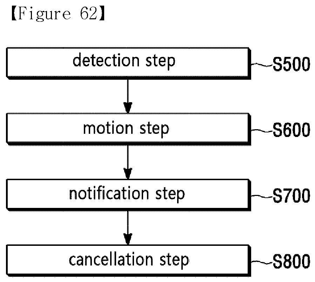

The method of providing the safety mode in the above situation may be divided into a detection step S500, a motion step S600, a notification step S700, and a cancellation step S800, as illustrated in FIG. 62.

First, in the detection step S500, the motion angle output from the driving unit 130 is detected. If the detected motion angle exceeds a maximum operating angle, the wearable robot may be switched to the safety mode. The motion angle may be measured as a user's hip angle value q0 measured by the sensor of the wearable robot illustrated in FIG. 46.

The maximum operating angle refers to a maximum angle between the two connecting members 140 with respect to the driving unit 130 while the user is wearing the wearable robot. The maximum operating angle may be estimated based on data from a user's daily life. The daily life data may be collected through walking, running, moving stairs, etc., or from other people's general data statistics.

It is preferable that the maximum operating angle be set smaller than the mechanical design limit for the protection of the wearer. That is, the wearable robot according to the present invention may be equipped with a stopper that limits the mechanical operating angle to protect the mechanical structure. Here, in order to protect the user, it is preferable that the maximum operating angle is set below a range of the mechanical operating angle.

As one of the other methods of detection, when the operating speed output from the driving unit 130 is detected and the maximum operating speed is exceeded, the device may be switched to the safety mode. The operating speed may be the linear speed at the end of the connecting member 140 to which the thigh wearing part 120 is connected when the wearable robot is driven. The maximum operating speed may be set based on the user's daily life data. The maximum operating speed may be set by calculating and measuring the operating speed among the maximum output of the driving unit 130. To prevent false detection of the device's safety mode during normal use, the operating angle and operating speed may simultaneously be used as a basis for determining safety mode transition.

In addition, at the time of turning on the power to the wearable robot device, the safety mode may be provided if an abnormal combination of the driving unit 130 and the waist wearing part 110 or the connecting member 140 and the thigh wearing part 120 is detected. The abnormal combination may be detected by measuring an inclination between a straight line perpendicular to the ground at the center of gravity of the main body of the driving unit 130 and one axis of the main body of the driving unit 130. The inclination may be measured using a motion sensor. As a result of measuring the inclination, if the main body of the driving unit 130 is tilted abnormally, the wearable robot enters the safety mode. Whether the main body of the driving unit 130 is abnormally tilted may be estimated based on data from the user's daily life.

As another method of detection, a wired or wireless contact sensor may be embedded in the thigh wearing part 120. If the contact sensor detects a detachment situation, the present invention may enter the safe mode. The contact sensor may be replaced by a short or open sensor that detects the loosening of the thigh strap.

In the motion step S600, when this invention is switched to the safety mode, the circuit may be short-circuited to block the supply of power to the motor, and the rotation of the driving unit 130 may be stopped by the braking force of the motor itself. As a method of providing the safety mode, when the wearable robot is switched to a position or a speed control mode, rotation of the motor of the driving unit 130 may be stopped. The position control mode refers to a method of quickly providing a safe operation to the wearer without causing discomfort to the wearer. The speed control mode refers to a method of quickly providing safe supporting force to the wearer without causing discomfort to the wearer. The position and speed control modes may operate individually or simultaneously.

Meanwhile, a stopping phenomenon of the device due to the driving unit 130 of which rotation is fixed may cause additional injury to the user. Therefore, braking may be stopped so that the driving unit 130 may move freely after a certain period of time when rotation has stopped. It is appropriate that the certain period of time is set at a level at which the driving unit 130 sufficiently stops or the inertial force of the thigh strap part is released. It is preferable that the certain period of time is set as short as 1 to 2 seconds.

Before using the wearable robot, if the safety mode is entered in an abnormal combination state between the driving unit 130 and the waist wearing part 110 or between the connecting member 140 and the thigh wearing part 120, it is possible to maintain a state that does not provide supporting force. This is because the wearable robot was not providing the supporting force.

In the notification step S700, when the mode is switched to the safety mode, the wearable robot may notify the user of the safety mode by vibration, sound, or light. The method of notification is not limited to the examples mentioned above. One or more units may be used to notify the user that the user is in the safety mode. Additionally, the user may arbitrarily set matters such as notification method or intensity. It is also possible to omit this step.

In the cancellation step S800, the wearable robot may be switched to the safety mode and automatically switched to a standby mode after a certain period of time. Alternatively, the safety mode may be canceled by clearly notifying the device that the user has recognized the wearable robot entering the safety mode. Accordingly, normal use of the wearable robot may become possible. The safety mode may be canceled by pressing a button on the wearable robot or operating the wearable robot remotely. Additionally, the method of safety mode cancellation is not necessarily limited to the above-described method.

As described above, the motion assistance method and system using the state trajectory memory buffer according to an embodiment of the present invention has been limitedly described with reference to specific embodiments. However, it should be understood that the present invention is not limited to these specific embodiments, and that various changes and modifications may be made without departing from the spirit and scope of the invention as claimed in the claims.

Charging method

Hereinafter, a charging method for the wearable robot according to an embodiment of the present invention will be described.

Conventional wearable walking assistance devices have been developed with a focus only on a function of simply assisting the user's walking. Therefore, there was a problem that the range of users was very narrow as the product was limited to existing limited purposes such as walking assistance, treatment, and rehabilitation. However, as the scope of use of wearable robots is expanding, there is a need to develop the wearable robots that may implement various functions beyond walking assistance. In addition, since the wearable robot is worn by the user, the wearable robots need to be as lightweight as possible. However, a battery for driving the wearable robot is an essential component. Accordingly, there is a problem that increasing the capacity of the battery involves an increase in volume and weight.

In order to solve this problem, the present invention proposes a method of operating in an assist mode and an exercise mode. Additionally, the present invention proposes the wearable robot that may self-charge the electrical energy during the exercise mode.

The present invention may operate in the assist mode and exercise mode. The assist mode is a mode that assists the user's motion by providing supporting force. The exercise mode is a mode that induces the user to exercise by providing resistance force.

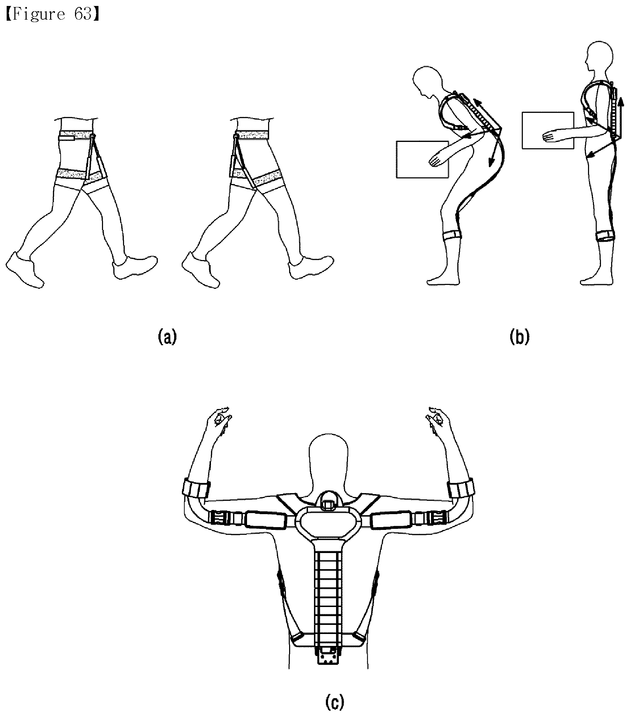

As illustrated in FIG. 63, the supporting force provided to the user in the supporting mode and the resistance force provided to the user in the exercise mode may be provided to various parts of the user's body depending on the structure and operation method of the wearable robot.

FIG. 63 shows various types of wearable robots to which the driving mode according to the present invention is applicable. As illustrated in FIG. 63(a), the present invention may operate in a supporting mode to assist walking and an exercise mode to induce lower body exercise. In this case, the supporting force provided in the supporting mode and the resistance force provided in the exercise mode may be applied to the user's lower body.

Additionally, as illustrated in FIG. 63(b), the present invention may operate in the supporting mode that provides supporting force to the waist muscles and an exercise mode that induces waist exercise. In this case, the supporting force provided in the supporting mode and the resistance force provided in the exercise mode may be applied to the user's waist.

In addition, as illustrated in FIG. 63(c), the present invention may operate in the supporting mode that provides supporting force to the upper body (shoulders, back) or arms and the exercise mode that induces upper body exercise or arm exercise. In this case, the supporting force provided in the supporting mode and the resistance force provided in the exercise mode may be applied to the user's upper body.

In this way, the supporting force provided to the user in the supporting mode and the resistance force provided to the user in the exercise mode may be provided to various positions on the body depending on the structure and operation method of the wearable robot. However, for convenience of explanation and understanding, descriptions below assume that the device operates in the supporting mode that assists walking and the exercise mode that induces lower body exercise.

In the wearable robot according to the present invention, the first fixing unit is fixed to the user's waist area disposed above the hip joint. In the present invention, the second fixing unit is fixed to the thigh disposed below the user's hip joint. In the present invention, a driving unit (including a motor) provided on the first fixing unit and a second fixing unit are connected to each other by a connecting member.

In the walking supporting mode, the connecting member rotates due to the driving of the driving unit (rotation of the motor) and provides the supporting force to the movement of the user's thigh centered on the hip joint.

On the other hand, in the exercise mode, the resistance force that impedes the user's motion is transmitted to the user's lower body through the connecting member. Accordingly, the user may achieve exercise effectiveness by performing a motion that counteracts the resistance force.

Here, the resistance force provided to the user in the exercise mode may be generated by adjusting the rotational torque of the driving unit (motor). However, the resistance force may be generated by the backdrivability of the motor.

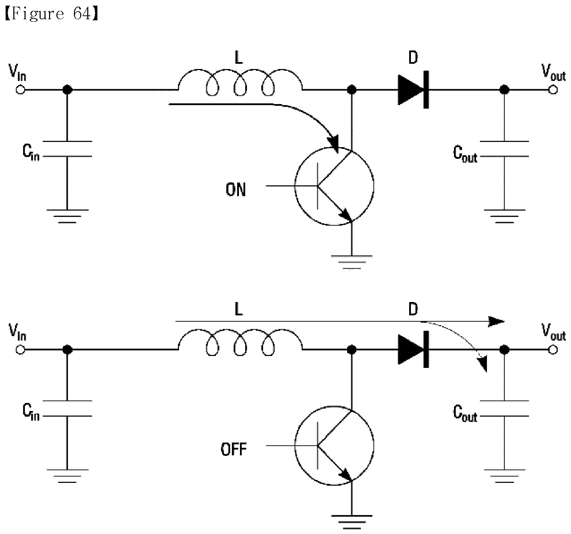

To help understand the charging method of the wearable robot according to the present invention, a step-up converter (Boost Converter) will first be described. FIG. 64 shows the circuit of a step-up converter, and flows of current according to the on/off switch are indicated by arrows. The step-up converter is a circuit to obtain an output voltage higher than an input voltage. The battery may be charged only when a higher voltage is applied, and the charging current is determined by a difference between the battery voltage and the applied voltage and a magnitude of internal resistance. The present invention charges the battery by generating a voltage higher than the voltage of the battery using the principle of the step-up converter.

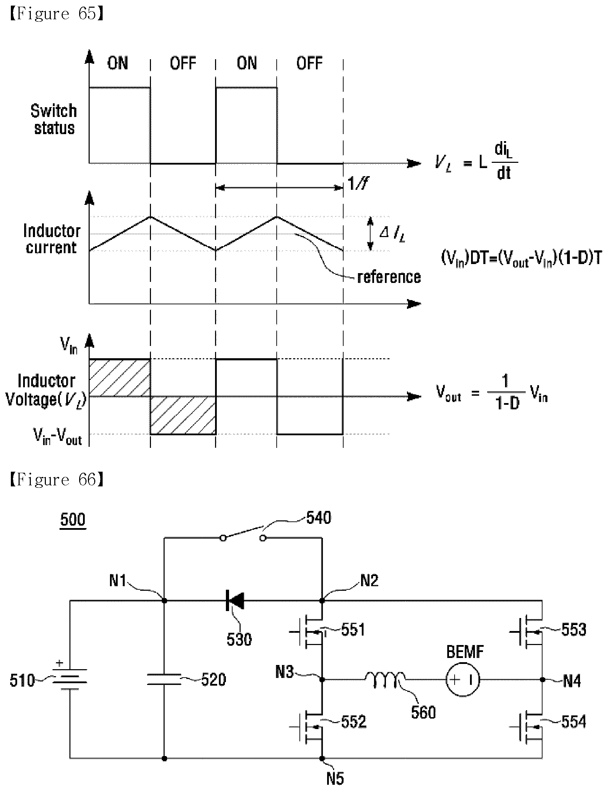

FIG. 65 is a graph showing inductor current and voltage according to switch on and off of the step-up converter.

The inductor voltage VL may be expressed as [Equation 4] below. IL is the current flowing in the inductor, and L is the inductance.

$$[\text{Equation 4}]$$
$$V_L = L\frac{di_L}{dt}$$

Here, the output voltage $V_{out}$ may be expressed as [Equation 5] below. D refers to the duty ratio, which is the ratio of the section in which the switch is turned on and the inductor is charged with the electrical energy within one cycle f. T means time, and $V_{in}$ means input voltage.

$$[\text{Equation 5}]$$
$$(V_{in})DT = (V_{out} - V_{in})(1 - D)T$$
$$V_{out} = \{1\}over\{1 - D\}V_{in}$$

Based on [Equation 5], it may be seen that the output voltage $V_{out}$ increases as the duty ratio increases, that is, as the output voltage approaches 1, and as the duty ratio decreases, the output voltage becomes similar to the input voltage $V_{in}$.

The present invention focuses on the principle of this step-up converter and presents an optimal charging circuit applicable to the wearable robots. In order to increase the high voltage conversion rate of the step-up converter, it is necessary to increase the charging time of electric energy to the inductor.

FIG. 66 shows the charging circuit unit 500 of the wearable robot according to the present invention. The wearable robot according to the present invention may operate in any one of the exercise mode and the assist mode, and may include a driving unit for driving it.

One of the exercise mode and assist mode may be selected by the user. In this case, the wearable robot according to the present invention may further include an input unit (not shown) for receiving input of the driving mode from the user. In another embodiment, one of the exercise mode and the assist mode may be automatically selected based on the user's movement pattern and motion pattern.

More specifically, the selection signal of the driving mode is transmitted to the charging circuit unit 500, which will be described later, and the charging circuit unit performs an operation corresponding to the driving mode. The selection signal of the driving mode may be generated in various ways. For example, a selection signal of the driving mode may be generated by manipulating a selection switch of the driving mode provided in the wearable robot. That is, when the user operates the selection switch of the driving mode and drives it in the exercise mode, the selection signal of the exercise mode is transmitted to the charging circuit unit 500. The switching unit 540 of the charging circuit unit 500, which will be described later, is controlled to be in an off state in response to the exercise mode. Conversely, when the user operates the selection switch of the driving mode to drive in the assist mode, the selection signal of the assist mode is transmitted to the charging circuit unit 500. The switching unit 540 of the charging circuit unit 500, which will be described later, is switched to the on state in response to the assist mode, and power is supplied from the battery unit 510 to the motor unit 560. The selection switch of the driving mode may be implemented with mechanical units such as a mechanical switch or button, or may be implemented with electronic units such as a touch pad or touch screen.

In another embodiment, the selection signal of the driving mode may be automatically generated based on the user's motion rather than the user's input signal. For example, when the motor unit 560 is rotated by the user's motion and a counter electromotive force greater than a preset threshold is generated accordingly, it is determined that the motor is operating in the exercise mode and the selection signal of the exercise mode may be generated.

As illustrated in FIG. 66, the charging circuit unit 500 includes a battery unit 510, a capacitor 520, a diode 530, a switching unit 540, a motor unit 560, and first to fourth MOSFETs 551 to 554. To help understand the charging circuit unit 500, a description will be made by assuming that a first node N1 is disposed between the battery unit 510 and the switching unit 540. To help understand the charging circuit unit 500, a description will be made by assuming that a second node N2 is disposed between the switching unit 540 and the first MOSFET 551. To help understand the charging circuit unit 500, a description will be made by assuming a third node N3 is disposed between the first MOSFET 551 and the second MOSFET 552. To help understand the charging circuit unit 500, a description will be made by assuming that a fourth node N4 is disposed between the third MOSFET 553 and the fourth MOSFET 554. In other embodiments, a larger number of MOSFETs may be provided. In the following description, it is described that four MOSFETs are required, assuming a boost converter circuit, motor modeling, and a driver circuit for forward and reverse rotation. However, since it may also be applied to three-phase motor inverter circuits such as BLDC (Brushless DC Motor) and PMSM (Permanent Magnet Synchronous Motor), a larger number of MOSFETs (e.g., 6 MOSFETs) may be used.

Meanwhile, here, the description is limited to the switch as a MOSFET. However, this is only for convenience of explanation and understanding. The switches may be implemented with various devices other than MOSFETs, such as BJT (Bipolar Junction Transistor), SiC MOSFET, and IGBT (Insulated Gate Bipolar mode Transistor).

The diode 530, which guides current in one direction, is connected in parallel with the switching unit 540. Accordingly, when the switching unit 540 is in the ON state, the current between the first node N1 and the second node N2 flows only through the switching unit 540. When the switching unit 540 is in an OFF state, the current between the first node N1 and the second node N2 flows only through the diode 530.

The switching unit 540 may be determined based on a user's input signal (the selection signal of the driving mode) transmitted from an input unit (not shown). In another embodiment, the driving mode may be automatically selected based on the user's motion pattern and movement pattern, and on/off of the switching unit 540 may be determined based on the selected driving mode.

The first to fourth MOSFETs 551 to 554 may be selected from various semiconductor devices such as n-MOSFET, p-MOSFET, and CMOS, but are not limited thereto. The first to fourth MOSFETs 551 to 554 may be any device capable of realizing the switching operation.

The capacitor 520 is connected in parallel with the battery unit 510, and the motor unit 560 is provided between the third node and the fourth node. That is, the first to fourth MOSFETs 551 to 554 form a bridge circuit. Additionally, a motor unit 560 is provided between the third node between the first and second MOSFETs 551 and 552 and the fourth node between the third and fourth MOSFETs 553 and 554. Whether or not current is supplied to the motor unit 560 and the current direction may be controlled by turning on and off the first to fourth MOSFETs 551 to 554.

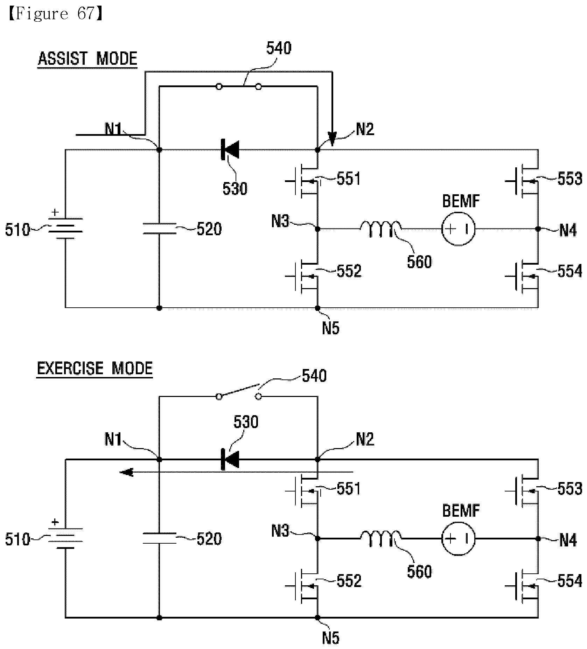

FIG. 67 shows the flow of current in each driving mode. When the wearable robot operates in the assist mode among the driving modes, the switching unit 540 is turned on. The current supplied from the battery unit 510 flows through the switching unit 540. Conversely, when the wearable robot operates in the exercise mode, the switching unit 540 is turned off, and current flows toward the battery unit 510 through the diode 530.

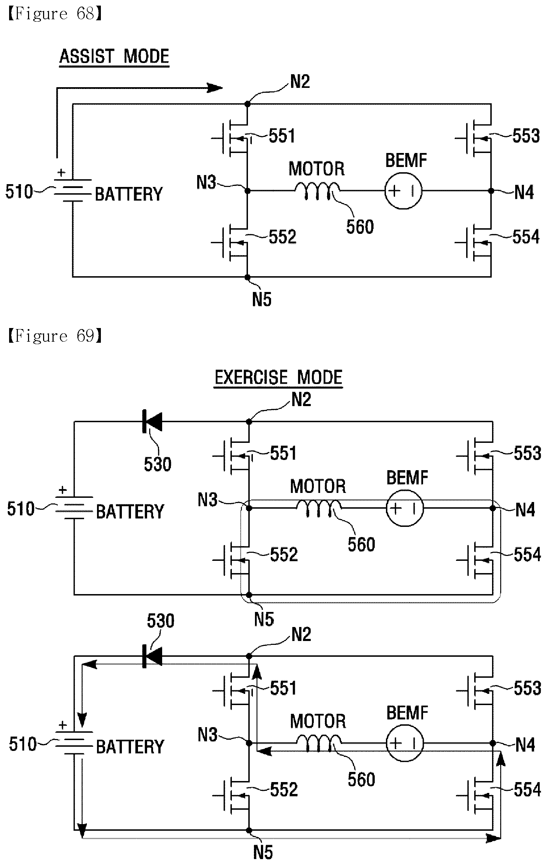

FIG. 68 is a view for explaining the operation of the charging circuit unit when the wearable robot according to the present invention operates in the assist mode. When the wearable robot operates in the assist mode, the switching unit 540 is turned on. That is, when driving in the assist mode, the switching unit 540 is turned on and the battery unit 510 supplies driving power to the motor unit 560. Therefore, in FIG. 68, the first node and the second node are connected.

Specifically, when the wearable robot is driven in the assist mode, the first MOSFET 551 and the fourth MOSFET 554 are in the ON state. Here, the second MOSFET 552 and the third MOSFET 553 are in an OFF state, so that forward current is supplied from the battery unit 510 to the motor unit 560. The motor unit 560 rotates in the first direction by forward current.

On the contrary, when the first MOSFET 551 and the fourth MOSFET 554 are in the OFF state and the second MOSFET 552 and the third MOSFET 553 are in the ON state, the current in the reverse direction is supplied from the motor unit 560 to the battery unit 510. The motor unit 560 rotates in a second direction opposite to the first direction by reverse current. Here, a controller may be separately provided to control the on/off of the first to fourth MOSFETs 551 to 554.

That is, in the assist mode, the first to fourth MOSFETs 551 to 554 may be controlled so that power from the battery unit 510 may be supplied to the motor unit 560. The motor unit 560 may be rotated based on power supplied from the battery unit 510.

FIG. 69 is a view for explaining the operation of the charging circuit unit when the wearable robot according to the present invention operates in the exercise mode. When the wearable robot operates in the exercise mode, the switching unit 540 is controlled to be in an OFF state. Accordingly, FIG. 69 illustrates that a diode 530 is provided between a first node and a second node.

When the wearable robot operates in the exercise mode, the switching unit 540 is in an OFF state. Accordingly, the electrical connection between the diode 530 and the motor unit 560 may be determined based on the on/off status of the first to fourth MOSFETs.

Specifically, the first MOSFET 551 and the third MOSFET 553 are controlled to be in the OFF state, and the second MOSFET 552 and the fourth MOSFET 554 are controlled to be in the ON state. Here, the motor unit 560 rotates due to the user's motion. In addition, the back electro-motive force (BEMF) is generated due to rotation of the motor unit 560, and the electrical energy is stored in the inductor included in the motor unit 560 by the back electro-motive force (BEMF). In other words, when the diode 530 and the motor unit 560 are not electrically connected, the electrical energy may be generated and stored by a rotational movement of the motor unit 560. Here, a magnitude of the counter electromotive force (BEMF) may be determined by the rotation speed of the motor unit 560 according to the user's motion (walking, arm movement, waist movement).

Thereafter, the first MOSFET 551 and the fourth MOSFET 554 are controlled to be in the ON state. Also, when the second MOSFET 552 and the third MOSFET 553 are controlled to be in the OFF state, a larger voltage is generated according to the principle of the step-up converter described in FIG. 64. Accordingly, current flows from the inductor of the motor unit 560 in a direction of the diode 530 and is stored in the capacitor 520, and the battery unit 510 connected in parallel with the capacitor 520 is charged. In other words, there are cases in which the diode 530 and the motor unit 560 are electrically connected. Here, the electrical energy converted (boosted) based on the electrical energy (BEMF) generated in the motor unit 560 is stored in the capacitor 520 through the diode 530. As a result, the battery unit 510 is charged.

Here, the duty ratio is a ratio of the state in which the first and third MOSFETs are turned-off and the second and fourth MOSFETs are turned-on, and the state in which the first and fourth MOSFETs are turned-on and the second and third MOSFETs are turned-off. The duty ratio may be maximized within a range that does not damage the battery, and may be within 90% to 99%.

The mechanical principles will be explained in relation to the structure of the wearable robot according to the present invention. The motor unit 560 is connected to one end of the connecting member 140, and the other end of the connecting member 140 may be fixed to various parts of the user's body, such as the user's legs (thighs), back, shoulders, and arms (wrists). Here, movement (rotation, rotation, etc.) of the connecting member 140 may be performed in conjunction with user's motion such as walking, running, waist bending, shoulder rotation, and arm movement. Here, the motor unit 560 connected to the other end of the connecting member 140 rotates. The rotation of the motor unit 560 generates counter electromotive force. Since a magnitude of the counter electromotive force corresponds to the rotation speed of the motor unit 560, the magnitude of the counter electromotive force may be determined according to the speed of the user's motion. The charging method of the wearable robot according to the present invention may be understood in relation to the structure of the wearable robot, which will be described in detail below.

When electrical energy is stored in an inductor included in the motor unit 560, the first MOSFET 551 and the fourth MOSFET 554 are controlled to be in the ON state. Also, by controlling the second MOSFET 552 and the third MOSFET 553 to be in the OFF state, the battery unit 510 is charged using the electric energy stored in the inductor included in the motor unit 560.

According to the time ratio of electrical energy charging and discharging of the inductor included in the motor unit 560, the size of the output voltage and the charging amount of the battery unit may be determined. Depending on the time ratio, a magnitude of the exercise load provided to the user may be determined.

According to the present invention, it becomes possible to provide a safe load that does not use motor driving. (exercise mode provided). Here, braking resistance force proportional to speed may provide an exercise effect similar to underwater exercise. Additionally, when used as a walking assistance device, it may provide safe muscle strength exercise with a passive exercise load proportional to walking speed.

To explain further, this is an important difference compared to dynamic methods of providing resistance force by motor output. According to the present invention, an unintentional force does not apply in the opposite direction to the motion. Since the resistance force decreases when the user does not move or moves slowly, it is possible to change the motion safely without interfering with the movement. If you want to receive greater resistance force, you may move quickly.

In particular, the usage time of the wearable robot may be significantly increased through the charging function according to the present invention. In addition, the magnitude of the exercise load may also be controlled by adjusting the charging capacity. In other words, the control is possible with relative concepts. If the charging time ratio (duty ratio) of electrical energy is increased to increase the battery charging amount, the resistance force increases in proportion to the user's motion speed. Therefore, the exercise load increases. In order to increase the exercise load, the ratio of time (duty ratio) during which the motor is short-circuited must be increased. Here, a high counter electromotive force is generated, and the input voltage of the boost converter increases. Accordingly, the charging amount increases.

Various exercise programs may be established by using charging capacity setting and exercise load matching according to the present invention. Additionally, the battery charging may be performed using existing motor-based hardware without separate charging hardware.

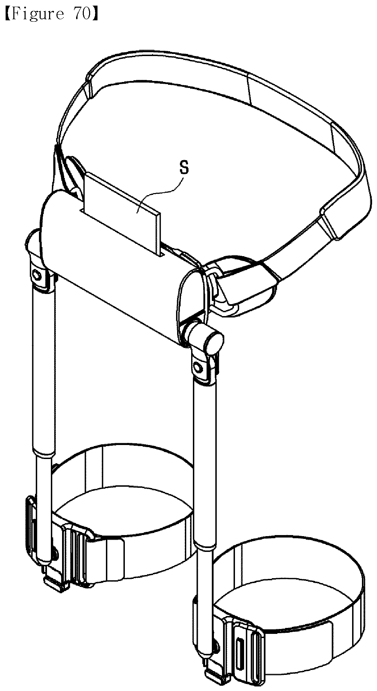

FIG. 70 is a schematic view illustrating a method of charging an external device using electrical energy generated by the wearable robot according to the present invention. Hereinabove, the function of generating and charging a voltage higher than the battery voltage is mainly described. However, a converter (not shown) for appropriately converting the generated electrical energy according to the voltage required by the external device may be further provided. For example, if the charging voltage of the external device is fixed low, a converter (not shown) may convert it to a low voltage and transmit it to the external device.

The present invention may further include a wired terminal unit (not shown) for transmitting the electric energy generated by the charging circuit unit 500 to an external device such as a smartphone by wire. The wired terminal unit (not shown) is electrically connected to the battery unit 510 or the capacitor 520. The other end may be implemented in a form that may connect an appropriate terminal such as C type, 8 pin, or 5 pin.

In addition, the present invention may further include a wireless charging unit (not shown) configured to wirelessly transmit electrical energy to an external device in the charging circuit unit 500. In this case, the wireless charging unit (not shown) may use an inductive or resonant method. The wireless charging unit (not shown) may include a charging coil for interacting with the internal coil of the external device.

Meanwhile, in another embodiment, when the wearable robot is in a low power state, a charging terminal for charging the wearable robot using an external charging device may be further included. The charging terminal is electrically connected to the battery unit 510 to supply power supplied from an external charging device to the battery unit 510 to charge the battery unit 510. Alternatively, the charging terminal may directly transmit the power required to drive the motor unit 560.

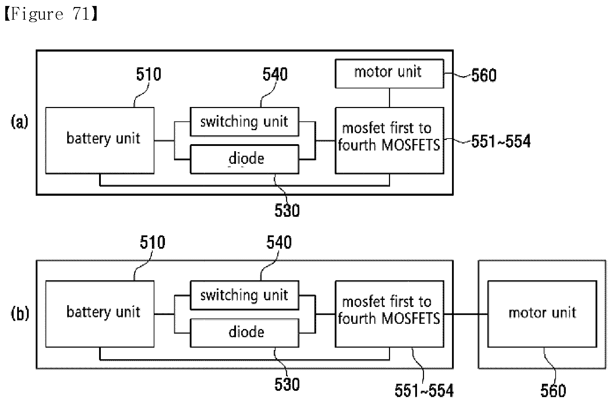

Above, the embodiment in which the wearable robot includes a charging circuit unit was described as illustrated in FIG. 71(a).

Hereinafter, an embodiment in which a charging device and a wearable robot are separately provided as illustrated in FIG. 71(b) will be described. As illustrated in FIG. 71(b), when the charging device and the wearable robot are provided separately, the motor unit 560 is included in the wearable robot, and the charging device may include a charging circuit unit including a battery. By physically and electrically coupling the wearable robot and the charging device, the circuit as illustrated in FIG. 66 is completed, and power supply and charging may be performed.

The wearable robot charging device includes the charging circuit unit 500 that charges electrical energy while operating in the exercise mode, and the charging circuit unit 500 may include the battery unit 510 and the switching unit 540. The switching unit 540 is turned on and off in response to the driving mode of the wearable robot. The battery unit 510 performs charging by receiving electrical energy generated by the motor unit 560 provided in the wearable robot.

Here, a signal reception (not shown) for receiving a selection signal of driving mode for any one of the exercise mode and the assist mode from the wearable robot may be further included. When the charging device operates in the supporting mode based on the selection signal of the driving mode, the battery unit 510 supplies power to the motor unit 560 of the wearable robot. Here, the switching unit 540 of the charging device is controlled to be turned on. Conversely, when operating in the exercise mode, the battery unit 510 is charged from the electrical energy generated by the motor unit 560 of the wearable robot. Here, the switching unit 540 is controlled to be turned off.

Meanwhile, a coupling unit (not shown) may be provided for physical coupling of the wearable robot and the charging device. When the charging device is inserted and mounted inside the wearable robot, the coupling unit of the charging device may include a coupling groove and a fixing part for coupling to the wearable robot. When the charging device is mounted on the outside of the wearable robot in the form of a hook, the coupling unit of the charging device may include a protrusion and a fixing part for mounting on the hook provided on the wearable robot. When coupled using a separate connector such as a bolt or screw, the coupling unit of the charging device may include a through-hole through which a bolt or screw may pass. In this way, the wearable robot and the charging device may be physically coupled in various ways.

The charging device of the wearable robot may further include a connection part (not shown) that makes an electrical connection with the motor unit 560 of the wearable robot. The connection part (not shown) may include wires, pads, connectors, terminals, etc. The motor unit 560 of the wearable robot may be electrically connected to the first to fourth MOSFETs 551 to 554 of the charging device by the connection part (not shown).

The charging circuit unit 500 includes first to fourth MOSFETs 551 to 554. The charging circuit unit 500 includes a first node N1 between the battery unit 510 and the switching unit 540. The charging circuit unit 500 includes a second node N2 between the switching unit 540 and the first MOSFET 551, and a third node N3 between the first MOSFET 551 and the second MOSFET 552. The charging circuit unit 500 includes a fourth node between the third MOSFET 553 and the fourth MOSFET 554. A third node N3 and a fourth node N4 of the charging circuit unit 500 are provided in an open form.

Here, the charging device and the wearable robot are physically coupled by the above-described method, and at the same time, the motor unit 560 of the wearable robot is electrically connected between the third node N3 and the fourth node N4.

By the physical and electrical combination of the charging device and the wearable robot, a circuit structure as illustrated in FIG. 66 is finally generated. Since the operation method from now on is the same as described above, redundant explanation will be omitted.

Meanwhile, the first to fourth MOSFETs N1 to N4 determine the current direction from the battery unit 510 to the motor unit 560 of the wearable robot. Additionally, the charging device may further include the diode 530 connected in parallel with the switching unit 540 and the capacitor 520 connected in parallel with the battery unit 510.

While the wearable robot operates in the exercise mode, the inductor included in the motor unit 560 of the wearable robot stores electrical energy by rotational movement. Also, the battery unit 510 of the charging device is charged based on electrical energy. While the wearable robot operates in the assist mode, the battery unit 510 of the charging device supplies driving power to the motor unit 560 of the wearable robot to apply the supporting force.

The charging circuit unit 500 may be controlled by a controller that overall controls the present invention. That is, the controller may drive the wearable robot in the assist mode or the exercise mode, and at the same time generate a control signal to turn on and off the switching unit 540 and the first to fourth MOSFETs included in the charging circuit unit 500 depending on the driving mode.

According to the present invention, the wearable robot may be operated in the assist mode and the exercise mode. Additionally, when driven in the exercise mode, the wearable robot may generate electrical energy on its own to charge the battery or the external device.

[Explanation of symbols]

1: Motion assistance device or wearable robot
100: Motion assistance system
103: State trajectory memory buffer
106: Decision unit
110: first fixing unit or waist wearing part
113: waist belt
116: waist wearing frame

117a: lower part of mechanism
117b: Top of mechanism
118: Detachment button
120: Second fixing unit or thigh wearing part
123: Strap part
126: plate
127: plate frame
127a: opening
128: first button
129: second button
130: driving unit
131: driver
132: motor shaft
133: Actuator frame
134: Main body housing
134a: bottom hook
134b: top hook
135: Hole
136: Battery
137: control board
138: bearing
139: Bush
140: Connecting member
141: First member
141a: First-1 end cap
141b: First-2 end cap
141c: 1st slit
142: Second member
142a: Second-1 end cap
142b: Second-2 end cap
142c: 2nd slit
142d: roller
142e: first pulley
142f: 2nd pulley
142g: 3rd pulley
143: Third member
143a: Sliding pad
143b: protrusion
144: elastic member
M1: First permanent magnet
M2: Second permanent magnet
145: extension frame
146: fixed frame
147: motion detection sensor
148: wearing part elastic member
150: Linking unit
151: First cable
152: second cable
153: rack
154: pinion
155: first pulley
156: second pulley
157: belt
170: Rotating joint part
500: Charging circuit unit
510: battery
52: capacitor
530: diode

540: switching unit
551 to 554: 1st to 4th MOSFET
560: motor unit
N1 to N5: 1st to 5th nodes

**Claims**

1. A wearable robot comprising:

   a first fixing unit mounted on one body portion of a joint part;
   a second fixing unit mounted on the other body portion of the joint part;
   a driving unit connected to the first fixing unit; and
   a connecting member configured to connect the driving unit and the second fixing unit and transmit driving force provided from the driving unit to the second fixing unit,
   wherein a length of the connecting member is adjusted in accordance with a distance between the driving unit and the second fixing unit.

2. The wearable robot of claim 1,
   wherein the connecting member comprises:

   a first member supported by the driving unit; and
   a second member movably connected to the first member and supported by the second fixing unit.

3. The wearable robot of claim 2,
   wherein the wearable robot further comprises a third member movably connected to the second member and supported by the second fixing unit.

4. The wearable robot of claim 1,
   wherein the connecting member comprises one or more length adjusting units arranged in a row between the driving unit and the second fixing unit.

5. The wearable robot of claim 3,
   wherein the connecting member comprises a permanent magnet configured to fix a position of the third member in a state in which the third member is moved in an extended direction on the second member.

6. The wearable robot of claim 3,
   wherein the connecting member further comprises a linking unit configured to connect a plurality of unit members.

7. The wearable robot of claim 6,
   wherein the linking unit comprises:

   a first cable having one end fixed to the first member and the other end fixed to the third member in a state of being supported by an extended end of the second member; and
a second cable having one end fixed to the first member and the other end fixed to the third member in a state of being supported by a contracted end of the second member.

8. The wearable robot of claim 7,
   wherein a second pulley configured to support the first cable is disposed at the extended end of the second member and a third pulley configured to support the second cable is disposed at the contracted end of the second member.

9. The wearable robot of claim 6,
   wherein the linking unit comprises:

   a rack disposed along a longitudinal direction of the first member;
   a pinion disposed at a contracted end of the second member and engaged with the rack;
   a first pulley rotating together with the pinion;
   a second pulley disposed at an extended end of the second member; and
   a belt wound around the first pulley and the second pulley and having both ends fixed to the third member.

10. The wearable robot of claim 1,

    wherein the first fixing unit comprises a waist belt and a waist wearing frame, the waist wearing frame comprises a lower mechanism portion, an upper mechanism portion, and a detachment button,
    the driving unit comprises a main body housing,
    the main body housing further comprises a lower hook and an upper hook therein, and
    the lower mechanism portion is coupled to the lower hook, and the upper mechanism portion is coupled to the upper hook.

11. A motion assistance method comprising:

    sequentially storing motion state values in a state trajectory memory buffer; selecting at least one motion state value from among the motion state values stored in the state trace memory buffer;
    determining a supporting force using the selected motion state value; and
    outputting the determined supporting force.

12. The motion assistance method of claim 11,
    wherein the storing of the motion state values stores only a preset number of motion state values in the FIFO (First In First Out) method.

**13.** The motion assistance method of claim 11, wherein the determining of the supporting force determines the supporting force by a weighted sum of the selected motion state values.

**14.** The motion assistance method of claim 11, wherein the selecting of the at least one motion state value selects the motion state value stored at a predetermined location among the motion state values stored in the state trajectory memory buffer.

**15.** A wearable robot comprises:

a driving unit configured to drive the wearable robot in one driving mode of an exercise mode and an assist mode; and
a charging circuit unit configured to perform charging while being driven in the exercise mode,
wherein the charging circuit unit comprises:

a battery unit;
a switching unit that is turned on and off in response to the driving mode;
a diode connected in parallel with the switching unit; and
a motor unit configured to generate electrical energy based on rotational movement while driven in the exercise mode.

**16.** The wearable robot of claim 15, wherein when driven in the assist mode, the switching unit is turned on, and the battery unit supplies driving power to the motor unit.

**17.** The wearable robot of claim 15, wherein the charging circuit unit further comprises first to fourth MOSFETs connected to the motor unit.

**18.** The wearable robot of claim 16, wherein when driven in the exercise mode, the switching unit is in an off state, and an electrical connection between the diode and the motor unit is determined depending on the on/off states of the first to fourth MOSFETs.

**19.** The wearable robot of claim 18, wherein when the diode and the motor unit are not electrically connected, the electrical energy is generated by the rotational movement of the motor unit.

**20.** The wearable robot of claim 18, wherein when the diode and the motor unit are electrically connected, electrical energy boosted based on the electrical energy generated in the motor unit is transmitted to the battery unit through the diode.

【Figure 1】

【Figure 2】

【Figure 3】

battery — 110
battery — 130
— 140
120

【Figure 4】

130 — 110
140 —
— 120

【Figure 5】

【Figure 6】

140

(a)                    (b)

【Figure 7】

(a)                    (b)

【Figure 8】

170

140

(a)          (b)

【Figure 9】

driving unit rotary output reaction

assisting
force reaction

assisting
force reaction

driving unit
rotary output

140b

140a

Supporting force

Supporting force

【Figure 10】

(a)

(b)

(c)

【Figure 11】

【Figure 12】

(a)

(b)

【Figure 13】

(a)                                        (b)

【Figure 14】

140

【Figure 15】

【Figure 16】

【Figure 17】

143a

143

143a

【Figure 18】

130    110

140

120

z

x

y

EP 4 464 465 A1

【Figure 19】

50

【Figure 20】

【Figure 21】

【Figure 22】

【Figure 23】

【Figure 24】

(a)

(b)

(c)

【Figure 25】

(a)

(b)

(c)

【Figure 26】

140

143a

143

142d

142a

142g

142d

142c

143a

142

152

141a

142f

142b

141

141c

151

150

152

144

141b

【Figure 27】

【Figure 28】

【Figure 29】

【Figure 30】

【Figure 31】

【Figure 32】

(a)

(b)

(c)

【Figure 33】

【Figure 34】

【Figure 35】

134b

134

134a

【Figure 36】

118

【Figure 37】

【Figure 38】

【Figure 39】

(a)

(b)

【Figure 40】

(a)

(b)

【Figure 41】

(a)

(b)

(c)

【Figure 42】

(a)　　　　　　　　　(b)

【Figure 43】

(a)                    (b)

【Figure 44】

(a)        (b)

【Figure 45】

【Figure 46】

【Figure 47】

【Figure 48】

state trajectory memory buffer update rule(FFIO:first in first out)

$$s = \{s[0], s[1], ..., s[N]\}$$

motion state value update

delete the oldest motion state value

One step shift

motion state history information

motion state value update

delete the oldest motion state value

【Figure 49】

Right step | Left step

Current motion frame

latest motion state value $s_0$

the oldest exercise state value $S_N$

state trajectory peak to peak distance

motion state trajectory S

peak to zero distance

motion state value selection location

state trajectory array index (magnitude of array=N+1)

| 0 | 1 | 2 | ··· | i | i+1 | ··· | N-2 | N-1 | N |

state trajectory array value

| $s_0$ (=s[0]) | $s_1$ (=s[1]) | $s_2$ | ··· | $s_i$ | $s_{i+1}$ | ··· | $s_{N-2}$ | $s_{N-1}$ | $s_N$ (=s[N]) |

exercise state value history information input

generation of supporting force

$$\tau_0 = w_i s_i + w_{i+1} s_{i+1}$$

【Figure 50】

```
┌─────────────────────────────┐
│  motion state value storage │───S100
└─────────────────────────────┘
              │
              ▼
┌─────────────────────────────┐
│ motion state value selection│───S200
└─────────────────────────────┘
              │
              ▼
┌─────────────────────────────┐
│ supporting force determination │───S300
└─────────────────────────────┘
              │
              ▼
┌─────────────────────────────┐
│   supporting force output   │───S400
└─────────────────────────────┘
```

【Figure 51】

state trajectory memory buffer

$$s = \{s_0, s_1, s_2, ..., s_N\}$$
$$= \{s[0], s[1], ..., s[N]\}$$

Latest state info.

Oldest state info.

$s_0$ $s_1$ ... $s_i$ ... $s_N$

motion state value

walking

hip angle

$\tau_0$ supporting force output

$$\tau_0 = \sum_i w_i s_i$$

【Figure 52】

【Figure 53】

stop - walking

$s_0$ $s_1...$ $s_i$ $s_{i+1}...$

$\tau_0 \approx 0$

【Figure 54】

state trajectory memory buffer

Latest state info.

$$s = \{s_0, s_1, s_2, \ldots, s_N\}$$
$$= \{s[0], s[1], \ldots, s[N]\}$$

Oldest state info.

$s_0$   $s_1$   ...   $s_i$   ...   ...   ...   $s_N$

motion state value

walking

hip angle

$\tau_0$

supporting force output

$$\tau_0 = \sum_i w_i s_i$$

【Figure 55】

【Figure 56】

stop - walking

$\tau_0 \approx 0$

[Figure 57]

| motion state value storage | ~S100 |
| state trajectory moving distance calculation | ~S210 |
| motion state value selection location change | ~S220 |
| motion state value selection | ~S230 |
| supporting force determination | ~S300 |
| supporting force output | ~S400 |

[Figure 58]

state trajectory moving distance $d_0$:

$$d_0 = d_1 + d_2 + d_3 \ldots + d_{N-1} + d_N$$
$$= \sqrt{(s[0] - s[1])^2} + \sqrt{(s[1] - s[2])^2} + \cdots + \sqrt{(s[N-1] - s[N])^2}$$
$$= \sum_{i=0}^{N-1} \sqrt{(s_i - s_{i+1})^2}$$

【Figure 59】

【Figure 60】

【Figure 61】

| supporting power comparison | Walk | | Run | |
|---|---|---|---|---|
| | positive power (W) | negative power (W) | positive power (W) | negative power (W) |
| non-adaptive | 12.08 | -0.15 | 5.48 | -3.24 |
| adaptive | 13.02 | -0.05 | 11.39 | -0.53 |

■non-adaptive  ■adaptive

【Figure 62】

| detection step | ～S500 |
| --- | --- |
| motion step | ～S600 |
| notification step | ～S700 |
| cancellation step | ～S800 |

【Figure 63】

(a)

(b)

(c)

【Figure 64】

【Figure 65】

$$V_L = L \frac{di_L}{dt}$$

$$(V_{in})DT = (V_{out} - V_{in})(1-D)T$$

$$V_{out} = \frac{1}{1-D} V_{in}$$

【Figure 66】

【Figure 67】

ASSIST MODE

EXERCISE MODE

【Figure 68】

## ASSIST MODE

【Figure 69】

## EXERCISE MODE

【Figure 70】

【Figure 71】

(a)

510    540    motor unit ⌐560

battery unit — switching unit ⌐551~554
              diode
                          mosfet first to
                          fourth MOSFETS

530

(b)

510    540

battery unit — switching unit
              diode
                          mosfet first to
                          fourth MOSFETS    motor unit

530    551~554    560

## INTERNATIONAL SEARCH REPORT

| International application No. |
| --- |
| **PCT/KR2022/020360** |

### A.   CLASSIFICATION OF SUBJECT MATTER

**B25J 9/00**(2006.01)i; **B25J 19/00**(2006.01)i; **A63B 21/00**(2006.01)i; **A61H 1/02**(2006.01)i; **B25J 9/16**(2006.01)i; **A63B 23/04**(2006.01)i; **A61H 37/00**(2006.01)i

According to International Patent Classification (IPC) or to both national classification and IPC

### B.   FIELDS SEARCHED

Minimum documentation searched (classification system followed by classification symbols)

B25J 9/00(2006.01); A61F 2/62(2006.01); A61H 3/00(2006.01); B62D 57/032(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 웨어러블(wearable), 외골격(exoskeleton), 길이 조절(length adjustment), 수축 (contraction), 슬라이딩(sliding), 슬릿(slit), 탄성부재(elastic member)

### C.   DOCUMENTS CONSIDERED TO BE RELEVANT

| Category* | Citation of document, with indication, where appropriate, of the relevant passages | Relevant to claim No. |
| --- | --- | --- |
| X | KR 10-2020-0071708 A (SAMSUNG ELECTRONICS CO., LTD.) 19 June 2020 (2020-06-19) See paragraphs [0032]-[0048] and [0062], claim 1 and figures 1-3. | 1-2,4,10 |
| A | | 3,5-9 |
| X | KR 10-2014-0121371 A (HEXAR SYSTEMS CO., LTD.) 15 October 2014 (2014-10-15) See paragraphs [0046]-[0080] and figures 1 and 2. | 1-2,4 |
| A | KR 10-2019-0126568 A (NT ROBOT, CO. et al.) 12 November 2019 (2019-11-12) See paragraphs [0019]-[0024] and figures 2 and 3. | 1-10 |
| A | JP 2015-139665 A (UNIV OF TSUKUBA et al.) 03 August 2015 (2015-08-03) See paragraphs [0041] and [0058] and figures 1 and 6. | 1-10 |
| A | CN 113002656 A (BEIJING AI-ROBOTICS TECHNOLOGY CO., LTD.) 22 June 2021 (2021-06-22) See paragraph [0048] and figure 1. | 1-10 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 May 2023** | **02 May 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2">**PCT/KR2022/020360**</td></tr>
</table>

**C.     DOCUMENTS CONSIDERED TO BE RELEVANT**

| Category* | Citation of document, with indication, where appropriate, of the relevant passages | Relevant to claim No. |
|---|---|---|
| PX | 착용형 로봇 디자인. (주)위로보틱스 홈페이지. [online]. 29 July 2022, non-official translation (Wearable Robot Design. Wirobotics Homepage). [Retrieved on 27 April 2023]. Retrieved from the Internet: <URL: http://wirobotics.kr/ CES2023/html/product.html>. See reproduction time of WIM product description video 00:10 - 00:48. ※ This document is a known document declaring exceptions to lack of novelty by the applicant. | 1-2,4,10 |

Form PCT/ISA/210 (second sheet) (July 2022)

| INTERNATIONAL SEARCH REPORT | International application No. |
|---|---|
| | **PCT/KR2022/020360** |

**Box No. III  Observations where unity of invention is lacking (Continuation of item 3 of first sheet)**

This International Searching Authority found multiple inventions in this international application, as follows:

Claims 1-10 pertain to a wearable robot having a connection member with an adjustable length,
Claims 11-14 pertain to an operation assistance method using a state trajectory memory buffer,
Claims 15-20 pertain to a wearable robot that charges during an exercise mode.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims: 1-10**

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/KR2022/020360**

| Patent document cited in search report | | | Publication date (day/month/year) | Patent family member(s) | | | Publication date (day/month/year) |
|---|---|---|---|---|---|---|---|
| KR | 10-2020-0071708 | A | 19 June 2020 | KR | 10-2120960 | B1 | 09 June 2020 |
| | | | | KR | 10-2238595 | B1 | 09 April 2021 |
| | | | | KR | 10-2338704 | B1 | 13 December 2021 |
| | | | | US | 10092474 | B2 | 09 October 2018 |
| | | | | US | 2016-0015589 | A1 | 21 January 2016 |
| KR | 10-2014-0121371 | A | 15 October 2014 | KR | 10-1693795 | B1 | 06 January 2017 |
| KR | 10-2019-0126568 | A | 12 November 2019 | KR | 10-2085527 | B1 | 06 March 2020 |
| JP | 2015-139665 | A | 03 August 2015 | EP | 3103426 | A1 | 14 December 2016 |
| | | | | JP | 6357627 | B2 | 18 July 2018 |
| | | | | US | 2016-0331624 | A1 | 17 November 2016 |
| | | | | WO | 2015-115490 | A1 | 06 August 2015 |
| CN | 113002656 | A | 22 June 2021 | AU | 2020-408469 | A1 | 07 July 2022 |
| | | | | CA | 3162145 | A1 | 24 June 2021 |
| | | | | CN | 113002656 | B | 02 August 2022 |
| | | | | EP | 4079276 | A1 | 26 October 2022 |
| | | | | JP | 2023-506286 | A | 15 February 2023 |
| | | | | KR | 10-2022-0113770 | A | 16 August 2022 |
| | | | | WO | 2021-120515 | A1 | 24 June 2021 |

Form PCT/ISA/210 (patent family annex) (July 2022)

**EP 4 464 465 A1**

**Patent documents cited in the description**

- US 10350129 B
- KR 101517058
- KR 20220053349